# EUROPÄISCHE PATENTSCHRIFT

(11) **EP 3 913 886 B1**
(45) Veröffentlichungstag und Bekanntmachung des Hinweises auf die Patenterteilung: **18.12.2024**
(21) Anmeldenummer: 21173466.0
(22) Anmeldetag: 12.05.2021
(51) Int. Cl.: H04L 9/40, G06F 21/64, H04L 9/32

(54) **AUSSTELLEN DIGITALER DOKUMENTE MIT EINER BLOCKCHAIN**
ISSUE OF DIGITAL DOCUMENTS WITH A BLOCKCHAIN
ÉMISSION DES DOCUMENTS NUMÉRIQUES À UNE CHAINE DE BLOCS

(30) Priorität: 14.05.2020 DE 102020113057
(43) Veröffentlichungstag der Anmeldung: 24.11.2021
(73) Patentinhaber: Bundesdruckerei GmbH, 10969 Berlin (DE)
(72) Erfinder: RÜCKRIEMEN, Jörg, 10999 Berlin (DE)
(74) Vertreter: Richardt Patentanwälte PartG mbB

(56) Entgegenhaltungen:
- EP-A1- 3 319 006
- DE-A1- 102018 115 350

## Beschreibung

Die Erfindung betrifft ein Verfahren zum Ausstellen eines digitalen Dokuments in einer Blockchain, ein Ausstellercomputersystem, einen Signaturserver sowie ein System zur Ausführung des Verfahrens. Ferner betrifft die Erfindung ein Verfahren zum Verifizieren des ausgestellten Dokuments.

Dokumente, wie beispielsweise Zeugnisse, umfassen meist einen Dokumentenkörper, beispielsweise aus Papier, auf welchem sie ausgestellt werden und können mit modernen Bildbearbeitungsprogrammen und Farbdruckern leicht gefälscht werden. Insbesondere stellt sich die Problematik fehlender Fälschungssicherheit, wenn zusätzlich zu einem Original des Dokuments weitere Ausfertigungen wie etwa Abschriften, Zweitschriften und Kopien benötigt werden.

Deren Authentizität wird üblicherweise durch eine Beglaubigung belegt. Bei einer amtlichen Beglaubigung handelt es sich um eine amtliche Bescheinigung der Richtigkeit einer Abschrift, Zweitschrift, Kopie oder dergleichen eines Dokuments. Eine Beglaubigung beruht im Allgemeinen lediglich auf einer kurzen Sichtprüfung und ist bereits aus diesem Grund unsicher. Hinzu kommt, dass eine Beglaubigung bereits ordnungsgemäß ist, wenn der Beglaubigungsvermerk mit einem Dienstsiegel, etwa als Stempelabdruck, versehen ist und ein Beglaubigungsvermerk vom Beglaubigenden unterschrieben wurde. Ein Beglaubigungsvermerk umfasst dabei die Feststellung, dass die beglaubigte Abschrift/Kopie mit einem vorgelegten Originaldokument übereinstimmt. Zudem kann der Beglaubigungsvermerk eine genaue Bezeichnung des Originaldokuments, dessen Abschrift/Kopie beglaubigt wird, umfassen. Eine solche Beglaubigung lässt sich mit modernen Bildbearbeitungsprogrammen ebenfalls leicht fälschen.

Ein Aufbringen von Sicherheitsmerkmalen auf Dokumentenkörpern, beispielsweise aus Papier, ist im Allgemeinen logistisch ineffizient. Blankobögen mit den entsprechenden Sicherheitsmerkmalen, wie sie beispielsweise für Ausweisdokumente oder Geldscheine verwendet werden, müssen physisch verteilt und gegen Missbrauch bzw. Diebstahl geschützt werden. Zudem wachsen die Kosten für die Implementierung der Sicherheitsmerkmale linear mit der Anzahl der Zeugnisse. Dabei beruht ein Grundprinzip der verwendeten Sicherheitsmerkmale darauf, dass Sicherheit dadurch erreicht wird, dass eine 1:1-Kopie der Sicherheitsmerkmale zu kostspielig und damit wirtschaftlich uninteressant ist.

Die vorgenannten Probleme stellen sich erst recht im Falle von digitalen Dokumenten, auf welche sich die entsprechenden klassischen Sicherheitskonzepte im Allgemeinen nicht anwenden lassen und/oder unzureichend bzw. nachteilig sind.

Die DE 10 2018 115 350 A1 beschreibt ein Verfahren zum manipulationssicheren Ausstellen und Speichern einer Mehrzahl von elektronischen Urkunden unter Verwendung einer Blockchain. Das Verfahren umfasst ein Empfangen eines Datensatzes zum Eintragen durch einen Blockchain-Server eines Blockchain-Netzwerks, wobei der Datensatz Daten einer auszustellenden elektronischen Urkunde entsprechend einer Spezifikation einer hoheitlichen Institution umfasst, und ein Ausführen von Programminstruktionen eines Programmmoduls der Blockchain, wobei das Programmmodul zum Ausstellen von elektronischen Urkunde entsprechend der Spezifikation konfiguriert ist. Das Ausführen der Programminstruktionen umfasst ein Prüfen des Datensatzes, ob der Datensatz die Spezifikation erfüllt. Falls der Datensatz die Spezifikation erfüllt, wird der Datensatz zu einem zusätzlichen Block der Blockchain hinzugefügt.

Die EP 3 319 006 A1 beschreibt ein Verfahren zur Offline-Echtheitsprüfung eines virtuellen Dokuments mittels eines ersten und eines zweiten elektronischen Geräts. Das erste elektronische Gerät umfasst ein virtuelles Dokument und eine Speicher-ID. Das zweite elektronische Gerät umfasst eine kryptographisch gesicherte Datenbank mit Hashwerten einer Mehrzahl von virtuellen Dokumenten. Die Speicher-ID identifiziert einen Eintrag der Datenbank mit dem Hashwert des virtuellen Dokuments. Das Verfahren umfasst ein Übertragen des virtuellen Dokuments zusammen mit einer Speicher-ID an das zweite elektronische Gerät, ein Berechnen eines Hashwerts des virtuellen Dokuments durch das zweite elektronische Gerät, ein Identifizieren des Datenbankeintrags mit dem Hashwert des virtuellen Dokuments unter Verwendung der Speicher-ID des virtuellen Dokuments und ein Vergleichen des berechneten Hashwerts mit dem in dem identifizierten Datenbankeintrag gespeicherten Hashwert des virtuellen Dokuments, wobei die Echtheit des virtuellen Dokuments bestätigt wird, falls beide Hashwerte übereinstimmen.

Der Erfindung liegt demgegenüber die Aufgabe zugrunde, ein effizientes und sicheres Verfahren zum Ausstellen und Sichern eines digitalen Dokuments zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Ausstellen eines digitalen Dokuments unter Verwendung eines Ausstellercomputersystems eines Ausstellers des digitalen Dokuments und eines zentralen oder dezentralen Signaturservers eines Signierers des digitalen Dokuments. Das Ausstellercomputersystem umfasst eine Kommunikationsschnittstelle zur Kommunikation über ein Netzwerk und einen Speicher. In einem geschützten Speicherbereich des Speichers ist ein erster privater kryptographischer Schlüssel eines ersten asymmetrischen Schlüsselpaars des Ausstellercomputersystems gespeichert. Der Signaturserver verfügt als Signaturschlüssel über einen zweiten privaten kryptographischen Schlüssel eines dem Signierer zugeordneten zweiten asymmetrischen Schlüsselpaars, wobei eine Authentizität des zweiten asymmetrischen Schlüsselpaars über eine PKI abgesichert ist.

Das digitale Dokument wird unter Verwendung einer Blockchain ausgestellt. Der Blockchain ist ein Smart Contract mit ersten Programminstruktionen zugeordnet. Durch Ausführen der ersten Programminstruktionen werden dem Smart Contract zugeordnete Einträge in der Blockchain erzeugt.

Das Verfahren umfasst:
- Erstellen eines ersten Datensatzes mit Dokumentendaten für das digitale Dokument in einem maschinenlesbaren Format durch das Ausstellercomputersystem,
- Senden des ersten Datensatzes durch das Ausstellercomputersystem unter Verwendung der Kommunikationsschnittstelle über ein Netzwerk an den Signaturserver,
- Empfangen des ersten Hashwerts des digitalen Dokuments von dem Signaturserver über das Netzwerk durch das Ausstellercomputersystem unter Verwendung der ersten Kommunikationsschnittstelle, wobei das digitale Dokument den ersten Datensatz umfasst, welcher mit einer ersten unter Verwendung des Signaturschlüssels erstellten Signatur signiert ist, wobei das digitale Dokument ferner einen zweiten Datensatz mit den Dokumentendaten in einem Format einer Seitenbeschreibungssprache umfasst, wobei der zweite Datensatz mit einer zweiten unter Verwendung des Signaturschlüssels erstellten Signatur signiert ist,
- Erstellen einer mit dem privaten kryptographischen Schlüssel des Ausstellers signierten Eintragungsanfrage durch das Ausstellercomputersystem, wobei die Eintragungsanfrage den Smart Contract identifiziert und den ersten Hashwert des digitalen Dokuments umfasst,
- Senden der signierten Eintragungsanfrage durch das Ausstellercomputersystem unter Verwendung der Kommunikationsschnittstelle über das Netzwerk an einen ersten Blockchain-Server zum Eintragen des einen ersten Hashwerts des digitalen Dokuments in die Blockchain unter Verwendung des Smart Contracts,
- auf eine Eintragung des ersten Hashwerts in die Blockchain hin, Empfangen des digitalen Dokuments von dem Signaturserver über das Netzwerk durch das Ausstellercomputersystem unter Verwendung der ersten Kommunikationsschnittstelle.

Ausführungsformen können den Vorteil haben, dass digitale Dokumente ausgestellt werden, deren Daten sowohl unter Verwendung des ersten Datensatzes maschinenlesbar und damit voll automatisch ausgewertet und/oder verarbeitet werden können als auch unter Verwendung des zweiten Datensatzes für einen Nutzer leicht lesbar visuell ausgegebene werden können, etwa auf einem Display oder mit einem Drucker. In dem zweiten Datensatz im Format der Seitenbeschreibungssprache wird dabei die Gestaltung und/oder das optische Aussehen des Dokuments bei einer visuellen Ausgabe, etwa auch einem Display oder mit einem Drucker, festgelegt. Ferner können Ausführungsformen den Vorteil haben, dass der Aussteller kein PKI-Zertifikat benötigt, sondern vielmehr ein zentrales PKI-Zertifikat zur Absicherung einer Mehrzahl digitaler Dokumente von unterschiedlichen Ausstellern verwendet werden kann.

Die Authentizität des Dokuments ist dabei sowohl über die Signaturen als auch über den Eintrag in die Blockchain abgesichert. Für die Signaturen ist der Signaturserver verantwortlich, für den Eintrag in die Blockchain ist das Ausstellercomputersystem verantwortlich. Mithin erfolgt die Absicherung des Dokuments über zwei voneinander unabhängige miteinander verschränkte Instanzen, wodurch die Sicherheit erhöht wird.

Ausführungsformen können den Vorteil haben, dass sie eine sichere Ausstellung bzw. Beglaubigung von digitalen Dokumenten, wie beispielsweise Zeugnissen oder anderen Dateien, ermöglichen. Unter Ausstellen eines digitalen Dokuments wird hier das Erstellen einer elektronischen Datei mit allen Daten des entsprechenden Dokuments sowie eines Nachweises für die Authentizität der entsprechenden Daten verstanden. Nach Ausführungsformen umfasst ein solcher Authentizitätsnachweis für ein digitales Dokument einen in eine Blockchain eingetragenen Hashwert des entsprechenden digitalen Dokuments. Die Sicherung eines digitalen Dokuments durch eine Prüfsumme basierend auf einem Hash und die Speicherung einer Blockchain ist effektiv und sicher. Somit können insbesondere Fälschungen effizient verhindert werden. Die entstehenden Kosten wachsen kaum mit der Anzahl der Dokumente, da die Kosten für die Sicherung der einzelnen Dokumente bereits niedrig sind. Darüber können Ausführungsformen den Vorteil haben, dass durch die Blockchain die Authentizität aller Kopien eines einmal in die Blockchain eingetragenen Dokuments bestätigt werden. Es ist somit möglich eine unbegrenzte Anzahl von Kopien mit einer einzigen Eintragung in die Blockchain zu beglaubigen. Solange die Kopien inhaltlich identisch mit dem Originaldokument bzw. der Originaldatei sind, sodass sich der Hashwert nicht ändert, kann anhand der Blockchain verifiziert werden, dass es sich bei einer entsprechenden Kopie tatsächlich um eine originalgetreue Kopie handelt. Im Falle von herkömmlichen Dokumenten in Papierform, müsste beispielsweise jede einzelne Kopie beglaubigt werden. Das Verfahren ist für alle Typen von digitalen Dokumenten, d.h. Datenobjekten bzw. Dateien, geeignet. Es lassen sich Dokument beliebiger Größe bzw. Seitenzahl effizient und speicherplatzsparend sichern. Das Verfahren ist einfach zu handhaben. Schließlich ermöglicht eine Verwendung einer Blockchain einer Kryptowährung die Implementierung eines impliziten Gebührensystems.

Der resultierende Hashwert des Dokuments ist permanent öffentlich zugänglich gespeichert. Nach Ausführungsformen wird der Hashwert zusammen mit einem Zeitstempel in die Blockchain eingetragen. Der Zeitstempel gibt beispielsweise den Zeitpunkt an, an dem der entsprechende Block mit dem zugehörigen Hash in die Blockchain eingetragen wurde. So ist der Zeitpunkt der Ausstellung des Dokuments jederzeit verifizierbar. Es ist beim Eintragen keine Vor- oder Nachdatierung möglich. Trotz einer möglichen öffentlichen Zugänglichkeit des Hashwerts, umfasst die Blockchain keine öffentlich zugänglichen persönlichen Daten des Dokumenteninhabers oder sonstige von dem Dokument umfassten Daten. Die persönlichen Daten des Dokumenteninhabers ebenso wie das Dokument selbst befinden sich allein in der Verfügungsgewalt des Dokumentinhabers bzw. des Dokumentenausstellers. Nur wer sich im Besitz des Dokuments befindet kann dessen Hashwert berechnen und prüfen, ob ein identischer Hashwert in der Blockchain hinterlegt wurde. Ist dies der Fall, wird das vorliegende Dokument als authentisch angesehen. Aus den öffentlich zugänglichen Hashwerten der Blockchain lassen sich jedoch keine Informationen über Art oder Inhalt des zugrundliegenden Dokuments gewinnen.

Nach Ausführungsformen umfasst der Eintrag in der Blockchain mit dem Hashwert eine Signatur des Ausstellers des Dokuments. Beispielsweise ist der Eintrag, welcher den Hashwert enthält, mit dem privaten kryptographischen Schlüssel des Ausstellers signiert. Diese Signatur lässt sich mit dem zugehörigen öffentlichen kryptographischen Schlüssel des Ausstellers prüfen. Da der öffentliche Schlüssel des Ausstellers bekannt gemacht wurde, ist nachprüfbar, dass das Dokument auch tatsächlich von einem dazu berechtigten Aussteller ausgestellt wurde. Beispielsweise kann im Falle eines Zeugnisses nachgeprüft werden, ob auch tatsächlich die zuständige Schule das Zeugnis ausgestellt, d.h. in die Blockchain eingestellt hat.

Beispielsweise umfasst der Eintrag in der Blockchain einen Identifikator des Ausstellers wie etwa einer Schule. Dieser Identifikator kann beispielsweise dem öffentlichen kryptographischen Schlüssel des Ausstellers entsprechen und/oder von diesem abgeleitet sein, sodass der Ursprung des Hashwerts in der Blockchain nachprüfbar ist. Bei dem Identifikator kann es sich beispielsweise um eine Blockchain-Adresse des Ausstellers handeln. Unter dieser Blockchain-Adresse können nur Daten eingetragen werden, die mit dem zugehörigen privaten kryptographischen Schlüssel des Ausstellers signiert sind. Beim Eintragen in die Blockchain identifiziert beispielsweise die Eintragungsanfrage die entsprechende Blockchain-Adresse.

Nach Ausführungsformen wird eine Blockchain zum Ausstellen und Verifizieren von digitalen Dokumenten, wie beispielsweise Zeugnissen bereitgestellt. Möchte ein Aussteller von Dokumenten, wie etwa eine Behörde, eine Universität, eine Schule, ein Institut, ein privates Unternehmen, die Blockchain nutzen, so kann er sich autorisieren lassen. Im Zuge der Autorisierung wird beispielsweise der Aussteller authentifiziert. Sobald der Aussteller autorisiert ist, d.h. beispielsweise sein öffentlicher kryptographischer Schlüssel in der Blockchain hinterlegt bzw. registriert ist, kann er digitale Dokumente ausstellen und deren Hashwerte zum Zwecke der Verifikation in der Blockchain hinterlegen. Dieses Hinterlegen der Hashwerte in der Blockchain entspricht einer Beglaubigung der entsprechenden digitalen Dokumente sowie aller originalgetreuen Kopien derselben.

Ausführungsformen können es somit ermöglichen, dass Dokumente, wie etwa Zeugnisse, ausschließlich oder zusätzlich zu ihrer Ausgestellung in Papierform in digitaler Form als Datenkonstrukt zur elektronischen Datenverarbeitung ausgestellt werden. Solche digitalen Dokumente können auf beliebigen elektronischen Geräten mit entsprechenden Speichern aufbewahrt und/oder transportiert werden. Diese elektronischen Geräte sollten allerdings gegenüber unberechtigten Zugriffen geschützt sein. Beispielsweise können die Dokumente in einem geschützten Speicherbereich des entsprechenden Speichers aufbewahrt werden. Ferner können die Dokumente kryptographisch gesichert werden, beispielsweise unter Verwendung eines Sicherheitsmoduls. Zudem lassen sich die digitalen Dokumente leicht über elektronische Kommunikationsverbindungen, wie etwa das Internet, versenden. Die für das Versenden genutzten Kommunikationsverbindungen sollten allerdings gegen Abhören oder Manipulationsversuche unberechtigter Dritter geschützt sein. Eine kryptographische Absicherung kann beispielsweise durch eine Verschlüsselung mit einem symmetrischen kryptographischen Schlüssel und/oder einem dem Empfänger zugeordneten öffentlichen kryptographischen Schlüssel erfolgen. Nach Ausführungsformen erfolgt eine Übertragung über eine mittels Ende-zu-Ende-Verschlüsselung gesicherte Verbindung. Ferner kann die Übertragung des digitalen Dokuments kann dabei mittels einer geeigneten Transportverschlüsselung gesichert werden, wie beispielsweise HTTPS.

Falls der Inhaber eines solchen digitalen Dokuments eine Kopie zum Versenden benötigt, beispielsweise im Fall von Zeugnissen Kopien für eine Online-Bewerbung, kann er sich diese selbst erstellen. Solange die Kopie gegenüber dem original unverändert ist, d.h. denselben Hashwert aufweist, ist die resultierende Kopie durch den in der Blockchain eingetragenen Hashwert bereits beglaubigt. Der Empfänger der entsprechenden Kopie kann deren Hashwert berechnen und anhand der Blockchain prüfen, ob ein identischer Hashwert von einer dazu berechtigten Instanz, d.h. dem Aussteller, hinterlegt ist. Beispielsweise kann ein Bewerber bei einer Online-Bewerbung all seine Zeugnisse in digitaler Form übersenden und der Empfänger kann diese durch ein Computersystem automatisch auf ihre Authentizität hin überprüfen lassen. Eine solche Automatisierung kann insbesondere für große internationale Unternehmen mit tausenden von Bewerbungen pro Monat von Vorteil sein. Ausführungsformen implementieren ausreichend hohe Sicherheitsstandards, sodass Fälschungen ausgeschlossen werden können. Dies kann beispielsweise Krankenhäusern von Vorteil sein, da somit effizient und effektiv geprüft werden kann, ob ein Bewerber gefälschte Zeugnisse, insbesondere eine gefälschte Approbationsurkunde vorlegt. Die Überprüfung kann durch Verwendung einer zentralen Blockchain beispielsweise in effizienter Form für alle nationalen und/oder zumindest eine Auswahl internationaler Universitäten, welche anerkannte Medizinstudiengänge anbieten, implementiert werden. Da die Blockchain nur Hashwerte, keine persönlichen Daten des Zeugnisinhabers umfasst, wird zudem ein hoher Datenschutzstandard sichergestellt.

Nach Ausführungsformen ist ein Eintrag beispielsweise dem Programmmodul zugeordnet, wenn er eine ID des Programmmoduls umfasst.

Unter einem "Dokument" wird insbesondere eine Urkunde, ein Zeugnis, oder ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder ein Firmenausweis, oder ein anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem Dokument um ein Machine-Readable Travel Document, wie beispielsweise von der Internationalen Luftfahrtbehörde (ICAO) und/oder dem BSI standardisiert, handeln.

Unter einem "digitalen" Dokument wird ein Datenkonstrukt zur elektronischen Datenverarbeitung verstanden, welches dieselben Daten wie ein zuvor definiertes Dokument, jedoch keinen fest zugeordneten physischen Dokumentenkörper umfasst. Ein digitales Dokument, auch als elektronisches Dokument bezeichnet, kann somit beispielsweise einen Text, eine Zahlentabelle, ein Bild oder eine Folge oder Kombination von Texten, Tabellen oder Bildern umfassen, welche durch Digitalisieren, d.h. eine Umwandlung in einen Binärcode, in Dateiform angelegt oder überführt wurden. Insbesondere ist die Gültigkeit eines solchen Dokuments unabhängig von dem Vorhandensein eines fest zugeordneten Dokumentenkörpers. Bei einem "digitalen" Dokument kann es sich um eine elektronische Datei eines beliebigen Dateiformats handeln, insbesondere eine nicht ausführbare Text- oder Tabellendatei. Ferner kann es sich bei einem digitalen Dokument beispielsweise auch um eine Videodatei, eine Lieddatei, ein Programmcode, eine ausführbare Datei, ein Archiv oder Ähnliches handeln.

Eine Urkunde ist eine Erklärung in Text- oder Schriftform, welche einen bestimmten Tatbestand bzw. Sachverhalt fixiert. Zudem kann die Urkunde den Aussteller der Urkunde identifizieren. Bei einem Zeugnis kann es sich beispielsweise um Schul- oder Universitätszeugnisse, Bescheinigungen über eine erfolgreiche Teilnahme an Fortbildungen bzw. Kursen, Vorlesungsscheine, Praktikumsbescheinigungen oder Arbeitszeugnisse handeln.

Bei einem Zeugnis kann es sich beispielsweise um ein IHK-Prüfungszeugnis handeln, das eine Urkunde ist, die einem erfolgreichen Absolventen nach bestandener Abschlussprüfung vor der Industrie- und Handelskammer (IHK) in einem anerkannten Ausbildungsberuf oder einer Aufstiegsfortbildung ausgehändigt wird. Ein IHK-Zeugnis umfasst beispielsweise Angaben über den erlernten Beruf, d.h. eine Berufsbezeichnung, und die bestandene Abschlussprüfung. Das Zeugnis kann in einem einheitlichen Layout erscheinen und die Berufsbezeichnung sowie Fachrichtung oder Schwerpunkt enthalten. Das Gesamtergebnis mit Note und Punktzahl steht oberhalb der einzelnen Prüfungsergebnisse. Auf Antrag des Prüfungsteilnehmers kann eine Berufsschulnote unterhalb der einzelnen Prüfungsergebnisse ausgewiesen sein.

Darüber hinaus kann es sich bei einem Dokument beispielsweise auch um einen Facharbeiterbrief, Gesellenbrief, Meisterbrief, eine Bachelor-Urkunde, Master-Urkunde, Magisterurkunde, Diplomurkunde, Promotionsurkunde oder Approbationsurkunde handeln.

Unter einer "Blockchain" wird hier und im Folgenden eine geordnete Datenstruktur verstanden, welche eine Mehrzahl von miteinander verketteten Datenblöcken umfasst. Insbesondere wird unter einer Blockchain eine geordnete Datenstruktur verstanden, bei welcher jeder der Blöcke (außer dem ersten Block) einen Prüfwert, beispielsweise einen Hash-Wert, seines Vorgängerblocks umfasst und somit anhand jedes Blocks die Gültigkeit aller seiner Vorgängerblocks geprüft und ggf. bestätigt werden kann. Für Beispiele einer Blockchain vergleiche https://en.wikipedia.org/wiki/Block chain_(database) und "Mastering Bitcoin", Chapter 7, The Blockchain, Seite 161 ff. Das Konzept der Blockchain wurde beispielsweise im Jahre 2008 in einem White Paper unter dem Pseudonym Satoshi Nakamoto zu Bitcoin beschrieben ("Bitcoin: Peer-to-Peer Electronic Cash System" (https://bitcoin.org/bitcoin.pdf)). Die darin beschriebene Blockchain besteht aus einer Reihe von Datenblöcken, in denen jeweils ein oder mehrere Einträge bzw. Transaktionen zusammengefasst und mit einer Prüfsumme in Form eines Hashwerts versehen sind. Zusätzliche Blöcke der Blockchain werden beispielsweise in einem rechenintensiven Prozess erzeugt, der auch als sogenanntes Mining bezeichnet wird. Diese zusätzlich erzeugten Blöcke werden anschließend der Blockchain hinzugefügt und über ein Netzwerk an alle Teilnehmer, bzw. Knoten des Netzwerks, verbreitet.

Ausführungsformen können den Vorteil haben, dass die Blockchain durch die Speicherung kryptografischer Prüfsumme, d.h. Hashwerten, des vorangehenden Blocks im jeweils nachfolgenden Block ein hohes Maß an Sicherheit gegenüber nachträglichen Manipulationen bietet. Das Verketten der Blöcke kann dann unter Verwendung dieser Root-Hashwerte überprüft werden. Jeder Block der Blockchain enthält in seinem Header den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke bzw. einzelner Einträge praktisch ausgeschlossen ist, da hierfür die Hashwerte aller nachfolgenden Blöcke in kurzer Zeit ebenfalls neu berechnet werden müssten.

Eine Blockchain kann beispielsweise auch in Form einer privaten Blockchain implementiert werden, wobei nur eine ausgewählte Gruppe von Teilnehmern eine Berechtigung zum Hinzufügen gültiger Blöcke besitzt. Eine entsprechende Berechtigung kann beispielsweise mittels einer Signatur unter Verwendung eines privaten kryptographischen Schlüssels nachgewiesen werden. Der private kryptographische Schlüssel kann zu einem asymmetrischen Schlüsselpaar gehören, zu welchem auch ein öffentlicher kryptographischer Schlüssel gehört, mit dem die Signatur geprüft werden kann. Dem asymmetrischen Schlüsselpaar kann zudem beispielsweise ein Zertifikat zugeordnet sein, welches die Berechtigung zum Erzeugen eines gültigen Blocks der Blockchain belegt. Dieses Zertifikat kann ferner einer PKI zugeordnet sein, welche die Authentizität des Zertifikats belegt. Nach einer weiteren Ausführungsform kann beispielsweise für jeden Teilnehmer aus der ausgewählten Gruppe ein öffentlicher Schlüssel in der Blockchain hinterlegt sein, beispielsweise in einem Genesisblock. Anhand dieser öffentlichen Schlüssel kann geprüft werden, ob Signaturen von Blöcken und damit die entsprechenden Blöcke selbst gültig sind.

Ein Konsens kann auch auf andere Weise in einer Blockchain implementiert werden. So kann etwa ein Konsens erreicht werden, indem über eine Aufnahme vorgeschlagener Einträge in die Blockchain abgestimmt wird. Beispielsweise führt jeder Teilnehmer eine eindeutige Liste anderer Teilnehmer, welchen er als Gruppe vertraut. Jeder Teilnehmer kann zusätzliche Einträge vorschlagen, die in einen zusätzlichen Block der Blockchain aufgenommen werden sollen. Über die Aufnahme und damit die Anerkennung der Gültigkeit der vorgeschlagenen Einträge wird abgestimmt. So stimmt beispielsweise jeder Teilnehmer nur über diejenigen Vorschläge ab, welche von Teilnehmer seiner Liste stammen. Mit anderen Worten werden für die Entscheidung, ob ein Vorschlag für einen zusätzlichen Eintrag als gültig anerkannt wird, d.h. ob bezüglich der Gültigkeit dieses Eintrages ein Konsens zwischen den Teilnehmern besteht, nur die Stimmen derjenigen Teilnehmer berücksichtigt, die von der Liste desjenigen Teilnehmers umfasst sind, der den entsprechenden Vorschlag macht. Damit ein Vorschlag für einen Eintrag als gültig angenommen wird, muss ein bestimmter Minimumanteil an stimmberechtigten Teilnehmern mit Ja stimmen, beispielsweise 80%. Alle vorgeschlagenen Einträge, die dieses Kriterium erfüllen, werden in die Blockchain aufgenommen. Eine solche Abstimmung kann mehrere Runden umfassen. Alle anderen Vorschläge, die das zuvor genannte Kriterium nicht erfüllen, werden verworfen oder bei der Abstimmung über den nächsten Block der Blockchain erneut zur Abstimmung gestellt. Die zuvor genannten Listen stellen Untergruppen des Blockchain-Netzwerks dar, denen der Teilnehmer, welcher die jeweilige Liste führt, als Gruppe insgesamt traut, ohne dass dies erfordert, dass er jedem einzelnen Teilnehmer der Liste traut. Ein Beispiel für ein solches Konsensverfahren bietet der Ripple Protokoll Konsens Algorithmus (David Schwartz et al.: "The Ripple Protocol Consensus Algorithm", Ripple Labs Inc., 2014, https://ripple.com/files/ripple_consensus_whitepaper.pdf).

Zur Überprüfung der Einträge der Blockchain bzw. zum Suchen von Hashwerten kann ein GUI, beispielsweise in Form einer Internetseite durch eine Verwaltungsinstanz der Blockchain bereitgestellt werden. Beispielsweise kann es sich bei der Blockchain um eine private, z. B. unternehmensinterne oder verbundinterne, oder öffentliche Blockchain handeln. Beispielsweise handelt es sich um eine Bitcoin-, Litecoin- oder Ethereum-Blockchain.

Ein "Programmmodul" bezeichnet hier ein eigenständiges Programm, welches in einer Blockchain gespeichert ist. Das Programmmodul kann dazu konfiguriert sein das Erstellen von dem Programmmodul zugeordneten Einträgen in der Blockchain zu steuern. Das Programmmodul kann in einem Block der Blockchain oder über mehrere Blöcke der Blockchain verteilt gespeichert sein. Jedem Aussteller oder jeder Verwaltungsinstanz einer Gruppe von Ausstellern oder allen Ausstellern zusammen ist beispielsweise ein individuelles Programmmodul zugeordnet. Bei der Blockchain handelt es sich beispielsweise um eine spezielle Dokumenten- bzw. Zeugnisblockchain. Bei einem Programmmodul kann es sich beispielsweise um einen "smart contract" handeln, wie er beispielsweise in der Ethereum Blockchain implementierbar ist.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einer "Schnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein digitales privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden. Unter einem "Speicher" werden hier sowohl flüchtige als auch nichtflüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehen. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor des Sicherheitsmoduls möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Eine "Public-Key-Infrastructure" (PKI) stellt ein System dar zum Ausstellen, Verteilen und Prüfen digitaler Zertifikate. Ein digitales Zertifikat dient in einem asymmetrischen Kryptosystem dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Unter einem "Zertifikat" wird hier ein digitales Zertifikat verstanden, welches auch als Public-Key-Zertifikat bezeichnet wird. Durch solche Zertifikate basierend auf asymmetrischen Schlüsselpaaren wird eine so genannte Public-Key-Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf Zero-Knowledge-Kryptosystemen möglich. Beispielsweise kann das Zertifikat dem Standard X.509 oder einem anderen Standard entsprechen.

Digitale Zertifikate sind bei der Absicherung elektronischer Kommunikation durch asymmetrische kryptographische Verfahren ein bewährtes Mittel, um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt, um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter, weitergegeben werden darf, sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Die Erstellung einer digitalen Signatur, im Folgenden auch lediglich als "Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem privaten Schlüssel eines einem Zertifikat zugeordneten kryptographischen Schlüsselpaares verschlüsselter Hashwert. Die Besonderheit einer solchen Signatur besteht darin, dass deren Urheberschaft und Zugehörigkeit zu einer bestimmten Person oder Instanz durch jeden Dritten geprüft werden kann.

Unter einer digitalen Signatur wird hier auch ein digitales Siegel verstanden, welches nicht einer natürlichen Person, sondern einer juristischen Person zugeordnet ist. Ein digitales Siegel dient somit nicht der Abgabe einer Willenserklärung einer einzelnen Person, sondern einer Institution als Herkunftsnachweis. Es kann somit den Ursprung und die Unversehrtheit digitaler Dokumente sicherstellen und nachweisen, dass diese von einer bestimmten juristischen Person stammen.

Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht dient.

Ein Schlüssel zum Authentifizieren eines Senders einer Nachricht im Zuge eines Secure-Messaging-Verfahrens kann beispielsweise zum Erstellen eines Nachrichtenauthentifizierungscodes (Message Authentication Code, MAC) dienen. Mittels eines MAC lässt sich Gewissheit über den Ursprung der Nachrichten erhalten und deren Integrität verifizieren. MAC-Algorithmen erfordern zwei Eingabeparameter, erstens die zu schützenden Daten und zweitens einen geheimen Schlüssel. Aus diesen beiden wird ein Nachrichtenauthentifizierungscode in Form einer Prüfsumme berechnet. Der Sender einer Nachricht berechnet für die zu übermittelnden Daten der Nachricht einen MAC und sendet die Nachricht zusammen mit dem MAC an den Empfänger. Der Empfänger berechnet den MAC zu der empfangenen Nachricht mit seinem Schlüssel und vergleicht den berechneten MAC mit dem empfangenen MAC. Aus einer Übereinstimmung beider Werte folgt, dass die Nachricht von einer Partei abgeschickt wurde, welche Zugriff auf den geheimen Schlüssel besitzt, und dass die Nachricht während der Übertragung nicht verändert wurde.

Nach Ausführungsformen wird der zweite Datensatz von dem Ausstellercomputersystem erstellt und zusammen mit dem ersten Datensatz an den Signaturserver gesendet. Ausführungsformen können den Vorteil haben, dass das Ausstellercomputersystem die Gestaltung bzw. das optische Aussehen des digitalen Dokuments bei einer Ausgabe mit dem zweiten Datensatz festlegen kann.

Nach Ausführungsformen handelt es sich bei dem zweiten Datensatz um einen von dem Signaturserver unter Verwendung des von dem Ausstellercomputersystem gesendeten ersten Datensatz erstellt Datensatz. Hierzu umfasst der Signaturserver beispielsweise eine Vorlage bzw. ein Template für die Gestaltung bzw. das optische Aussehen des digitalen Dokuments in der Seitenbeschreibungssprache.

Nach Ausführungsformen signiert die zweite Signatur den zweiten Datensatz zusammen mit dem signierten ersten Datensatz. Ausführungsformen können den Vorteil haben, dass durch die zweite Signatur die Authentizität des er Inhalts des gesamten digitalen Dokuments abgesichert werden kann.

Nach Ausführungsformen handelt es sich bei dem maschinenlesbaren Format um eine Auszeichnungssprache, wie beispielsweise die "Extensible Markup Language" (XML), und/oder um ein Austauschformat, wie beispielsweise die "JavaScript Object Notation" (JSON), "O-pen Badges" und/oder "Verifiable Credentials".

Die Extensible Markup Language (XML) bzw. erweiterbare Auszeichnungssprache ist eine Auszeichnungssprache zur Darstellung von Daten, insbesondere hierarchisch strukturierter Daten, in Form einer maschinenlesbaren Textdatei. Die Darstellung der Daten gemäß XML ist zusätzlich menschenlesbar. Die JavaScript Object Notation (JSON) ist ein Austauschformat zum Übertragen und Speichern von Daten, insbesondere strukturierter Daten. JSON weist die Form einer maschinenlesbaren Textdatei auf, welche zusätzlich menschenlesbar ist. Ein JSON-Dokument kann beispielsweise ein gültiges JavaScript sein, welches per eval() von einem JavaScript-Interpreter interpretiert werden kann. Open Badges sind Lernabzeichen in Form digitaler Zertifikate der Mozilla Foundation und Verifible Credentials sind überprüfbare Anmeldeinformationen, welche durch das W3C in "Verifiable Credentials Data Model 1.0 - Expressing verifiable information on the Web" vom 19. November 2019 normiert sind.

Bei dem ersten Datensatzes mit Dokumentendaten handelt es sich beispielsweise um eine Angabe von Lernergebnisses eines Zeugnisses, insbesondere eines Hochschulzeugnisses. Beispielsweise können die Angaben auf den CEN Normen EN15981:2011 EuroLMAI (European Learner Mobility Achievement Information/Europäisches Modell für Lernermobilität) und/oder EN15982:2011 MLO (Metadata for learning opportunities/Metadaten für Lernangebote) beruhen. EuroLMAI definiert ein Modell für die Dokumentation und den Austausch von Angaben über die Leistung des Lernenden zwischen Lernmanagement-Informationssystemen sowie für die Zusammenführung von Informationen von Drittanbietern. Das Modell betrachtet insbesondere Diplome, Diplomzusätze und Transkripte von Aufzeichnungen für die Hochschulbildung. MLO definiert ein abstraktes Modell zur Darstellung von Lernangeboten. Dieses Modell beschreibt drei Informationsquellen, über die Metadaten zur Erleichterung der Publikmachung von Lernangeboten gespeichert werden können, nämlich den Anbieter des Lernangebotes, die abstrakte Beschreibung eines Lernangebotes sowie ein konkretes Beispiel für dieses Lernangebot.

Nach Ausführungsformen handelt es sich bei der Seitenbeschreibungssprache um eine der folgenden Sprachen: Portable Document Format (PDF), PostScript (PS), Device Independent File Format (DVI).

Eine Seitenbeschreibungssprache beschreibt den Aufbau einer Seite, wie diese in einem speziellen Ausgabeprogramm oder -gerät, wie einem Drucker, aussehen soll. Das Portable Document Format, d.h. (trans)portables Dokumentenformat, ist eine vektorbasierte Seitenbeschreibungssprache, welches eine freie Skalierbarkeit der Darstellung erlaubt. Dabei beschreibt eine PDF-Datei das mit einer Erstellungsanwendung erzeugte Layout in einer vom Drucker und von Voreinstellungen unabhängigen Form proportional. Eine PDF-Datei kann ein Dokument inklusive aller Farben, Raster- und Vektorgrafiken und Schrifttypen präzise wiedergeben. PostScript-Dateien erlauben es Grafiken und Druckseiten auf den unterschiedlichen Ausgabegeräten in beliebiger Größe und Auflösung verlustfrei ausgeben zu können. Grafische Elemente und Schriften werden hierzu als skalierbare Vektorgrafik beschrieben, ebenso können Rastergrafiken eingebettet werden. Eine DVI-Datei speichert einen Text ergänzt um Satzinformationen. Diese Satzinformationen umfassen beispielsweise Schriftarten, Zeichen- und Zeilenabstände, Zeichenpositionen etc.

Nach Ausführungsformen handelt es sich bei dem digitalen Dokument um ein digitales Zeugnis.

Nach Ausführungsformen umfasst das Verfahren ferner:
- Bereitstellen einer Kopie des digitalen Dokuments durch das Ausstellercomputersystem zum Herunterladen von einem Downloadserver,
- Bereitstellen eines Zugriffscodes für einen Nutzer, wobei der Zugriffscode eine Berechtigung des Nutzers zum Herunterladen des digitalen Dokuments nachweist.

Der Zugriffscode ermöglicht es dem Nutzer das digitale Dokument herunterzuladen oder der Nutzer kann den Zugriffcode weiterleiten und somit einem Dritten Zugriff auf das digitale Dokument gewähren. Ausführungsformen können den Vorteil haben, dass dem Nutzer bzw. seinem Nutzercomputersystem das digitale Dokument zur Verfügung gestellt werden kann. Bei dem Nutzer kann es sich insbesondere um den Inhaber des digitalen Dokuments handeln, welcher somit Verfügungshoheit über das Dokument erlangt und es somit an ausgewählte weitere Computersysteme, etwa Prüfcomputersysteme senden kann, welche die Authentizität des digitalen Dokuments und/oder der Dokumentendaten anhand der Blockchain und/oder der Signaturen prüfen können.

Nach Ausführungsformen ist dem Zugriffscode eine Gültigkeitsperiode und/oder eine maximale Nutzungsanzahl als Berechtigungsnachweis des Nutzers zum Herunterladen des digitalen Dokuments zugeordnet.

Ausführungsformen können den Vorteil haben, dass die Gültigkeit des Zugriffscodes sowohl in zeitlicher Hinsicht als auch in Hinsicht auf die Anzahl der Nutzungen effektiv kontrolliert und somit missbrauch vorgesorgt werden kann. Beispielsweise kann es sich bei dem Zugriffscode um einen Einmalzugriffscode handeln, welcher nur eine einmalige Nutzung ermöglicht.

Nach Ausführungsformen umfasst das Verfahren ferner ein Senden des digitalen Dokuments von dem Ausstellercomputersystem an das Nutzercomputersystem über das Netzwerk, beispielsweise in Antwort auf eine Anfrage zum Ausstellen des digitalen Dokuments. Ausführungsformen können den Vorteil haben, dass dem Nutzer bzw. seinem Nutzercomputersystem das digitale Dokument zur Verfügung gestellt werden kann. Bei dem Nutzer kann es sich insbesondere um den Inhaber des digitalen Dokuments handeln, welcher somit Verfügungshoheit über das Dokument erlangt und es somit an ausgewählte weitere Computersysteme, etwa Prüfcomputersysteme senden kann, welche die Authentizität des digitalen Dokuments und/oder der Dokumentendaten anhand der Blockchain und/oder der Signaturen prüfen können.

Nach Ausführungsformen umfasst das Verfahren ferner:
- Verschlüsseln des digitalen Dokuments unter Verwendung eines symmetrischen kryptographischen Schlüssels durch das Ausstellercomputersystem,
- Speichern des verschlüsselten digitalen Dokuments in einem permanenten Speicher.

Ausführungsformen können den Vorteil haben, dass eine sichere und permanente Speicherung ausgestellter digitaler Dokumente ermöglicht wird, wobei nur die Besitzer des symmetrischen kryptographischen Schlüssels auf den Inhalt eines entsprechend verschlüsselten digitalen Dokuments zugreifen können.

Nach Ausführungsformen umfasst der Dateiname, unter welchem das verschlüsselte digitale Dokument gespeichert wird, einen Hash aus personenbezogenen Daten des Inhabers des Dokuments, wie etwa Vorname, Nachname. Ferner kann der Hash dokumentenbezogene Daten, wie etwa das Ausstellungsjahr, umfassen. Ausführungsformen können den Vorteil haben, dass diese personenbezogenen und/oder dokumentenbezogene Daten dem Dokumenteninhaber bekannt sind. Dem Dokumenteninhaber ist es somit jederzeit die passende verschlüsselte Datei mit seinem verschlüsselten Dokument aufzufinden, selbst bei Verlust des Dateinamens, da der Dokumenteninhaber diesen jederzeit aus seinem Wissen unter Verwendung einer Hash-Funktion ableiten bzw. wiederherstellen kann. Der entsprechende Hash dient somit als ein Zugriffsschlüssel zum Zugreifen auf das verschlüsselte Dokument.

Nach Ausführungsformen umfasst das Verfahren ferner:
- Verschlüsseln des symmetrischen Schlüssels unter Verwendung des ersten öffentlichen Schlüssels des ersten asymmetrischen Schlüsselpaares des Ausstellers,
- Speichern des mit dem ersten öffentlichen Schlüssel verschlüsselten symmetrischen Schlüssels zusammen mit dem verschlüsselten digitalen Dokument in dem permanenten Speicher.

Ausführungsformen können den Vorteil haben, dass der Aussteller damit Zugriff auf den symmetrischen Schlüssel besitzt und diesen jederzeit rückgewinnen kann. Mithin entfällt eine Notwendigkeit den symmetrischen Schlüssel lokal zu speichern.

Nach Ausführungsformen umfasst das Verfahren ferner ein Bereitstellen des symmetrischen kryptographischen Schlüssels für ein Verwaltungscomputersystem einer Verwaltungsinstanz.

Nach Ausführungsformen umfasst das Verfahren ferner:
- Verschlüsseln des symmetrischen Schlüssels unter Verwendung eines dritten öffentlichen Schlüssels eines dritten asymmetrischen Schlüsselpaares einer Verwaltungsinstanz,
- Speichern des mit dem dritten öffentlichen Schlüssel verschlüsselten symmetrischen Schlüssels zusammen mit dem verschlüsselten digitalen Dokument in dem permanenten Speicher.

Ausführungsformen können den Vorteil haben, dass die Verwaltungsinstanz damit ebenfalls Zugriff auf den symmetrischen Schlüssel erhalten und diesen jederzeit abrufen kann. Mithin entfällt eine Notwendigkeit den symmetrischen Schlüssel lokal zu speichern.

Nach Ausführungsformen kann somit ein sicheres Speichern von digitalen Dokumenten in verschlüsselter Form ermöglicht werden, wobei eine Entschlüsselung nur mit dem privaten kryptographischen Schlüssel des Ausstellers, beispielsweise einer Schule, oder einer autorisierenden Verwaltungsinstanz, beispielsweise einer Schulbehörde, möglich ist. Mit den entsprechenden privaten kryptographischen Schlüsseln können die zum Verschlüsseln der gespeicherten Dokumente verwendete kryptographischen Schlüssel entschlüsselt und mit diesen wiederum die verschlüsselten Dokumente selbst entschlüsselt werden.

Ausführungsformen können den Vorteil haben, dass auch das Verwaltungscomputersystem auf den Inhalt des in dem permanenten Speicher verschlüsselt gespeicherten digitalen Dokuments zugreifen kann. Nach Ausführungsformen umfasst das Verfahren ein Verschlüsseln des symmetrischen kryptographischen Schlüssels mit einem öffentlichen kryptographischen Schlüssel eines asymmetrischen kryptographischen Schlüsselpaars des Verwaltungscomputersystems der Verwaltungsinstanz. Das Verwaltungscomputersystem kann den verschlüsselten symmetrischen kryptographischen Schlüssel unter Verwendung eines privaten kryptographischen Schlüssels seines asymmetrischen kryptographischen Schlüsselpaars entschlüsseln. Ausführungsformen können den Vorteil haben, dass auch das Verwaltungscomputersystem auf den Inhalt des in dem permanenten Speicher verschlüsselt gespeicherten digitalen Dokuments zugreifen kann. Der Vorteil der doppelten Verschlüsselung besteht darin, dass mehreren Instanzen, wie etwa Aussteller oder Verwaltungsinstanzen, der Zugriff gewährt werden kann, ohne dass das gesamte Dokument mehrfach verschlüsselt wird. Nur der symmetrische Zugriffsschlüssel wird für jeden Zugreifer mit seinem jeweiligen öffentlichen kryptographischen Schlüssel verschlüsselt.

Nach Ausführungsformen umfasst das Verfahren ferner:
- Empfangen der signierten Eintragungsanfrage durch den ersten Blockchain-Server,
- Ausführen der ersten Programminstruktionen des durch die signierte Eintragungsanfrage identifizierten Smart Contracts durch den ersten Blockchain-Server, wobei das Ausführen der ersten Programminstruktionen ein Prüfen der Signatur der Eintragungsanfrage unter Verwendung eines ersten öffentlichen kryptographischen Schlüssels des ersten asymmetrischen Schlüsselpaars des Ausstellercomputersystems und, im Falle einer gültigen Signatur, zum Ausstellen des digitalen Dokuments ein Erzeugen eines zusätzlichen ersten Blocks der Blockchain, z.B. eines nächsten Blocks mit einem zusätzlichen Eintrag, wobei der erzeugte erste Block einen ersten Eintrag mit dem ersten Hashwert umfasst, z.B. umfasst der zusätzlichen Eintrag des nächsten Blocks den entsprechenden Hashwert.

Ausführungsformen können den Vorteil haben, dass ein effektives Verfahren zum Eintragen von digitalen Dokumenten in einer Blockchain bereitgestellt wird.

Nach Ausführungsformen umfasst das Verfahren ferner ein Autorisieren des Ausstellercomputersystems zum Eintragen von Hashwerten digitaler Dokumente in die Blockchain. Das Autorisieren umfasst:
- Erstellen einer Autorisierungsanfrage an eine autorisierende Verwaltungsinstanz, z.B. eine Schulbehörde bei einer Autorisierungsanfrage von einer Schule als Aussteller, durch das Ausstellercomputersystem, wobei die Autorisierungsanfrage den ersten öffentlichen kryptographischen Schlüssel des Ausstellers umfasst,
- Senden der Autorisierungsanfrage durch das Ausstellercomputersystem über das Netzwerk an ein Verwaltungscomputersystem der autorisierende Verwaltungsinstanz zum Erstellen einer Eintragungsanfrage durch das Verwaltungscomputersystem an einen zweiten Blockchain-Server zur Eintragung einer Autorisierung des Ausstellers, wobei die Eintragungsanfrage den ersten öffentlichen kryptographischen Schlüssel des Ausstellers umfasst und mit dem dritten privaten kryptographischen Schlüssel des dritten asymmetrischen Schlüsselpaars des Verwaltungscomputersystems signiert ist.

Ausführungsformen können den Vorteil haben, dass ein hierarchisches Autorisieren einer untergeordneten Instanz, wie etwa einer Schule, durch eine autorisierende übergeordnete Instanz, wie etwa einer Schulbehörde, implementiert werden kann. Die autorisierende übergeordnete Instanz kann beispielsweise in entsprechender Weiser durch eine ihr übergeordnete Instanz autorisiert sein und so weiter. Die übergeordnete Instanz kann hierzu eine entsprechende Autorisierungsanfrage mit ihrem dritten öffentlichen kryptographischen Schlüssel an die ihr übergeordnete Instanz senden, welche eine entsprechende Eintragungsanfrage zur Eintragung einer Autorisierung der anfragenden Instanz erstellt, signiert und zur Eintragung der Autorisierung in die Blockchain an einen Blockchain-Server sendet.

Nach Ausführungsformen ist die Autorisierungsanfrage unter Verwendung des ersten privaten kryptographischen Schlüssels des Ausstellers signiert. Ausführungsformen können den Vorteil haben, dass die Signatur des Austellers unter Verwendung des von der Autorisierungsanfrage umfassten ersten öffentlichen kryptographischen Schlüssels geprüft und somit sichergestellt werden kann, dass sich der Aussteller im Besitz des entsprechenden ersten privaten kryptographischen Schlüssels befindet.

Die autorisierende Verwaltungsinstanz autorisiert die Autorisierungsanfrage des Ausstellers beispielsweise unter Verwendung der Eintragungsanfrage.

Nach Ausführungsformen umfasst das Verfahren durch die autorisierende Verwaltungsinstanz unter Verwendung des Verwaltungscomputersystems ferner:
- Erstellen der Eintragungsanfrage durch das Verwaltungscomputersystem zur Eintragung der Autorisierung des Ausstellers, wobei die Eintragungsanfrage den Smart Contract identifiziert, den ersten öffentlichen kryptographischen Schlüssel des Ausstellers umfasst und mit einem dritten privaten kryptographischen Schlüssel eines dritten asymmetrischen Schlüsselpaars des Verwaltungscomputersystems signiert ist,
- Senden der Eintragungsanfrage durch das Ausstellercomputersystem über das Netzwerk an den zweiten Blockchain-Server, wobei der zweite Blockchain-Server dazu konfiguriert ist, Blöcke der Blockchain zu erzeugen,
- Empfangen der Eintragungsanfrage durch den zweiten Blockchain-Server,
- Ausführen zweiter Programminstruktionen des durch die Eintragungsanfrage identifizierten Smart Contract durch den zweiten Blockchain-Server, wobei das Ausführen der zweiten Programminstruktionen ein Prüfen der Gültigkeit der Eintragungsanfrage umfasst und, im Falle einer gültigen Eintragungsanfrage, zum Autorisieren des ersten öffentlichen kryptographischen Schlüssels des Ausstellers ein Erzeugen eines zweiten zusätzlichen Blocks der Blockchain mit einer Autorisierungsbestätigung des Ausstellercomputersystems umfasst.

Nach Ausführungsformen umfasst das Prüfen der Gültigkeit der Eintragungsanfrage ein Prüfen der Signatur der autorisierenden Verwaltungsinstanz mit einem dritten öffentlichen kryptographischen Schlüssel des dritten asymmetrischen Schlüsselpaars des Verwaltungscomputersystems. Nach Ausführungsformen ist der dritte öffentlichen kryptographischen Schlüssel des Verwaltungssystems in der Blockchain und/oder in dem Smart Contract gespeichert.

Die autorisierende Verwaltungsinstanz trägt die Autorisierung über den Aufruf einer Funktion des Smart Contracts in die Blockchain ein. Beispielsweise erstellt die autorisierende Verwaltungsinstanz eine Eintragungsanfrage zum Eintragen der Autorisierung in die einen Block der Blockchain. Die Eintragungsanfrage identifiziert beispielsweise den entsprechenden Smart Contract, dessen Funktion genutzt werden soll. Diese Eintragungsanfrage wird mit einem privaten kryptographischen Schlüssel eines asymmetrischen Schlüsselpaars der autorisierenden Verwaltungsinstanz geschützt. Beispielsweise umfasst die Eintragungsanfrage den ersten öffentlichen kryptographischen Schlüssel des Ausstellers.

Ausführungsformen können den Vorteil haben, dass die autorisierende Verwaltungsinstanz Untergeordnete bzw. zu Autorisierende bestätigt, nachdem diese sich registriert haben und der autorisierende Verwaltungsinstanz als Blockchain-Adresse verwendeten, registrierten öffentlichen kryptographischen Schlüssel auf einem bekannten Kanal übermittelt haben. Ein Austeller, wie eine Schule, erzeugt beispielsweise ein asymmetrischen Schlüsselpaar mit einem für die Blockchain-Adresse bzw. für einen Identifikator in der Blockchain zu verwendeten öffentlichen kryptographischen Schlüssel und teilt diesen öffentlichen kryptographischen Schlüssel der autorisierenden Verwaltungsinstanz, wie etwa einer Schulbehörde, mit. Die autorisierende Verwaltungsinstanz autorisiert den Aussteller in der Blockchain durch einen Autorisierungseintrag in der Blockchain mit dem öffentlichen kryptographischen Schlüssel des Ausstellers. Hierbei kann beispielsweise keine sichere Übertragung notwendig sein, weil sich bekannte Akteure austauschen und lediglich nicht sensible öffentliche Daten, wie etwa der öffentliche kryptographischen Schlüssel gesendet werden.

Nach Ausführungsformen umfasst das Verfahren ferner ein Autorisieren des Ausstellercomputersystems zum Eintragen von Hashwerten digitaler Dokumente in die Blockchain, wobei das Autorisieren umfasst:
- Erstellen einer Autorisierungsanfrage durch das Ausstellercomputersystem, wobei die Autorisierungsanfrage den Smart Contract identifiziert und den ersten öffentlichen kryptographischen Schlüssel des Ausstellers umfasst,
- Senden der Autorisierungsanfrage durch das Ausstellercomputersystem über das Netzwerk an einen zweiten Blockchain-Server, wobei der zweite Blockchain-Server dazu konfiguriert ist, Blöcke der Blockchain zu erzeugen,
- Empfangen der Autorisierungsanfrage durch den zweiten Blockchain-Server,
- Ausführen zweiter Programminstruktionen des durch die Autorisierungsanfrage identifizierten Smart Contract durch den zweiten Blockchain-Server, wobei das Ausführen der zweiten Programminstruktionen ein Prüfen der Gültigkeit der Autorisierungsanfrage umfasst und, im Falle einer gültigen Autorisierungsanfrage, zum Autorisieren des ersten öffentlichen kryptographischen Schlüssels des Ausstellers ein Erzeugen eines zweiten zusätzlichen Blocks der Blockchain mit einer Autorisierungsbestätigung des Ausstellercomputersystems umfasst.

Ausführungsformen können den Vorteil haben, dass nur autorisierte Aussteller ein Eintragen von Hashwerten digitaler Dokumente veranlassen können. Beispielsweise werden auf eine Autorisierungsanfrage hin zunächst Daten des anfragenden Ausstellers mit dem ersten öffentlichen kryptographischen Schlüssel des Ausstellers in die Blockchain eingetragen. Für eine gültige Autorisierungsanfrage kann eine zusätzliche Autorisierung durch ein Verwaltungscomputersystem einer autorisierenden Verwaltungsinstanz notwendig sein. Beispielsweise wird auf einen Empfang einer Autorisierungsbestätigung einer in der Blockchain registrierten Verwaltungsinstanz ein Autorisierungsvermerk in die Blockchain eingetragen, wobei der Eintrag mit dem Autorisierungsvermerk die Autorisierungsbestätigung des Ausstellercomputersystems darstellt. Nach alternativen Ausführungsformen ist ein gültiges Autorisierungspasswort Voraussetzung für eine gültige Autorisierungsanfrage. In diesem Fall ist beispielsweise keine zusätzliche Autorisierung des Ausstellercomputersystems durch eine autorisierende Verwaltungsinstanz notwendig, da die entsprechende Autorisierung bereits in Form des Autorisierungspassworts vorliegt.

Nach Ausführungsformen umfasst die Autorisierungsanfrage den ersten öffentlichen kryptographischen Schlüssel des Ausstellers.

Nach Ausführungsformen umfasst die Autorisierungsanfrage ein Autorisierungspasswort. Nach Ausführungsformen umfasst das Prüfen der Gültigkeit der Autorisierungsanfrage ein Prüfen der Gültigkeit des Autorisierungspassworts.

Ausführungsformen können den Vorteil haben, dass dem Aussteller, beispielsweise von einer autorisierenden Verwaltungsinstanz der Blockchain bzw. des Programmmoduls oder des Ausstellers, ein Autorisierungspasswort zur Autorisierung in der Blockchain bereitgestellt wird. Mit diesem durch eine Autorisierung in der Blockchain kann der Aussteller für sich die Berechtigung zum Hinterlegen von Hashwerten unter Verwendung des Programmmoduls freischalten. Beispielsweise handelt es sich bei dem Aussteller um eine Schule, welche sich Autorisieren möchte, um Hashwerte von Zeugnissen hinterlegen zu können. Hierzu fragt die Schule bei der autorisierenden Verwaltungsinstanz ein Autorisierungspasswort zum Autorisieren an. Dies kann beispielsweise schriftlich per Post, per E-Mail oder über eine Internetseite bzw. Webseite erfolgen. Eine Anfrage auf elektronischem Weg kann kryptographisch gesichert sein. Eine kryptographische Sicherung kann beispielsweise durch eine Verschlüsselung mit einem symmetrischen kryptographischen Schlüssel und/oder einem dem Empfänger zugeordneten öffentlichen kryptographischen Schlüssel erfolgen. Nach Ausführungsformen erfolgt eine Übertragung über einen mittels Ende-zu-Ende-Verschlüsselung gesicherte Verbindung. Ferner kann die Übertragung der Anfrage mittels einer geeigneten Transportverschlüsselung gesichert werden, wie beispielsweise HTTPS. Beispielsweise anhand der Anfrage wird die Schule authentifiziert. Bei einer Anfrage auf elektronischem Weg kann diese beispielsweise mit einem Siegel, d.h. einem der Schule zugeordneten privaten kryptographischen Signaturschlüssel, signiert sein. Auf die Anfrage hin sendet die autorisierende Verwaltungsinstanz der Schule das Autorisierungspasswort zu. Beispielsweise erfolgt das Zusenden per Post. Dies kann als zusätzliche Sicherheitsmaßnahme dienen, da die Postanschrift der Schule öffentlich bekannt ist und sich im Allgemeinen nur bei einem Umzug der Schule ändert. Somit kann mit hoher Sicherheit angenommen werden, dass der Empfänger des per Post versendeten Autorisierungspassworts auch tatsächlich die Schule ist, selbst wenn die zugrundeliegende Anfrage beispielsweise von einem unberechtigten Dritten stammt, welcher die Identität der Schule vorgetäuscht hat. Alternativ kann das Autorisierungspasswort auf elektronischem Wege über eine wie oben beschriebene kryptographisch gesicherte Kommunikationsverbindung gesendet werden.

Bei dem Autorisierungspasswort kann es sich beispielsweise um eine "One-Time-Password" oder "OTP" handeln. Unter einem OTP wird hier ein Einmal-Passwort, welches nur für eine einmalige Verwendung gültig sein soll.

Nach Ausführungsformen umfasst die Autorisierungsanfrage zudem eine Aussteller-ID. Die Aussteller-ID wird bei einer erfolgreichen Prüfung des Autorisierungspassworts zusammen mit dem öffentlichen kryptographischen Schlüssel in den zweiten Block der Blockchain eingetragen. Ausführungsformen können den Vorteil haben, dass aus der Blockchain die Identität des Ausstellers bestimmt werden kann. Alternativ kann der öffentliche kryptographische Schlüssel oder eine aus dem öffentlichen kryptographischen Schlüssel abgeleitete Blockchain-Adresse als Aussteller-ID verwendet werden.

Eine ID ist ein Identifikator, auch als Kennung bezeichnet, welcher ein mit einer bestimmten Identität verknüpftes Merkmal zur eindeutigen Identifizierung einer Person oder eines Objekts umfasst, beispielsweise des Ausstellers der digitalen Dokumente, dem der Identifikator zugeordnet ist. Ein Identifikator kann beispielsweise Zahlen, Buchstaben, Sonderzeichen sowie Kombinationen aus diesen umfassen. Beispielsweise kann die Aussteller-ID den Namen des Ausstellers umfassen.

Nach Ausführungsformen umfasst das Prüfen des Autorisierungspassworts:
- Vergleichen des empfangenen Autorisierungspassworts durch den ersten Blockchain-Server mit einem in der Blockchain gespeicherten Autorisierungspassworts,
- im Falle einer Übereinstimmung des empfangenen Autorisierungspassworts mit dem gespeicherten Autorisierungspasswort, bestätigen der Gültigkeit des empfangenen Autorisierungspassworts durch den ersten Blockchain-Server.

Ausführungsformen können den Vorteil haben, dass ein effizientes Verfahren zum Bestimmen der Gültigkeit eines von einem Aussteller zur Autorisierung vorgelegten Autorisierungspassworts bereitgestellt wird. Nach Ausführungsformen wir das in der Blockchain gespeicherte Autorisierungspassworts durch ein Verwaltungscomputersystem einer autorisierenden Verwaltungsinstanz erzeugt und in der Blockchain abgespeichert.

Nach Ausführungsformen wird im Falle einer Übereinstimmung des empfangenen Autorisierungspassworts mit dem gespeicherten Autorisierungspasswort ein Vermerk in einem Eintrag der Blockchain gespeichert, welcher angibt, dass das entsprechende gespeicherte Autorisierungspasswort verbraucht ist. Somit kann sichergestellt werden, dass keine weitere Autorisierung unter Verwendung desselben Autorisierungspassworts mehr möglich ist. Mithin kann so ein Einmalpasswort implementiert werden.

Nach Ausführungsformen wird das Autorisierungspasswort in Form eines in der Blockchain signierten gespeicherten zweiten Hashwerts bereitgestellt. Das Vergleichen des empfangenen Autorisierungspassworts mit dem gespeicherten Autorisierungspasswort umfasst:
- Prüfen der Gültigkeit der Signatur des gespeicherten zweiten Hashwerts,
- Berechnen eines dritten Hashwerts des empfangenen Autorisierungspassworts,
- Vergleichen des berechneten dritten Hashwerts mit dem gespeicherten zweiten Hashwert.

Ausführungsformen können den Vorteil haben, dass das Autorisierungspasswort sich nicht aus dem zweiten Hashwert ableiten lässt. Somit kann das Autorisierungspasswort geheim gehalten werden, selbst wenn die Einträge der Blockchain und insbesondere der zweite Hashwert öffentlich zugänglich sind. Ferner kann anhand der Signatur geprüft werden, ob das Autorisierungspasswort von einer dazu berechtigten Instanz bereitgestellt wird.

Nach Ausführungsformen umfasst das Autorisieren ferner:
- Senden einer Passwortanfrage zum Erhalten des Autorisierungspassworts durch das Ausstellercomputersystem an das Verwaltungscomputersystem der autorisierenden Verwaltungsinstanz, wobei die Passwortanfrage den Aussteller identifiziert,
wobei das Verfahren durch die autorisierende Verwaltungsinstanz unter Verwendung des Verwaltungscomputersystems ferner umfasst:
- Empfangen der Passwortanfrage,
- Identifizieren einer dem Aussteller zugeordneten Postanschrift,
- Erstellen eines an die identifizierte Postanschrift adressierten Antwortschreibens, welches das Autorisierungspasswort umfasst,
- Senden des Antwortschreibens per Post.

Ausführungsformen können den Vorteil haben, dass ein effizientes und sicheres Verfahren zum Bereitstellen des Autorisierungspasswortes und somit zur Autorisierung von Ausstellern implementiert wird. Nach Ausführungsformen umfasst das Verfahren ferner eine Gültigkeitsprüfung der Anfrage. Beispielsweise wird geprüft, ob die Anfrage von einer Institution, wie etwa einer Universität oder einer Schule, stammt, welche tatsächlich zum Ausstellen von entsprechenden Dokumenten, wie etwa Zeugnissen, berechtigt ist.

Nach Ausführungsformen umfasst das Autorisieren ferner:
- Senden einer Passwortanfrage zum Erhalten des Autorisierungspassworts durch das Ausstellercomputersystem an das Verwaltungscomputersystem der autorisierenden Verwaltungsinstanz, wobei die Passwortanfrage den Aussteller identifiziert,
wobei das Verfahren durch die autorisierende Verwaltungsinstanz unter Verwendung des Verwaltungscomputersystems ferner umfasst:
- Empfangen der Passwortanfrage,
- Erstellen einer Antwort auf die Passwortanfrage, welche das Autorisierungspasswort umfasst,
- Senden der Antwort in kryptographisch gesicherter Form an das Ausstellercomputersystem des Ausstellers.

Ausführungsformen können den Vorteil haben, dass ein effizientes und sicheres Verfahren zum Bereitstellen des Autorisierungspassworts und somit zur Autorisierung von Ausstellern implementiert wird. Nach Ausführungsformen umfasst das Verfahren ferner eine Gültigkeitsprüfung der Anfrage. Beispielsweise wird geprüft, ob die Anfrage von einer Institution, wie etwa einer Universität oder einer Schule, stammt, welche tatsächlich zum Ausstellen von entsprechenden Dokumenten, wie etwa Zeugnissen, berechtigt ist.

Nach Ausführungsformen umfasst das Verfahren für ein Autorisieren des Ausstellercomputersystems ferner ein Bereitstellen des Autorisierungspassworts des Ausstellercomputersystems umfasst, wobei das Bereitstellen des Autorisierungspassworts umfasst:
- Berechnen eines zweiten Hashwerts des Autorisierungspassworts durch das Verwaltungscomputersystem,
- Signieren des zweiten Hashwerts mit einem dritten privaten kryptographischen Schlüssel eines dritten zugeordneten asymmetrischen Schlüsselpaars der autorisierenden Verwaltungsinstanz,
- Erstellen einer Bereitstellungsanfrage durch das Verwaltungscomputersystem, wobei die Bereitstellungsanfrage den Smart Contract identifiziert und den signierten zweiten Hashwert umfasst,
- Senden der Bereitstellungsanfrage durch das Verwaltungscomputersystem an einen dritten Blockchain-Server, welcher dazu konfiguriert ist, Blöcke der Blockchain zu erzeugen,
- Empfangen der Bereitstellungsanfrage durch den dritten Blockchain-Server,
- Ausführen dritter Programminstruktionen des durch die Bereitstellungsanfrage identifizierten Smart Contracts durch den dritten Blockchain-Server, wobei das Ausführen der dritten Programminstruktionen ein Prüfen der Signatur des zweiten Hashwerts durch den dritten Blockchain-Server unter Verwendung eines dritten öffentlichen kryptographischen Schlüssels des asymmetrischen Schlüsselpaars der autorisierenden Verwaltungsinstanz umfasst, und, im Falle einer gültigen Signatur, Erzeugen eines dritten zusätzlichen Blocks der Blockchain durch den dritten Blockchain-Server, wobei der erzeugte dritte Block einen dritten Eintrag mit dem signierten zweiten Hashwert umfasst.

Ausführungsformen können den Vorteil haben, dass ein effizientes und sicheres Verfahren zum Autorisieren eines oder mehrerer Aussteller durch ein Bereitstellen eines oder mehrerer zweiter Hashwerte für ein oder mehrerer Autorisierungspasswörter bereitgestellt wird.

Nach Ausführungsformen ist der öffentliche kryptographische Schlüssel der autorisierenden Verwaltungsinstanz in der Blockchain gespeichert und der dritte Blockchain-Server verwendet zum Prüfen der Signatur des zweiten Hashwerts den in der Blockchain gespeicherten öffentlichen kryptographischen Schlüssel des ersten Verwaltungscomputersystems. Ausführungsformen können den Vorteil haben, dass der öffentliche kryptographische Schlüssel zum Prüfen der Gültigkeit der Signatur des zweiten Hashwerts durch die Blockchain bereitgestellt und somit eine effiziente Prüfung ermöglicht wird.

Nach Ausführungsformen ist eine ID der autorisierenden Verwaltungsinstanz zusammen mit dem öffentlichen kryptographischen Schlüssel der autorisierenden Verwaltungsinstanz in der Blockchain gespeichert. Ausführungsformen können den Vorteil haben, dass aus der Blockchain die Identität der autorisierenden Verwaltungsinstanz bestimmt werden kann.

Nach Ausführungsformen handelt es sich bei dem Verwaltungscomputersystem um den Signaturserver.

Nach Ausführungsformen umfasst ein Prüfen einer Authentizität des digitalen Dokuments durch ein Prüfcomputersystems:
- Berechnen des Hashwerts des empfangenen digitalen Dokuments durch das Prüfcomputersystem,
- Abfrage der Blockchain nach einem Eintrag mit dem errechneten Hashwert des empfangenen digitalen Dokuments durch das Prüfcomputersystem, wobei eine Existenz eines Eintrags in der Blockchain mit dem errechneten Hashwert des empfangenen digitalen Dokuments eine Voraussetzung für eine Bestätigung der Authentizität des empfangenen digitalen Dokuments durch das Prüfcomputersystem ist.

Ausführungsformen können den Vorteil haben, dass durch das Prüfcomputersystem, bei welchem es sich beispielsweise um einen Prüfserver handelt, eine effektive Prüfung des digitalen Dokuments ermöglicht wird. Beispielsweise stellt das Prüfcomputersystem eine Webseite bereit, über welche das digitale Dokument zur Prüfung analysiert werden kann und auf welcher das Ergebnis der Prüfung angezeigt wird.

Ausführungsformen können den Vorteil haben, dass das digitale Dokument effizient auf dessen Authentizität geprüft werden kann. Bei dem Prüfcomputersystem kann es sich beispielsweise auch um das Nutzercomputersystem des Inhabers des Dokuments handeln oder um ein anderes Computersystem, welchem das Dokument beispielsweise von dem Nutzercomputersystem des Inhabers des Dokuments vorgelegt wird.

Ausführungsformen können den Vorteil haben, dass ein Verfahren bereitgestellt wird, welches zuverlässig eine Echtheitsprüfung digitaler Dokumente und/oder der von diesen umfassten Dokumentendaten durch jeden ermöglichen, dem das entsprechende digitale Dokument vorliegt. Stimmt der Hashwert des digitalen Dokuments mit einem in der Blockchain hinterlegten Hashwert überein, so folgt daraus, dass es sich bei dem digitalen Dokument um ein authentisches Dokument handelt. Insbesondere wird hierdurch auch eine maschinenbasierte austomatisierte Prüfung der Dokumentendaten ermöglicht.

Nach Ausführungsformen umfasst ein Prüfen der Authentizität des digitalen Dokuments durch ein Prüfcomputersystems:
- Prüfen der ersten und/oder zweiten Signatur des empfangenen digitalen Dokuments unter Verwendung der PKI für das zweite asymmetrische Schlüsselpaar des Signaturservers, wobei eine erfolgreiche Prüfung der ersten und/oder zweiten Signatur eine Voraussetzung für eine Bestätigung der Authentizität des empfangenen digitalen Dokuments durch das Prüfcomputersystem ist.

Ausführungsformen können den Vorteil haben, dass ein Verfahren bereitgestellt wird, welches zuverlässig eine Echtheitsprüfung digitaler Dokumente und/oder der von diesen umfassten Dokumentendaten durch jeden ermöglichen, dem das entsprechende digitale Dokument vorliegt. Ist die Signatur des Dokuments bzw. der Dokumentendaten gültig, so folgt daraus, dass es sich bei dem digitalen Dokument um ein authentisches Dokument handelt. Insbesondere wird hierdurch auch eine maschinenbasierte austomatisierte Prüfung der Dokumentendaten ermöglicht.

Nach Ausführungsformen umfasst das Verfahren ferner im Falle eines Erfüllens aller Voraussetzung für eine Bestätigung der Authentizität des empfangenen digitalen Dokuments, Bestätigen der Authentizität des empfangenen digitalen Dokuments durch das Prüfcomputersystem.

Ausführungsformen umfassen ferner ein Ausstellercomputersystem zum Ausstellen eines digitalen Dokuments. Das Ausstellercomputersystem umfasst einen Prozessor, eine Kommunikationsschnittstelle zur Kommunikation über ein Netzwerk und einen Speicher. In dem Speicher sind Programminstruktionen des Ausstellercomputersystems gespeichert. In einem geschützten Speicherbereich des Speichers ist ein erster privater kryptographischer Schlüssel eines ersten asymmetrischen Schlüsselpaars des Ausstellercomputersystems gespeichert. Das digitale Dokument wird unter Verwendung einer Blockchain ausgestellt, der Blockchain ein Smart Contract mit ersten Programminstruktionen zugeordnet ist. Durch Ausführen der ersten Programminstruktionen werden dem Smart Contract zugeordnete Einträge in der Blockchain erzeugt.

Ein Ausführen der Programminstruktionen des Ausstellercomputersystems durch den Prozessor steuert das Ausstellercomputersystem ein Verfahren auszuführen, welches umfasst:
- Erstellen eines ersten Datensatzes mit Dokumentendaten für das digitale Dokument in einem maschinenlesbaren Format durch das Ausstellercomputersystem,
- Senden des ersten Datensatzes durch das Ausstellercomputersystem unter Verwendung der Kommunikationsschnittstelle über ein Netzwerk an einen zentralen Signaturserver eines Signierers des digitalen Dokuments,
- Empfangen eines ersten Hashwert des digitalen Dokuments von dem Signaturserver über das Netzwerk durch das Ausstellercomputersystem unter Verwendung der Kommunikationsschnittstelle, wobei das digitale Dokument den ersten Datensatz umfasst, welcher mit einer ersten unter Verwendung eines über eine PKI abgesicherten Signaturschlüssels des Signaturservers erstellten Signatur signiert ist, wobei das digitale Dokument ferner einen zweiten Datensatz mit den Dokumentendaten in einem Format einer Seitenbeschreibungssprache umfasst, wobei der zweite Datensatz mit einer zweiten unter Verwendung des Signaturschlüssels erstellten Signatur signiert ist,

- Erstellen einer mit dem privaten kryptographischen Schlüssel des Ausstellers signierten Eintragungsanfrage durch das Ausstellercomputersystem, wobei die Eintragungsanfrage den Smart Contract identifiziert und das ersten Hashwert des digitalen Dokuments umfasst,
- Senden der signierten Eintragungsanfrage durch das Ausstellercomputersystem unter Verwendung der Kommunikationsschnittstelle über das Netzwerk an einen ersten Blockchain-Server zum Eintragen des einen ersten Hashwerts des digitalen Dokuments in die Blockchain unter Verwendung des Smart Contracts,
- auf das Eintragen des ersten Hashwerts in die Blockchain hin, Empfangen des digitalen Dokuments von dem Signaturserver über das Netzwerk durch das Ausstellercomputersystem unter Verwendung der Kommunikationsschnittstelle.

Nach Ausführungsformen ist das Ausstellercomputersystem dazu konfiguriert jeden der Verfahrensschritte des Ausstellercomputersystems nach einer der zuvor beschriebenen Ausführungsform des Verfahrens zum Ausstellen des digitalen Dokuments auszuführen.

Ausführungsformen umfassen ferner einen Signaturserver zum Signieren eines digitalen Dokuments. Der Signaturserver umfasst einen Prozessor, eine Kommunikationsschnittstelle zur Kommunikation über ein Netzwerk und einen Speicher. In dem Speicher sind Programminstruktionen des Signaturservers gespeichert. In einem geschützten Speicherbereich des Speichers ist als Signaturschlüssel ein zweiter privater kryptographischer Schlüssel eines zweiten asymmetrischen Schlüsselpaars des Signaturservers gespeichert.

Ein Ausführen der Programminstruktionen des Signaturservers durch den Prozessor führt auf dem Signaturserver ein Verfahren aus, welches umfasst:
- Empfangen eines ersten Datensatzes mit Dokumentendaten für das digitale Dokument in einem maschinenlesbaren Format durch den Signaturserver unter Verwendung der Kommunikationsschnittstelle über ein Netzwerk von einem Ausstellercomputersystem eines Ausstellers des digitalen Dokuments,
- Erstellen einer ersten und einer zweiten Signatur des digitalen Dokuments durch den Signaturserver unter Verwendung des über die PKI abgesicherten Signaturschlüssels, wobei der erste Datensatz des digitalen Dokuments mit der ersten Signatur signiert wird, wobei ein zweiter Datensatz des digitalen Dokuments mit den Dokumentendaten in einem Format einer Seitenbeschreibungssprache das digitale Dokument mit der zweiten Signatur signiert wird,
- Berechnen eines ersten Hashwerts des digitalen Dokuments,
- Senden des ersten Hashwerts durch den Signaturserver unter Verwendung der Kommunikationsschnittstelle über das Netzwerk an das Ausstellercomputersystem zur Eintragung in die Blockchain,
- auf das Eintragen des ersten Hashwerts in die Blockchain hin, Senden des digitalen Dokuments durch den Signaturserver unter Verwendung der Kommunikationsschnittstelle über das Netzwerk an das Ausstellercomputersystem.

Nach Ausführungsformen ist der Signaturserver dazu konfiguriert jeden der Verfahrensschritte des Signaturservers nach einer der zuvor beschriebenen Ausführungsform des Verfahrens zum Ausstellen des digitalen Dokuments auszuführen.

Nach Ausführungsformen empfängt der Signaturserver den zweiten Datensatz zusammen mit dem ersten Datensatz von dem Ausstellercomputersystem oder ein Ausführen der Programminstruktionen des Signaturservers durch den Prozessor steuert den Signaturserver ferner zum Erstellen des zweiten Datensatzes unter Verwendung des empfangenen ersten Datensatzes.

Nach Ausführungsformen signiert die zweite Signatur den zweiten Datensatz zusammen mit dem signierten ersten Datensatz.

Ausführungsformen umfassen ferner ein System zum Ausstellen eines digitalen Dokuments. Das System umfasst ein Ausstellercomputersystem nach einer der zuvor beschriebenen Ausführungsformen, welches zum Ausführen der Verfahrensschritte des Ausstellercomputersystems nach einer der zuvor beschriebenen Ausführungsform des Verfahrens zum Ausstellen des digitalen Dokuments konfiguriert ist, und einen Signaturserver nach einer der zuvor beschriebenen Ausführungsformen umfasst, welcher zum Ausführen der Verfahrensschritte des Signaturservers nach einer der zuvor beschriebenen Ausführungsform des Verfahrens zum Ausstellen des digitalen Dokuments konfiguriert ist.

Nach Ausführungsformen umfasst das System ferner ein oder mehrere Blockchain-Server, welche zum Ausführen der Verfahrensschritte der ein oder mehreren Blockchain-Server nach einer der zuvor beschriebenen Ausführungsform des Verfahrens konfiguriert sind.

Nach Ausführungsformen umfasst das System ferner ein einer autorisierenden Verwaltungsinstanz zugeordnetes Verwaltungscomputersystem, welches zum Ausführen der Verfahrensschritte des Verwaltungscomputersystems nach einer der zuvor beschriebenen Ausführungsform des Verfahrens konfiguriert ist. Nach Ausführungsformen bietet das System der Verwaltungsinstanz Zugriff auf einen Service mit dem die Verwaltungsinstanz untergeordnete Instanzen autorisieren kann. Diese Autorisierung wird mit dem privaten Schlüssel der Verwaltungsinstanz signiert.

Nach Ausführungsformen umfasst das System ferner ein Prüfcomputersystem, welches zum Ausführen der Verfahrensschritte nach einer der zuvor beschriebenen Ausführungsform des Verfahrens konfiguriert ist.

Die Verwendung von Ordinalzahlen wie erstes, zweites, drittes etc. dient hier, soweit sich aus dem konkreten Zusammenhang nicht eindeutig etwas anderes ergibt, allein der Unterscheidung voneinander verschiedener Elemente und soll keine bestimmte Reihenfolge implizieren.

Bei den zuvor genannten Blockchain-Servern, d.h. den ersten bis dritten Blockchain-Servern, kann es sich nach Ausführungsformen bei allen oder einem Teil davon um ein und denselben oder verschiedene Blockchain-Server handeln.

Im Weiteren werden Ausführungsformen der Erfindung mit Bezugnahme auf die Zeichnungen näher erläutert. Es zeigen:
- Figuren 1: schematisches Blockdiagramm einer Ausführungsform eines exemplarischen Systems zum Ausstellen eines digitalen Dokuments,
- Figuren 2: schematische Blockdiagramme von Ausführungsformen exemplarischer digitaler Dokumente,
- Figur 3: schematisches Blockdiagramm einer Ausführungsform eines exemplarischen Systems zum Ausstellen eines digitalen Dokuments,
- Figur 4: schematisches Blockdiagramm einer Ausführungsform eines exemplarischen Systems zum Ausstellen eines digitalen Dokuments,
- Figur 5: schematisches Blockdiagramm einer Ausführungsform eines exemplarischen Systems zum Prüfen eines digitalen Dokuments,
- Figur 6: schematisches Blockdiagramm einer Ausführungsform von exemplarischen Blockchain-Einträgen zum Ausstellen eines digitalen Dokuments,
- Figur 7: ein schematisches UML-Diagramm einer Ausführungsform eines exemplarischen Verfahrens zum Ausstellen eines digitalen Dokuments,
- Figur 8: ein schematisches Flussdiagramm einer Ausführungsform eines exemplarischen Verfahrens zum Ausstellen eines digitalen Dokuments,
- Figur 9: ein schematisches Flussdiagramm einer Ausführungsform eines exemplarischen Verfahrens zum Bereitstellen eines digitalen Dokuments,
- Figur 10: ein schematisches Flussdiagramm einer Ausführungsform eines exemplarischen Verfahrens zum Speichern eines digitalen Dokuments,
- Figur 11: ein schematisches Flussdiagramm einer Ausführungsform eines exemplarischen Verfahrens zum Autorisieren eines Ausstellers eines digitalen Dokuments,
- Figur 12: ein schematisches Flussdiagramm einer weiteren Ausführungsform eines exemplarischen Verfahrens zum Autorisieren eines Ausstellers eines digitalen Dokuments,
- Figur 13: ein schematisches Flussdiagramm einer Ausführungsform eines exemplarischen Verfahrens zum Bereitstellen eines Autorisierungspassworts,
- Figur 14: ein schematisches Flussdiagramm einer Ausführungsform eines exemplarischen Verfahrens zur Prüfung eines digitalen Dokuments, und
- Figur 15: ein schematisches Flussdiagramm einer Ausführungsform eines exemplarischen Verfahrens zum Signieren eines digitalen Dokuments.

Elemente der nachfolgenden Ausführungsformen, die einander entsprechen, werden mit denselben Bezugszeichen gekennzeichnet.

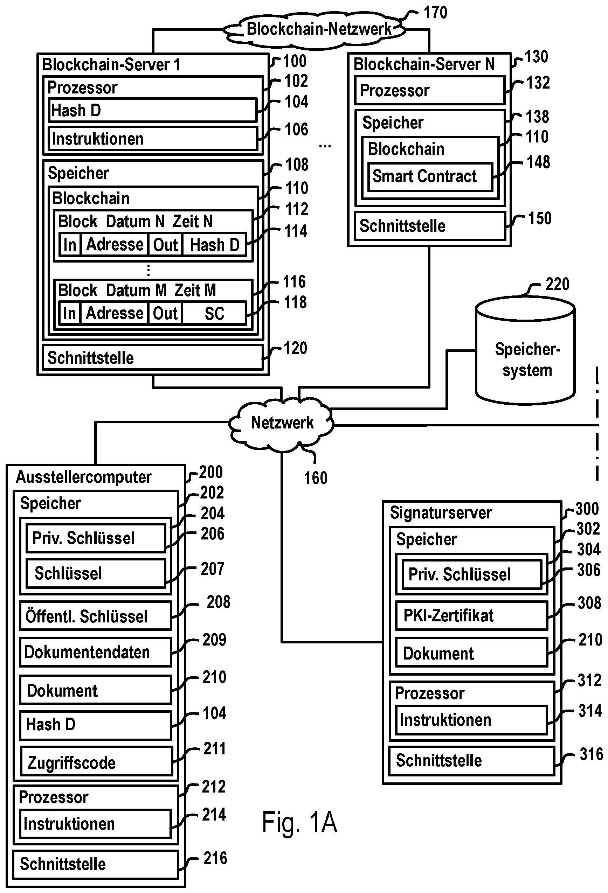

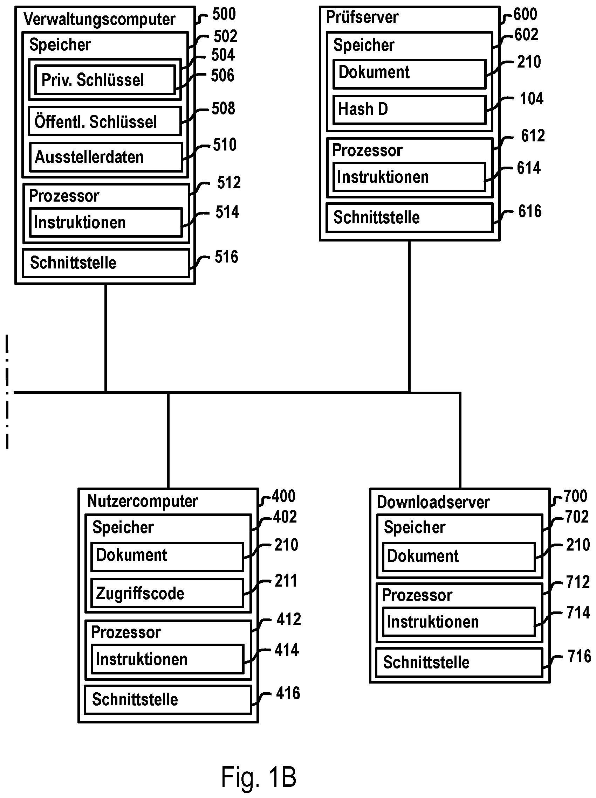

Figuren 1A und 1B zeigen ein Blockdiagramm einer ersten Ausführungsform eines exemplarischen Systems zum Ausstellen eines digitalen Dokuments 210. Bei dem digitalen Dokument 210 handelt es sich beispielsweise um ein digitales Zeugnis und bei dem Aussteller des digitalen Dokuments 210 beispielsweise um eine Schule oder Hochschule. Beispielsweise erstellt ein Ausstellercomputersystem 200 des Ausstellers bei Ausführen von Programminstruktionen 214 einen ersten Datensatz mit Dokumentendaten 209 für das digitale Dokument 210 in einem maschinenlesbaren Format. Diese Dokumentendaten 209 können in einem Speicher 202 des Ausstellercomputersystem 200 gespeichert werden. Die Programminstruktionen 214 werden von einem Prozessor 212 des Ausstellercomputersystems 200 ausgeführt. Ferner umfasst der Speicher 202 des Ausstellercomputersystems 200 einen geschützten Speicherbereich 204 mit privaten kryptographischen Schlüssel 206 eines asymmetrischen Schlüsselpaars. Der private kryptographische Schlüssel 206 wird zum Signieren von Eintragungsanfragen zum Eintragen eines Hashwerts 104 des Dokuments 210 in die Blockchain 110 signiert. Beispielsweise ist das asymmetrischen Schlüsselpaar einer Blockchain-Adresse des Ausstellers zugeordnet. Beispielsweise ist die Blockchain-Adresse des Ausstellers aus einem öffentlichen kryptographischen Schlüssel 208 des asymmetrischen Schlüsselpaars abgeleitet, welcher ebenfalls Speicher 202 gespeichert ist. Eine Signatur mit dem privaten kryptographischen Schlüssel 206 dient beispielsweise einem Berechtigungsweis des Ausstellercomputers 200 zum Initiieren eines Eintrags in der Blockchain, beispielsweise von der Blockchain-Adresse des Ausstellers. Ferner umfasst das Ausstellercomputersystem 200 eine Kommunikationsschnittstelle zur Kommunikation über das Netzwerk 160. Bei dem Netzwerk 160 handelt es sich beispielsweise um das Internet. Die Kommunikation über das Netzwerk 160 kann zusätzlich oder alternativ zu einer Signatur mit einem privaten kryptographischen Schlüssel des Senders beispielsweise kryptographisch abgesichert werden durch eine Verschlüsselung der übertragenen Daten mit einem symmetrischen kryptographischen Schlüssel und/oder einem dem Empfänger zugeordneten öffentlichen kryptographischen Schlüssel. Beispielsweise wird ein symmetrischer Schlüssel verwendet, der unter Verwendung der Pseudozufallszahl errechnet wird. Die Verteilung des symmetrischen kryptographischen Schlüssels kann beispielsweise in Form eines hybriden Verschlüsselungsschemas unter Verwendung eines asymmetrischen Schlüsselpaars gesichert werden. Eine hybride Verschlüsselung umfasst eine Kombination aus asymmetrischer Verschlüsselung und symmetrischer Verschlüsselung. Dabei wählt der Sender einen zufälligen symmetrischen Schlüssel, beispielsweise eine Pseudozufallszahl, Session-Key genannt, aus. Mit diesem Session-Key werden die zu schützenden Daten symmetrisch verschlüsselt. Der Session-Key wird mit dem öffentlichen Schlüssel des Empfängers asymmetrisch verschlüsselt. Dieses Vorgehen kann den Vorteil einer sicheren Schlüsselverteilung unter Verwendung asymmetrischer Schlüssel mit dem Geschwindigkeitsvorteil einer symmetrischen Verschlüsselung kombinieren. Nach Ausführungsformen erfolgt eine Übertragung über einen mittels Ende-zu-Ende-Verschlüsselung gesicherte Verbindung. Ferner kann die Übertragung beispielsweise mittels einer geeigneten Transportverschlüsselung gesichert werden, wie etwa HTTPS.

Ausführen der Programminstruktionen 214 durch den Prozessor 212 veranlasst das Ausstellercomputersystem 200 beispielsweise eine Signaturanfrage mit dem ersten Datensatz mit den Dokumentendaten 209 in dem maschinenlesbaren Format an einen Signaturserver 300 zu senden. In Antwort auf das Senden der Signaturanfrage empfängt das Ausstellercomputersystem 200 beispielsweise einen Hashwert 104 des von dem Signaturserver 300 digitalen Dokuments 210. Das digitale Dokument 210 umfasst neben dem unter Verwendung eines Signaturschlüssels 306 des Signaturservers 300 signierten ersten Datensatz einen zweiten Datensatz mit den Dokumentendaten in einem Format einer Seitenbeschreibungssprache. Dieser zweite Datensatz ist mit einer zweiten unter Verwendung des Signaturschlüssels 306 erstellten Signatur signiert. Der zweite Datensatz kann beispielsweise von dem Ausstellercomputersystem 200 erstellt und zusammen mit dem ersten Datensatz zum Signieren an den Signaturservers 300 gesendet werden. Alternativ kann der zweite Datensatz auf Empfang der Signaturanfrage hin von dem Signaturserver 300 unter Verwendung des ersten Datensatzes erstellt werden. Hierzu umfasst der Signaturserver 300 beispielsweise ein Layout-Schema, welches das Layout von Dokumenten des Ausstellers definiert. Auf eine Eintragung des Hashwerts 104 in die Blockchain 110 empfängt das Ausstellercomputersystem 200 ferner das digitale Dokument 210 mit den beiden Signaturen des Signaturservers 300 von dem Signaturserver 300.

Ferner kann das Ausstellercomputersystem 200 beispielsweise einen Zugriffscode 211 zum Freigeben eines Zugriffs auf das digitalen Dokument 210 über einen Downloadserver 700 umfassen. Der Zugriffscode 211 kann eine Zufallszahl umfassen. Ferner kann dem Zugriffscode 211 zusätzlich eine Gültigkeitsperiode und/oder eine maximale Nutzungsanzahl als Berechtigungsnachweis des Nutzers zum Herunterladen des digitalen Dokuments 210 von dem Downloadserver 700 zugeordnet sein. Der Zugriffscode 211 wird beispielsweise von dem Ausstellercomputersystem 200 erzeugt oder von dem Downloadserver 700 und dem Ausstellercomputersystem 200 über das Netzwerk 160 zur Verfügung gestellt. Das Ausstellercomputersystem 200 kann den Zugriffscode 211 einem Nutzercomputersystem, beispielsweise auf Anfrage, über das Netzwerk 160 zur Verfügung stellen.

Schließlich kann das Ausstellercomputersystem 200, beispielsweise in dem geschützten Speicherbereich 204, einen kryptographischen Schlüssel 207, beispielsweise einen symmetrischen kryptographischen Schlüssel, zum Verschlüsseln des digitale Dokuments 210 umfassen. Das verschlüsselte digitale Dokument 210 kann beispielsweise in einem Speichersystem 220 gespeichert werden, welches einen permanenten Speicher zum Speichern digitaler Dokumente bereitstellt. Das Speichersystem 220 kann von dem Ausstellercomputersystem 200 umfasst sein oder über das Netzwerk 160 für das Ausstellercomputersystem 200 unter Verwendung der Kommunikationsschnittstelle 216 zugänglich sein.

Das Ausstellercomputersystem 200 sendet den Hashwert 104 des digitalen Dokuments 210 über das Netzwerk 160 an einen der Blockchain-Server 100, 130 des Blockchain-Netzwerks 170. Zur Berechnung des Hashwerts kann das Ausstellercomputersystem 200 beispielsweise auf einen eignen Hash-Algorithmus zurückgreifen, welchen die Programminstruktionen 214 umfassen. Nach Ausführungsformen umfasst das Blockchain-Netzwerks 170 einen Blockchain-Server 100, nach weiteren Ausführungsformen umfasst das Blockchain-Netzwerks 170 eine Mehrzahl von Blockchain-Servern 100, 130. Nach Ausführungsformen umfasst das Netzwerks 160 das Blockchain-Netzwerks 170.

Der Blockchain-Server 100 umfasst in seinem Speicher 108 die Blockchain 110. Die Blockchain 110 umfasst eine Mehrzahl von Blöcken 112, 116. Nach Ausführungsformen umfassen die Blöcke 112, 116 jeweils eine Zeitangabe, welche den Zeitpunkt der Erstellung des entsprechenden Blocks 112, 116 angibt. Beispielsweise umfasst die Zeitangabe ein Datum und eine Uhrzeit. Nach Ausführungsformen umfassen die Blöcke 112, 116 jeweils einen oder mehrere Einträge 114, 118. Die Einträge 114, 118 umfassen beispielsweise jeweils eine Blockchain-Adresse, welche den Eintrag in der Blockchain identifiziert. Die Einträge 114, 118 können ferner beispielsweise als Transaktionen aufgebaut sein und jeweils eine Ausgangsadresse In und eine Zieladresse Out der entsprechenden Transaktion spezifizieren. Der Eintrag 118 kann ferner einen Smart Contract SC 148 mit Programminstruktionen umfassen. Durch Ausführen dieser Programminstruktionen des Smart Contract werden dem Programmmodul 148 zugeordnete Einträge 114 in der Blockchain 110 erstellt oder entsprechende Einträge 114 aufgerufen und ausgewertet. Der Smart Contract 148 kann nach Ausführungsformen auch über mehrere Einträge 118 verteilt gespeichert sein und/oder zusätzlich zur Blockchain bereitgestellt werden, wobei ein Hashwert des Smart Contracts 148 in dem Block 108 gespeichert ist. Durch ein Ausführen der Programminstruktionen des Smart Contracts 148 durch den Prozessor 102 wird beispielsweise der Hash 104 des Zeugnisses 210 in dem Eintrag 114 der Blockchain 110 gespeichert. Durch ein Ausführen der Programminstruktionen kann ferner das Ausstellercomputersystem 200 durch ein Verwaltungscomputersystem 600 einer Verwaltungsinstanz, wie etwa einer Schulbehörde oder eines Verbands, in der Blockchain autorisiert werden. Eine Autorisierung umfasst beispielsweise eine Erstellung eines Eintrags in der Blockchain mit einem öffentlichen kryptographischen Schlüssel eines asymmetrischen Schlüsselpaars, welches dem entsprechenden Computersystem 200 zugeordnet ist. Ferner können durch ein Ausführen der Programminstruktionen beispielsweise Autorisierungspasswörter für die entsprechenden Autorisierungen in der Blockchain hinterlegt werden. Schließlich kann die Authentizität eines digitalen Dokuments 210 durch Vergleich eines für das Dokument 210 berechneten Hashwerts mit dem in der Blockchain hinterlegten Hashwert 104 geprüft werden. Im Falle einer Übereinstimmung ist das Zeugnis 210 beispielsweise authentisch.

Der Blockchain-Server 100 umfasst ferner Programminstruktionen 106, welche beispielsweise die Kommunikation mittels einer Kommunikationsschnittstelle 120 über das Netzwerk 160 und/oder das Blockchain-Netzwerk 170 steuern. Ferner steuern die Programminstruktionen 106 beispielsweise das Speichern und Aufrufen der Blockchain 110. Ferner umfasst der Blockchain-Server 100 beispielsweise ein asymmetrisches Schlüsselpaar und/oder einen symmetrischen Schlüssel (nicht gezeigt) zum Signieren von Daten und/oder Verschlüsseln von Daten.

Die weiteren Blockchain-Server 130 des Blockchain-Netzwerks 170 umfassen ebenfalls Prozessoren 132, Speicher 138 mit der Blockchain und dem Programmmodul 148 sowie Kommunikationsschnittstellen 150. Ferner umfassen die Blockchain-Server 130 beispielsweise jeweils ein asymmetrisches Schlüsselpaar und/oder einen symmetrischen Schlüssel (nicht gezeigt) zum Signieren von Daten und/oder Verschlüsseln von Daten.

Der Signaturserver 300 umfasst einen privaten kryptographischen Schlüssel 306 eines asymmetrischen Schlüsselpaars, welcher in einem geschützten Speicherbereich de 304 eines Speichers 302 des Signaturserver 300 gespeichert ist. Dieser privaten kryptographischen Schlüssel 306 dient als Signaturschlüssel zum Erstellen des signierten digitalen Dokuments 210. Ferner umfasst der Signaturserver 300 beispielsweise ein PKI-Zertifikat 308 mit einem öffentlichen kryptographischen Schlüssel des asymmetrischen Schlüsselpaars des Signaturservers 300. Über das PKI-Zertifikat 308 ist der öffentlichen kryptographischen Schlüssel und damit das asymmetrische Schlüsselpaar des Signaturservers 300 mittels einer PKI abgesichert. Zur Kommunikation über das Netzwerk 160 umfasst der Signaturserver 300 eine Kommunikationsschnittstelle 316. Ferner umfasst der Signaturserver 300 beispielsweise ein asymmetrisches Schlüsselpaar und/oder einen symmetrischen Schlüssel (nicht gezeigt) zum Verschlüsseln von Daten. Ein Prozessor 312 des Computersystems 300 ist beispielsweise dazu konfiguriert Programminstruktionen 314 auszuführen. Ein Ausführen der Programminstruktionen 314 steuert beispielsweise ein Empfangen und Verarbeiten von Daten von dem Ausstellercomputersystem 200. Der Signaturserver 300 empfängt von dem Ausstellercomputersystem 200 zumindest einen ersten Datensatz mit den Dokumentendaten 209 in einem maschinenlesbaren Format. Ferner kann der Signaturserver 300 einen zweiten Datensatz von dem Ausstellercomputersystem 200 empfangen mit den Dokumentendaten in einem Format einer Seitenbeschreibungssprache. Alternativ kann der Signaturserver 300 den zweiten Datensatz unter Verwendung des empfangenen ersten Datensatzes erstellen. Ein Ausführen der Programminstruktionen 314 steuert beispielsweise ferner ein erstellen zweier Signaturen des ersten und des zweiten Datensatzes durch den Signaturserver 300 unter Verwendung des Signaturschlüssels 306. Der Signaturserver berechnet den Hashwert 104 des aus dem Signieren der Datensätze resultierenden digitalen Dokuments 210. Ferner sendet der Signaturserver das digitale Dokument 210 auf ein Eintragen des Hashwerts 104 in die Blockchain 110 hin an das Ausstellercomputersystem 200.

Das System kann ferner ein Nutzercomputersystem 400 umfassen. Das Nutzercomputersystem 400 ist beispielsweise ein Computersystem eines Inhabers des Dokuments 210 oder eines sonstigen Empfängers des Dokuments 210. Das digitale Dokument 210 kann dem Nutzercomputersystem 300 beispielsweise von dem Ausstellercomputersystem 200 über das Netzwerk 160 zugesendet oder dem Nutzercomputersystem 300 kann der Zugriffscode 211 bereitgestellt, etwa zugesendet werden, mit welchem Nutzercomputersystem 300 berechtigt wird das digitale Dokument 210 von einem Downloadserver 700 herunterzuladen. Alternativ kann das digitale Dokument 210 dem Nutzercomputersystem 300 auch von einem anderen Computersystem zugesendet werden oder beispielsweise auf einem tragbaren Speichermedium, wie etwa einem USB-Stick, bereitgestellt werden. Ein Prozessor 312 des Computersystems 300 ist beispielsweise dazu konfiguriert Programminstruktionen 314 auszuführen. Ein Ausführen der Programminstruktionen 314 steuert beispielsweise das Empfangen oder Herunterladen des digitalen Dokuments 210. Das Nutzercomputersystem 400 speichert das empfangene Dokument 210 beispielsweise in seinem Speicher 402. Zur Kommunikation über das Netzwerk 160 umfasst das Nutzercomputersystem 400 eine Kommunikationsschnittstelle 416. Ferner umfasst das Nutzercomputersystem 400 beispielsweise ein asymmetrisches Schlüsselpaar und/oder einen symmetrischen Schlüssel (nicht gezeigt) zum Signieren von Daten und/oder Verschlüsseln von Daten.

Der Downloadserver 700 ist beispielsweise dazu konfiguriert Dokumente, wie das digitale Dokument 210, zum Download bereitzustellen. Der Downloadserver 700 kann von dem Ausstellercomputersystem 200 oder in Form eines eigeneständigen Servers bereitgestellt werden. Als eigenständiger Server umfasst der Downloadserver 700 beispielsweise einen Prozessor 712, welcher zum Ausführen von Programminstruktionen 714 konfiguriert ist. Ein Ausführen der Programminstruktionen 714 steuert beispielsweise ein Bereitstellen des digitalen Dokument 210 durch den Downloadserver 700 im Zuge eines Downloadvorgangs. Beispielsweise wird dem Downloadserver 700 das digitale Dokument 210, etwa über des Netzwerk 160, bereitgestellt und von dem Downloadserver 700 in dem Speicher 702 gespeichert. Zur Kommunikation über das Netzwerk 160, etwa im Zuge eines Downloadvorgangs, umfasst der Downloadserver 700 eine Kommunikationsschnittstelle 716. Ferner umfasst der Downloadserver 700 beispielsweise ein asymmetrisches Schlüsselpaar und/oder einen symmetrischen Schlüssel (nicht gezeigt) zum Signieren von Daten und/oder Verschlüsseln von Daten. Im Zuge eines Downloadvorgangs prüft der Downloadserver 700 beispielsweise, ob den Download des digitalen Dokuments 210 anfragendes Computersystem einen gültigen Zugriffscode 211 zum Zugriff auf das digitale Dokument 210 vorweisen kann.

Zum Prüfen des digitalen Dokuments 210 kann beispielsweise ein Prüfserver 600 verwendet werden. Das digitale Dokument 210 wird dem Prüfserver 600 über das Netzwerk 160, beispielsweise von dem Nutzercomputersystem oder einem anderen Computersystem, welches Zugriff auf das digitale Dokument 210 besitzt und dieses prüfen möchte, zugesendet. Ein Prozessor 612 des Prüfservers 600 ist beispielsweise dazu konfiguriert Programminstruktionen 614 auszuführen. Ein Ausführen der Programminstruktionen 614 steuert beispielsweise ein Prüfen des empfangenen Dokuments 210 durch den Prüfserver 600. Der Prüfserver 600 speichert das empfangene Dokument 210 beispielsweise in seinem Speicher 602. Zur Kommunikation über das Netzwerk 160 umfasst der Prüfserver 600 eine Kommunikationsschnittstelle 616. Ferner umfasst der Prüfserver 600 beispielsweise ein asymmetrisches Schlüsselpaar und/oder einen symmetrischen Schlüssel (nicht gezeigt) zum Signieren von Daten und/oder Verschlüsseln von Daten.

Durch ein Ausführen der Programminstruktionen 614 kann ferner ein Hashwert des Dokuments 210 berechnet und mit dem in der Blockchain 110 hinterlegten Hashwert 104 verglichen werden bzw. eine entsprechende Vergleichsanfrage an einen der Blockchain-Server 100, 130 gesendet werden. Stimmen beide Hashwerte überein, so handelt es sich bei dem empfangenen digitalen Dokument 210 um ein authentisches Dokument. Zur Berechnung des Hashwerts können die Programminstruktionen 614 des Prüfservers 600 beispielsweise einen Hash-Algorithmus umfassen. Das Ergebnis der Prüfung wird dem die Prüfung anfragenden Computersystem beispielsweise über das Netzwerk 160 mitgeteilt.

Die Prüffunktion Prüfservers 600 kann nach alternativen Ausführungsformen auch von anderen Computersystemen, wie etwa dem Nutzercomputersystem 400, direkt ausgeführt werden, wobei der Hashwert des Dokuments 210 von dem entsprechenden Computersystem berechnet und mit dem in der Blockchain 110 hinterlegten Hashwert 104 verglichen wird bzw. eine entsprechende Vergleichsanfrage an einen der Blockchain-Server 100, 130 gesendet wird.

Ferner kann das System ein Verwaltungscomputersystem 500 einer Verwaltungsinstanz, wie etwa einer Schulbehörde oder eines Verbands, umfassen. In einem Speicher 502 des Verwaltungscomputersystem 500 sind beispielsweise Ausstellerdaten 510 des Ausstellers mit dem Ausstellercomputersystem 200 gespeichert, wie etwa dessen Name und Anschrift. Ferner umfasst der Speicher 502 einen öffentlichen kryptographischen Schlüssel 508 eines asymmetrischen Schlüsselpaars der Verwaltungsinstanz. Zudem kann das Verwaltungscomputersystem 500 in einem geschützten Speicherbereich 504 ein privater kryptographischer Schlüssel 504 des asymmetrischen Schlüsselpaars gespeichert sein. Ein Prozessor 512 des Verwaltungscomputersystems 500 ist dazu konfiguriert Programminstruktionen 514 auszuführen. Durch ein Ausführen der Programminstruktionen 514 erfolgt beispielsweise ein Autorisieren des Ausstellercomputersystems 200 in einem Eintrag der Blockchain 110. Beispielsweise erstellt das Verwaltungscomputersystems 500 auf einen Empfang einer Autorisierungsanfrage des Ausstellercomputersystems 200 mit dem öffentlichen kryptographischen Schlüssel 208 eine Eintragungsanfrage zum Eintragen einer Autorisierung bzw. einer Autorisierungsbestätigung mit dem öffentlichen kryptographischen Schlüssel 208 zum Autorisieren des Ausstellercomputersystems 200 in der Blockchain 110. Der private kryptographische Schlüssel 504 kann beispielsweise zum Signieren der Eintragungsanfrage verwendet werden, wobei die resultierende Signatur mit dem öffentlichen kryptographischen Schlüssel 508 geprüft werden kann. Ferner wird entsprechende Eintragungsanfrage von dem Ausstellercomputersystem 200 beispielsweise über das Netzwerk 160 an einen der Blockchain-Server 100, 130 gesendet. Der empfangende Blockchain-Server 100, 130 prüft die Gültigkeit der Eintragungsanfrage, beispielsweise wird die Signatur mit dem öffentlichen kryptographischen Schlüssel 508 als Signaturprüfschlüssel geprüft, und trägt auf eine erfolgreiche Prüfung hin die Autorisierungsbestätigung mit dem öffentlichen kryptographischen Schlüssel 208 zum Autorisieren des Ausstellercomputersystems 200 in der Blockchain 110 ein. Alternativ kann durch ein Ausführen der Programminstruktionen 514 beispielsweise ein Bereitstellen eines Autorisierungspassworts zum Autorisieren des Ausstellercomputersystems 200 in einem Eintrag der Blockchain 110 erfolgen. Der private kryptographische Schlüssel 504 kann beispielsweise zum Signieren des Autorisierungspassworts verwendet werden, wobei die resultierende Signatur mit dem öffentlichen kryptographischen Schlüssel 508 geprüft werden kann. Ferner wird das entsprechende Autorisierungspasswort dem Ausstellercomputersystem 200 zum Autorisieren bereitgestellt. Dies kann beispielsweise über das Netzwerk 160 oder über alternative Übertragungswegen, wie etwa per Post erfolgen. Schließlich umfasst das Verwaltungscomputersystem 500 eine Kommunikationsschnittstelle 516 zur Kommunikation über das Netzwerk 160. Ferner umfasst der Prüfserver 500 beispielsweise ein zusätzliches asymmetrisches Schlüsselpaar und/oder einen zusätzlichen symmetrischen Schlüssel (nicht gezeigt) zum Signieren von Daten und/oder Verschlüsseln von Daten.

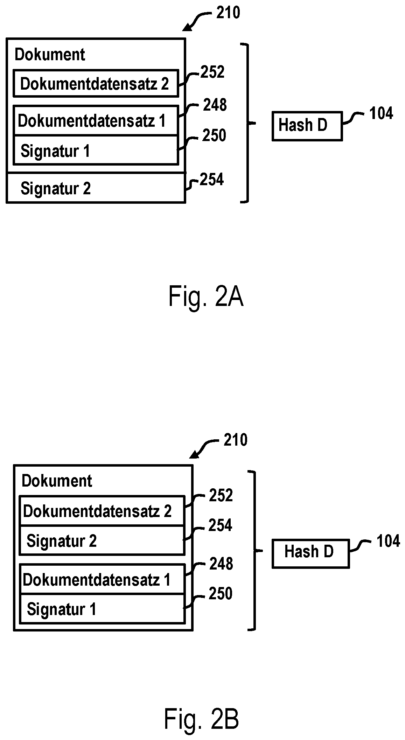

Figuren 2A und 2B zeigen Blockdiagramme von Ausführungsformen exemplarischer digitaler Dokumente 210. Eine erste Ausführungsform des Dokuments 210 in Figur 2A umfasst einen ersten Datensatzes 248 mit Dokumentendaten in einem maschinenlesbaren Format, beispielsweise XML oder JSON. Die maschinenlesbaren Dokumentendaten sind mit einer ersten Signatur 250 eines Signaturschlüssels eines Signaturservers signiert. Ferner umfasst das Dokument 210 einen zweiten Datensatz 252 mit Dokumentendaten in einem in einem Format einer Seitenbeschreibungssprache, beispielsweise PDF, PS oder DVI. Die signierten maschinenlesbaren Dokumentendaten zusammen mit den Dokumentendaten in der Seitenbeschreibungssprache sind beispielsweise mit einer zweiten Signatur 254 des Signaturschlüssels des Signaturservers signiert. Somit ist das digitale Dokument 210 als Ganzes mit der zweiten Signatur 254 signiert und die maschinenlesbaren Dokumentendaten sind zusätzlich mit der ersten Signatur 250 signiert. Dies ermöglicht sowohl eine Signaturprüfung allein der maschinenlesbaren Dokumentendaten im Falle einer maschinenbasierten Verarbeitung der entsprechenden Dokumentendaten als auch eine Signaturprüfung des digitalen Dokuments 210, wenn die Dokumentendaten gemäß der durch die Seitenbeschreibungssprache Layout auf einer Ausgabevorrichtung, wie etwa einem Bildschirm, angezeigt werden. Der erste Datensatz kann je nach Ausführungsform an den zweiten Datensatz 252 angehängt oder in diesen eingebettet sein. Aus dem gesamten digitalen Dokument 210 mit beiden Dokumentendatensätzen 248, 252 sowie beiden Signaturen 250, 254 wird ein Hashwert 104 berechnet und in der Blockchain gespeichert.

Eine zweite Ausführungsform des Dokuments 210 in Figur 2B umfasst den ersten Datensatzes 248 mit Dokumentendaten in dem maschinenlesbaren Format, beispielsweise XML oder JSON. Die maschinenlesbaren Dokumentendaten sind mit der ersten Signatur 250 des Signaturschlüssels des Signaturservers signiert. Ferner umfasst das Dokument 210 den zweiten Datensatz 252 mit Dokumentendaten in einem Format einer Seitenbeschreibungssprache, beispielsweise PDF, PS oder DVI. Die Dokumentendaten in der Seitenbeschreibungssprache sind beispielsweise mit der zweiten Signatur 254 des Signaturschlüssels des Signaturservers signiert. Somit sind die Dokumentendaten in der Seitenbeschreibungssprache mit der zweiten Signatur 254 signiert, während die maschinenlesbaren Dokumentendaten mit der ersten Signatur 250 signiert sind. Dies ermöglicht sowohl eine Signaturprüfung allein der maschinenlesbaren Dokumentendaten im Falle einer maschinenbasierten Verarbeitung der entsprechenden Dokumentendaten als auch eine Signaturprüfung des digitalen Dokuments, wenn die Dokumentendaten gemäß einem durch die Seitenbeschreibungssprache festgelegten Layout auf einer Ausgabevorrichtung, wie etwa einem Bildschirm, angezeigt werden. Der erste Datensatz 248 ist in dieser Ausführungsform an den zweiten Datensatz 252 angehängt. Aus dem gesamten digitalen Dokument 210 mit beiden Dokumentendatensätzen 248, 252 sowie beiden Signaturen 250, 254 wird ein Hashwert 104 berechnet und in der Blockchain gespeichert.

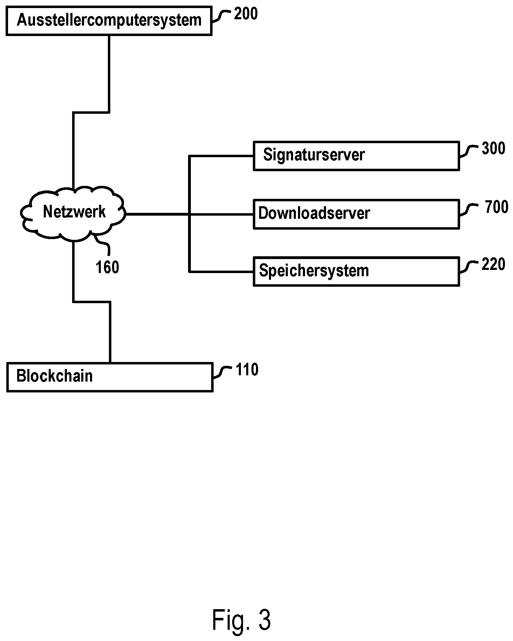

Figur 3 zeigt ein schematisches Blockdiagramm einer Ausführungsform eines exemplarischen Systems zum Ausstellen eines digitalen Dokuments. Das Ausstellercomputersystem 200 erstellt zumindest einen ersten Datensatz mit Dokumentendaten in einem maschinenlesbaren Format, nach Ausführungsformen zusätzlich einen zweiten Datensatz mit den Dokumentendaten in einem Format einer Seitenbeschreibungssprache. Die Datensätze werden an einen Signaturserver 300 über das Netzwerk 160 zum Signieren und damit Erstellen des signierten digitalen Dokuments übertragen. Dies kann beispielsweise direkt oder über ein entsprechendes Backend erfolgen. Der Signaturserver 300 verwendet beispielsweise einen privaten kryptographischen Schlüssel eines asymmetrischen Schlüsselpaars als Signaturschlüssel, dessen Authentizität mittels eines PKI-Zertifikats, etwa einem X.509, abgesichert ist. Ferner kann das signierte Dokument über ein von einem Downloadserver 700 bereitgestelltes Downloadportal zum Download bereitgestellt werden. Hierzu kann das signierte Dokument beispielsweise direkt oder über ein entsprechendes Backend von dem Ausstellercomputersystem an den Downloadserver gesendet werden. Eine Kommunikation zwischen dem Ausstellercomputersystem 200 und dem Backend kann beispielsweise unter Verwendung von REST (Representational State Transfer)-Paradigma konformen Nachrichten. Ferner kann das signierte Dokument, beispielsweise in verschlüsselter Form, in einem Speichersystem 220 dauerhaft gespeichert werden. Das Speichern des signierten Dokuments in dem Speichersystem 220 über das Netzwerk 160 kann beispielsweise direkt oder über ein entsprechendes Backend erfolgen. Schließlich kann ein Hashwert des signierten Dokuments, welchen das Ausstellercomputersystem 200 von dem Signaturserver 300 empfängt, von dem Ausstellercomputersystem 200 zur Eintragung an eine Blockchain 110 gesendet werden. Dies erfolgt beispielsweise unter Verwendung einer signierten Eintragungsanfrage.

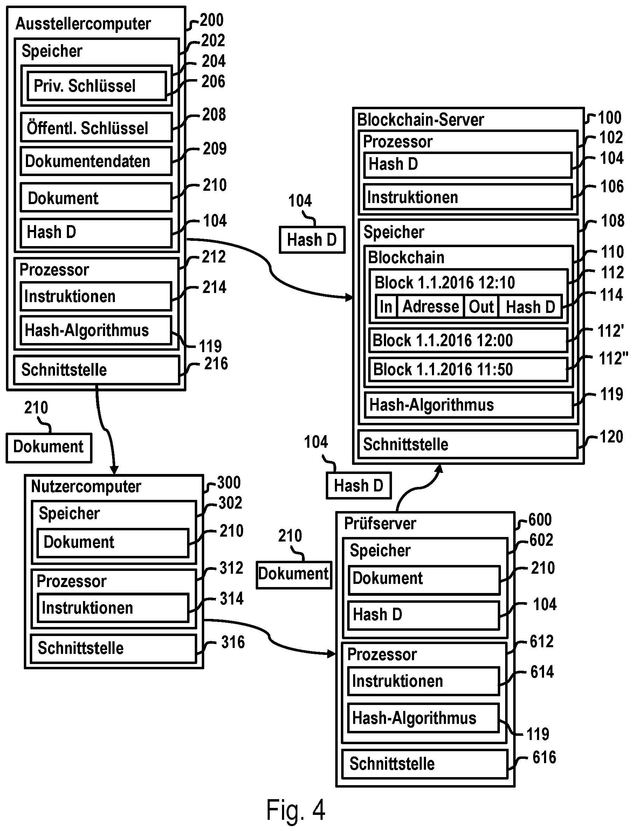

Figur 4 zeigt ein Blockdiagramm eines Systems zum Ausstellen eines digitalen Dokuments 210. Die gezeigten Systemkomponenten bzw. -teilnehmer, d.h. Ausstellercomputersystem 200, Blockchain-Server 100, Nutzercomputersystem 300 und Prüfserver 600, sind analog zu den entsprechenden Systemkomponenten bzw. -teilnehmer aus Figuren 1A und 1B konfiguriert. Figur 4 veranschaulicht die Kommunikation zwischen den Systemkomponenten bzw. - teilnehmer detaillierter. Der Ausstellercomputersystem 200 erzeugt im Zusammenspiel mit einem Signaturserver ein digitales Dokument 210, beispielsweise ein Zeugnis. Für das erzeugte Dokument 210 wird ein Hashwert 104 berechnet. Der berechnete Hashwert 104 wird an den Blockchain-Server 100 übertragen und von diesem in einen Eintrag 114 eines zusätzlichen Blocks 112 der Blockchain 110 eingetragen.

Das digitale Dokument 210 wird von dem Ausstellercomputersystem 200 dem Nutzercomputersystem 300, bei welchem es sich beispielsweise um ein Computersystem eines Inhabers des Dokuments handelt, bereitgestellt. Das Bereitstellen kann beispielsweise direkt durch ein Senden digitalen Dokuments 210 von dem Ausstellercomputersystem 200 über ein Netzwerk an das Nutzercomputersystem 300, durch ein Übertragen auf einem tragbaren physischen Speichermedium oder indirekt durch ein Bereitstellen des digitalen Dokuments 210 auf einem Downloadserver zum Download durch das Nutzercomputersystem 300 über ein Netzwerk. Zum Prüfen der Authentizität des Dokuments 210 leitet ein Computersystem, welches sich im Besitz des digitalen Dokuments 210 befindet, beispielsweise das Nutzercomputersystem 300, das digitalen Dokuments 210 an einen Prüfserver 600 weiter. Beispielsweise stellt der Prüfserver 600 zu diesem Zweck eine Webseite zum Hochladen des zu prüfenden digitalen Dokuments 210 bereit, welche das Computersystem unter Verwendung eines Browsers aufrufen kann. Zum Prüfen der Authentizität des digitalen Dokuments 210 berechnet der Prüfserver 600 mit einem Hash-Algorithmus 119 den Hashwert 104 des und digitalen Dokuments 210 vergleicht diesen mit dem in dem Eintrag 114 der Blockchain 110 gespeicherten Hashwert. Stimmen die beiden Hashwerte überein, so handelt es sich bei dem vorgelegten Zeugnis 210 um ein authentisches Dokument.

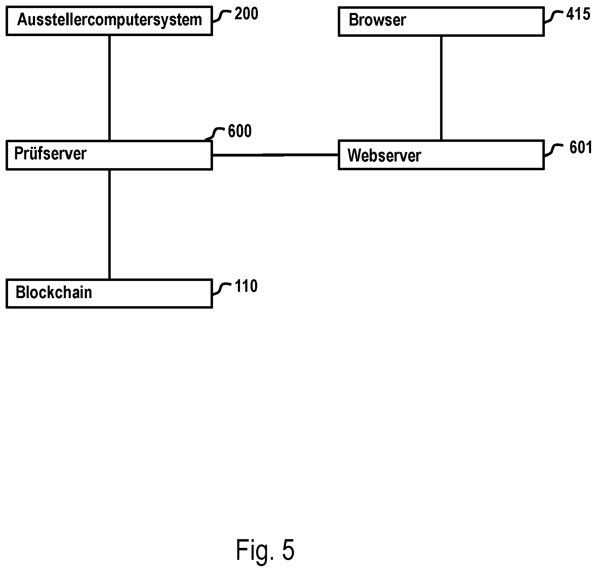

Figur 5 zeigt ein schematisches Blockdiagramm einer Ausführungsform eines exemplarischen Systems zum Prüfen eines digitalen Dokuments. Zum Prüfen der Authentizität des Dokuments leitet ein Computersystem, welches die Authentizität geprüft haben möchten, das digitalen Dokuments an einen Prüfserver weiter. Dies kann beispielsweise direkt über ein Netzwerk, etwa unter Verwendung einer REST-basierten Maschine-zu-Maschine-Kommunikation, erfolgen. Beispielsweise kann das Ausstellercomputersystem 200 mittels einer REST-Anfrage eine Prüfung des digitalen Dokuments initiieren und das digitale Dokument an den Prüfserver 600 übertragen. Alternativ kann oder zusätzlich kann eine browserbasierte Prüfung implementiert werden. Beispielsweise stellt der Prüfserver 600 oder ein mit dem Prüfserver 600 verbundener Webserver 601, zu diesem Zweck eine Webseite zum Hochladen des zu prüfenden digitalen Dokuments bereit. Eine Kommunikation zwischen Prüfserver 600 und Webserver 601 kann beispielsweise REST-basiert erfolgen. Die Webseite kann mittels eines Browsers 415, beispielsweise unter Verwendung von HTML und/oder JavaScript, von jedem Computersystem aufgerufen werden, welches das digitale Dokument geprüft haben möchte und über einen entsprechenden Browser mit Netzwerkverbindung verfügt. Zum Prüfen der Authentizität des digitalen Dokuments berechnet der Prüfserver 600 mit einem Hash-Algorithmus den Hashwert des und digitalen Dokuments vergleicht diesen mit dem in dem Eintrag der Blockchain 110 gespeicherten Hashwert. Hierzu sendet der Prüfserver 600 beispielsweise eine entsprechende Anfrage an einen Blockchain-Server. Hierzu kann beispielsweise eine unsignierte Nachricht verwendet werden, falls im Zuge der Existenzprüfung des Hashwerts keine personen- oder inhaltsbezogenen Daten in Bezug auf das digitale Dokument ausgetauscht werden. Stimmen die beiden

Hashwerte überein, so handelt es sich bei dem vorgelegten Zeugnis 210 um ein authentisches Dokument.

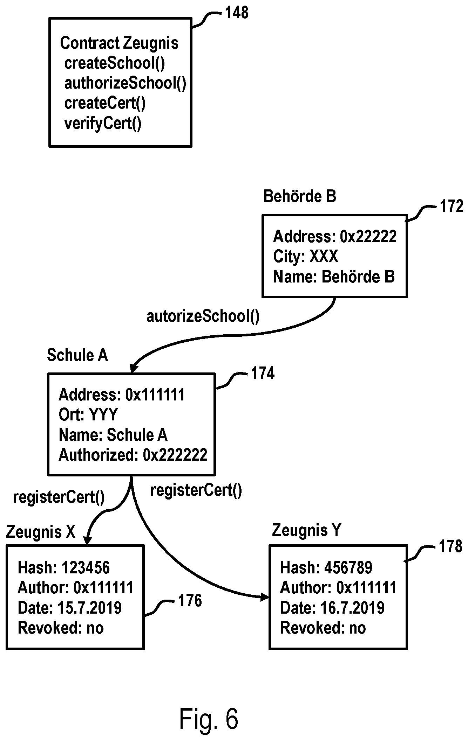

Figur 6 zeigt exemplarische Blockchain-Einträge zum Ausstellen und Prüfen digitaler Dokumente. Beispielsweise umfasst ein Blockchain-Eintrag einen Smart Contract 148 "Contract Zeugnis". Im Folgenden wird das Ausstellen und Prüfen eines digitalen Dokuments an Hand des Beispiels eines digitalen Zeugnisses erläutert. Das erläuterte Verfahren lässt sich aber ohne weiteres auf andere Arten von digitalen Dokumenten übertragen. Der Smart Contract 148 definiert beispielsweise eine Mehrzahl von Programminstruktionen. Diese Programminstruktionen umfassen beispielsweise eine Programminstruktion createSchool() zum Initialisieren eines Autorisierens eines Ausstellers, beispielsweise eine Schule A, eine Programminstruktion authorizeSchool() zum Autorisieren der Autorisierung der Schule durch eine autorisierende Verwaltungsinstanz, beispielsweise eine Schulbehörde B, eine Programminstruktion createCert() zum Ausstellen von digitalen Dokumenten, beispielsweise Zeugnisse X und Y, sowie eine Programminstruktion verifyCert() zum Prüfen der Authentizität ausgestellter Dokumente. Beispielsweise ist eine Schulbehörde B in einem Blockchain-Eintrag 172 autorisiert: "Address: 0x22222; City: XXX; Name: Behörde B". Unter Verwendung der Adresse "0x22222", welche der Schulbehörde B zugeordnet ist, kann unter Ausführen der Programminstruktion createSchool() ein Blockchain-Eintrag 174 für die Schule A erzeugt werden: "Address: 0x111111; City: YYY; Name: Schule A; Authorized: 0x222222". Durch diese Autorisierung wird der Schule die Adresse "0x111111" zugeordnet. Unter Verwendung dieser Adresse "0x111111" können unter Ausführen der Programminstruktion registerCert() Blockchain-Einträge 176, 178 zum Ausstellen von digitalen Dokumenten bzw. zum Eintragen der Hashwerte der entsprechenden digitalen Dokumente in die Blockchain erzeugt werden. Diese Blockchain-Einträge 176, 178 sind den entsprechenden Zeugnissen X, Y zugeordnet und definieren deren Eigenschaften: "Hash: 123456; Author: 0x111111; Date: 15.7.2019; Revoked: no" bzw. "Hash: 123456; Author: 0x111111; Date: 15.7.2019; Revoked: no". Beispielsweise können in der Blockchain von dem Aussteller eines digitalen Dokuments auch Revozierungsvermerke eingetragen werden, durch deren Eintragung eine Revozierung des entsprechenden digitalen Dokuments effektiv wird.

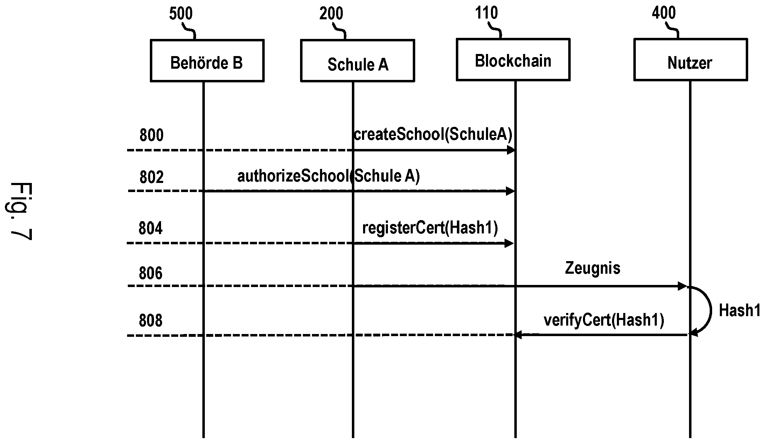

Figur 7 zeigt ein UML-Diagramm einer Ausführungsform eines exemplarischen Verfahrens zum Ausstellen eines digitalen Dokuments 210. In Schritt 800 wird auf eine Autorisierungsanfrage des Ausstellercomputersystems 200, z.B. der Schule A, hin ein Blockchain-Eintrag mit den Daten des Ausstellers unter Verwendung einer entsprechenden Programminstruktion des Smart Contracts "createSchool(Schule A)" erzeugt. In Schritt 802 wird die Eintragung des Ausstellers in der Blockchain 110 durch ein Verwaltungscomputersystem 500 einer autorisierenden Verwaltungsinstanz, z.B. Behörde B, autorisiert. Hierzu wird auf eine Autorisierungsbestätigung des Verwaltungscomputersystem 500 hin ein Autorisierungsvermerk zur Autorisierung der Schule in die Blockchain 110 unter Verwendung einer entsprechenden Programminstruktion des Smart Contracts "authorizeSchool(Schule A)" eingetragen lassen. In Schritt 804 kann das nun zum Ausstellen von digitalen Dokumenten, wie etwa Zeugnissen, autorisierte Ausstellercomputersystems 200 unter Verwendung eines Signaturservers ein signiertes digitales Dokument erstellen, dessen Hashwert "Hash 1" berechnen und den berechneten Hashwert unter Verwendung einer entsprechenden Programminstruktion des Smart Contracts "registerCert(Hash 1)" in die Blockchain 110 eintragen lassen. Das signierte digitale Dokument, beispielsweise ein Zeugnis, kann in Schritte 806 von dem Ausstellercomputersystems 200 an ein Nutzercomputersystem 400 übertragen werden. Das Nutzercomputersystem 400 kann einen Hashwert "Hash 1" des empfangenen digitalen Dokuments berechnen und unter Verwendung einer entsprechenden Programminstruktion des Smart Contracts "verifyCert(Hash 1)" prüfen bzw. prüfen lassen, ob der Hashwert des empfangene digitalen Dokuments in der Blockchain 110 eingetragen und das Dokument mithin authentisch ist oder nicht. Alternativ kann die Hashwertberechnung und Initiierung der Abfrage der Blockchain 110 auch über einen Prüfserver erfolgen.

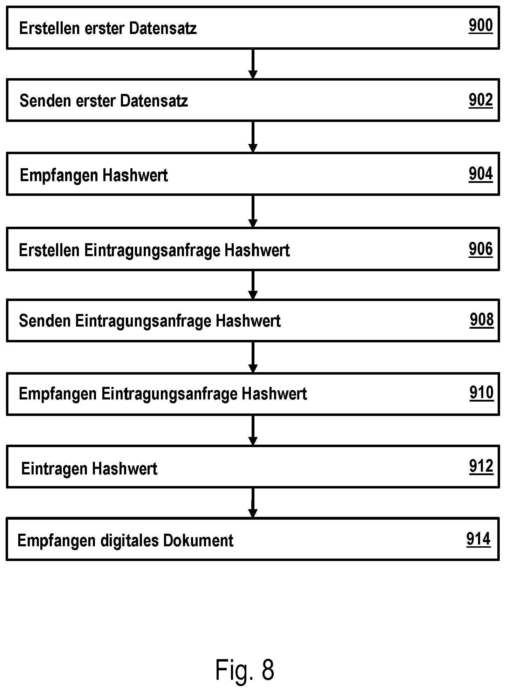

Figur 8 zeigt ein Flussdiagramm einer Ausführungsform eines exemplarischen Verfahrens zum Ausstellen eines digitalen Dokuments. In Block 900 wird von einem Ausstellercomputersystem ein erster Datensatz mit Dokumentendaten für das digitale Dokument in einem maschinenlesbaren Format erstellt. In Block 902 wird der erste Datensätze durch das Ausstellercomputersystem über ein Netzwerk an einen Signaturserver gesendet. Beispielsweise wird der erste Datensatz mit einer Signaturanfrage zu an den Signaturserver gesendet. In Block 904 wird in Antwort auf das Senden des ersten Datensatzes in Block 902 ein Hashwert des digitalen Dokuments von dem Signaturserver über das Netzwerk durch das Ausstellercomputersystem empfangen. Das digitale Dokument umfasst neben dem ersten Datensatz, welcher mit einer ersten unter Verwendung des Signaturschlüssels erstellten Signatur signiert ist, einen zweiten Datensatz mit den Dokumentendaten in einem Format einer Seitenbeschreibungssprache. Der zweite Datensatz ist mit einer zweiten unter Verwendung des Signaturschlüssels erstellten Signatur signiert. Beispielsweise umfasst die zweite Signatur auch den signierten ersten Datensatz. Der Signaturserver erzeugt unter Verwendung seines Signaturschlüssels die erste und die zweite Signatur. Nach Ausführungsformen erstellt das das Ausstellercomputersystem den zweiten Datensatz und sendet diesen zusammen mit dem ersten Datensatz zum Signieren an den Signaturserver. Nach alternativen Ausführungsformen erstellt der Signaturserver den zweiten Datensatz unter Verwendung des ersten Datensatzes und einer bei dem Signaturserver hinterlegten Vorlage bzw. Template für ein Layout des Dokuments in der Seitenbeschreibungssprache. In Block 906 wird eine mit dem privaten kryptographischen Schlüssel des Ausstellers signierten Eintragungsanfrage durch das Ausstellercomputersystem erstellt. Nach Ausführungsformen identifiziert die Eintragungsanfrage einen Smart Contract. Ferner umfasst die Eintragungsanfrage einen Hashwert des digitalen Dokuments. In Block 908 wird die signierte Eintragungsanfrage durch das Ausstellercomputersystem unter Verwendung über das Netzwerk an einen Blockchain-Server eines Blockchain-Netzwerks zum Eintragen des Hashwerts des digitalen Dokuments in die Blockchain unter Verwendung des Smart Contracts. In Block 910 empfängt der Blockchain-Server eines Blockchain-Netzwerks die Eintragungsanfrage, prüft deren Signatur und trägt den Hashwert bei einer erfolgreichen Signaturprüfung in Block 912 in die Blockchain ein. Nach Ausführungsformen wird ein öffentlicher kryptographischer Schlüssel zum Prüfen der Signatur der Eintragungsanfrage von der Blockchain bereitgestellt. Nach Ausführungsformen umfasst der Eintrag in die Blockchain neben dem Hashwert des digitalen Dokuments ein oder mehrere der folgenden Angaben: einen Identifikator des Ausstellers, beispielsweise in Form einer Blockchain-Adresse des Ausstellers, einen Zeitstempel mit Datum und/oder Uhrzeit der Eintragung. Um ein Zertifikat, dessen Hashwert in die Blockchain eingetragen wurde, zu widerrufen bzw. zu revozieren, kann beispielsweise auf eine signierte Anfrage durch das Ausstellercomputersystem ein Revozierungsvermerk von einem Blockchain-Server des Blockchain-Netzwerks unter Verwendung des Smart Contracts in die Blockchain eingetragen werden. Nach Ausführungsformen umfasst der Eintrag in die Blockchain neben dem Revozierungsvermerk und dem Hashwert des digitalen Dokuments ein oder mehrere der folgenden Angaben: einen Identifikator des Ausstellers, beispielsweise in Form einer Blockchain-Adresse des Ausstellers, einen Zeitstempel mit Datum und/oder Uhrzeit der Eintragung. In Block 914 empfängt das Ausstellercomputersystem auf das Eintragen des Hashwerts in die Blockchain hin das digitale Dokument mit den Signaturen von dem Signaturserver. Beispielsweise empfängt zunächst das Ausstellercomputersystem eine Eintragungsbestätigung von einem der Blockchain-Server und sendet daraufhin einen Eintragungshinweis an den Signaturserver. Der Signaturserver kann diesen Eintragungshinweis beispielsweise prüfen und auf eine erfolgreiche Prüfung hin das digitale Dokument mit den Signaturen an das Ausstellercomputersystem senden.

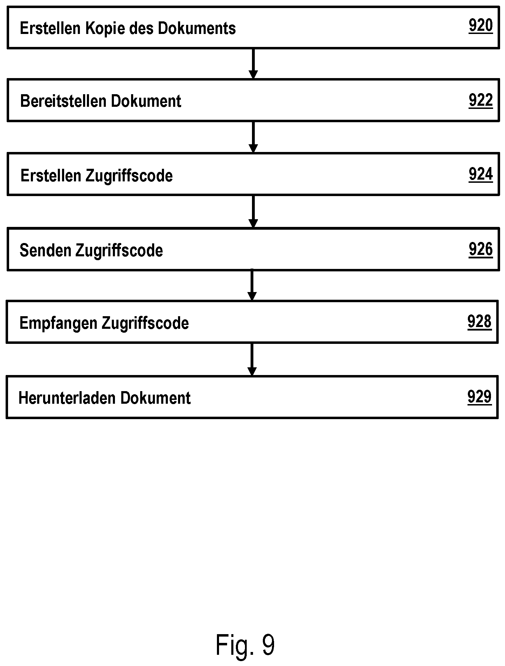

Figur 9 zeigt ein Flussdiagramm einer Ausführungsform eines exemplarischen Verfahrens zum Bereitstellen eines digitalen Dokuments. In Block 920 wird eine Kopie des digitalen Dokuments erstellt. In Block 922 wird diese Kopie zum Herunterladen, beispielsweise auf einem Downloadserver, bereitgestellt. Nach Ausführungsformen sendet das Ausstellercomputersystem das digitale Dokument zu diesem Zweck an einen entsprechenden Downloadserver, welcher beispielsweise eine Webseite bereitstellt, von welcher das digitale Dokument heruntergeladen werden kann. In Block 924 erstellt, beispielsweise das >Ausstellercomputersystem, einen Zugriffscode, welcher einen Zugriff auf das zum Download bereitgestellte digitale Dokument ermöglicht. Nach alternativen Ausführungsformen wird der Zugriffscode von dem Downloadserver erstellt und dem Ausstellercomputersystem zur Verfügung gestellt. Dem Zugriffscode ist beispielsweise eine Gültigkeitsperiode und/oder eine maximale Nutzungsanzahl als Berechtigungsnachweis zum Herunterladen des digitalen Dokuments zugeordnet. In Block 926 wird der Zugriffscode von dem Ausstellercomputersystem an ein Nutzercomputersystem gesendet. Dies kann beispielsweise über eine kryptographisch gesicherte, wie etwa weine Ende-zu-Ende-verschlüsselte, Kommunikationsverbindung erfolgen. In Block 928 empfängt das Nutzercomputersystem den Zugriffcode und verwendet diesen, um das digitale Dokument von dem Downloadserver in Block 929 herunterzuladen.

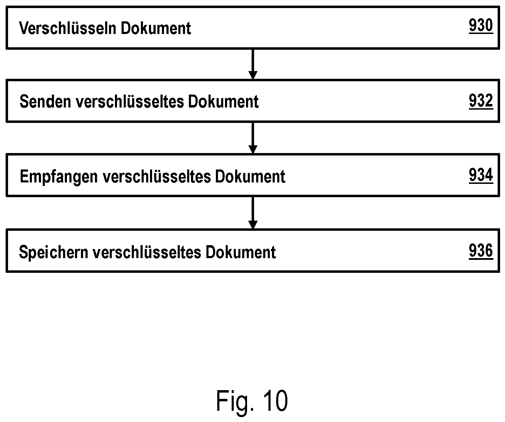

Figur 10 zeigt ein Flussdiagramm einer Ausführungsform eines exemplarischen Verfahrens zum dauerhaften Speichern eines digitalen Dokuments. In Block 930 wird das digitale Dokument unter Verwendung eines kryptographischen Schlüssels, beispielsweise eines symmetrischen kryptographischen Schlüssels, von dem Ausstellercomputersystem verschlüsselt. In Block 932 wird das verschlüsselte Dokument an ein Speichersystem gesendet. In Block 934 empfängt das Speichersystem das verschlüsselte Dokument und speichert dieses in Block 936. Nach Ausführungsformen wird in Block 930 zudem eine Kopie des zum Verschlüsseln des Dokuments verwendeten kryptographischen Schlüssels unter Verwendung des öffentlichen Schlüssels des asymmetrischen Schlüsselpaares des Ausstellers verschlüsselt. Die so verschlüsselte Kopie des kryptographischen Schlüssels wird beispielsweise in Block 932 zusammen mit dem verschlüsselten Dokument an das Speichersystem gesendet, von diesem in Block 934 empfangen und in Block 936 zusammen mit dem verschlüsselten Dokument gespeichert. Nach Ausführungsformen wird in Block 930 zudem eine Kopie des zum Verschlüsseln des Dokuments verwendeten kryptographischen Schlüssels unter Verwendung des öffentlichen Schlüssels des asymmetrischen Schlüsselpaares einer Verwaltungsinstanz verschlüsselt. Die so verschlüsselte Kopie des kryptographischen Schlüssels wird beispielsweise in Block 932 zusammen mit dem verschlüsselten Dokument an das Speichersystem gesendet, von diesem in Block 934 empfangen und in Block 936 zusammen mit dem verschlüsselten Dokument gespeichert.

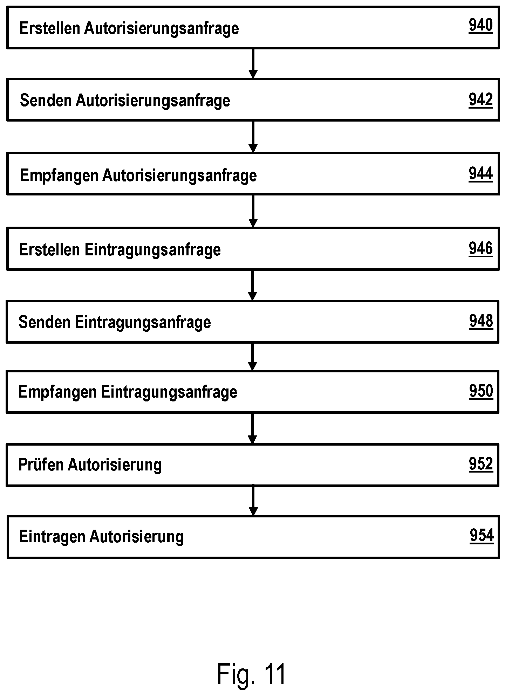

Figur 11 zeigt ein Flussdiagramm einer Ausführungsform eines exemplarischen Verfahrens zum Autorisieren eines Ausstellers eines digitalen Dokuments zum Eintragen eines Hashwertes des digitalen Dokuments in die Blockchain. In Block 940 erstellt das Ausstellercomputersystem des Austellers eine Autorisierungsanfrage an eine autorisierende Verwaltungsinstanz, z.B. eine Schulbehörde bei einer Autorisierungsanfrage von einer Schule als Aussteller. Die Autorisierungsanfrage umfasst den öffentlichen kryptographischen Schlüssel des Ausstellers. In Block 942 wird die erstellte Autorisierungsanfrage über das Netzwerk an ein Verwaltungscomputersystem einer autorisierende Verwaltungsinstanz gesendet. In Block 944 empfängt das das Verwaltungscomputersystem der autorisierende Verwaltungsinstanz die Autorisierungsanfrage und erstellt in Block 946 in Antwort auf den Empfang des Autorisierungsanfrage eine Eintragungsanfrage zur Eintragung der Autorisierung bzw. einer Autorisierungsbestätigung des Ausstellers in die Blockchain. Die Eintragungsanfrage identifiziert einen für die Eintragung zu verwendenden Smart Contract, umfasst den empfangenen öffentlichen kryptographischen Schlüssel des Ausstellers. Zudem umfasst das Erstellen der Eintragungsanfrage ein Signieren der Eintragungsanfrage durch das Verwaltungscomputersystemmit einem privaten kryptographischen Schlüssel eines asymmetrischen Schlüsselpaars des Verwaltungscomputersystems signiert ist. In Block 948 wird die Eintragungsanfrage von dem Ausstellercomputersystem über das Netzwerk an einen Blockchain-Server gesendet, welcher zum Erzeugen von Blöcken der Blockchain konfiguriert ist. In Block 950 empfängt der Blockchain-Server die Eintragungsanfrage und prüft in Block 952 deren Gültigkeit. Hierzu werden beispielsweise Programminstruktionen des durch die Eintragungsanfrage identifizierten Smart Contract durch den Blockchain-Server ausgeführt. Nach Ausführungsformen umfasst das Prüfen der Gültigkeit der Eintragungsanfrage in Block 952 ein Prüfen der Signatur der autorisierenden Verwaltungsinstanz mit einem öffentlichen kryptographischen Schlüssel des asymmetrischen Schlüsselpaars des Verwaltungscomputersystems. Nach Ausführungsformen wird der öffentliche kryptographische Schlüssel des Verwaltungssystems beispielsweise in der Blockchain und/oder in dem Smart Contract bereitgestellt. In Block 954 wird, im Falle einer gültigen Eintragungsanfrage, ferner ein zusätzlicher Block mit einer Autorisierungsbestätigung zum Autorisieren des öffentlichen kryptographischen Schlüssels des Ausstellers für die Blockchain erzeugt und zu dieser hinzugefügt.

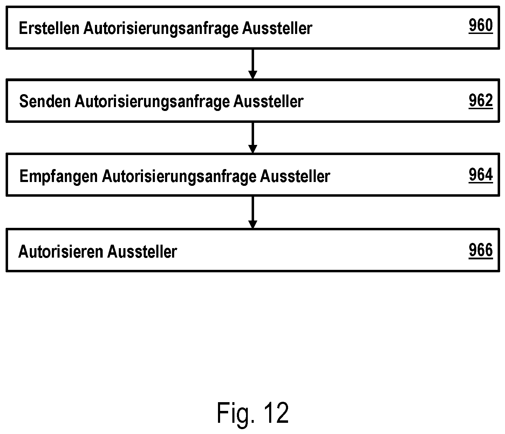

Figur 12 zeigt ein Flussdiagramm einer Ausführungsform eines exemplarischen Verfahrens zum Autorisieren eines Ausstellers eines digitalen Dokuments zum Eintragen eines Hashwertes des digitalen Dokuments in die Blockchain. In Block 960 wird eine Autorisierungsanfrage des Ausstellers an einen Blockchain-Server erstellt. In Block 962 wird die Autorisierungsanfrage an den Blockchain-Server gesendet. In Block 964 empfängt der Blockchain-Server die Autorisierungsanfrage und prüft beispielsweise unter Verwendung eines von der Autorisierungsanfrage identifizierten Smart Contracts die Gültigkeit der Autorisierungsanfrage. Beispielsweise kann der Aussteller seine Autorisierung unter Verwendung eines Autorisierungspassworts nachweisen. Die Autorisierungsanfrage ist beispielsweise gültig, wenn das Autorisierungspasswort gültig ist. Auf eine gültige Autorisierungsanfrage hin wird der Aussteller in Block 966 unter Verwendung des Smart Contracts in der Blockchain autorisiert. Hierbei wird beispielsweise ein öffentlicher kryptographischer Schlüssel des Ausstellers in der Blockchain gespeichert. Der öffentliche kryptographische Schlüssel wird dem Blockchain-Server beispielsweise mit der Autorisierungsanfrage zur Verfügung gestellt. Nach einer alternativen Ausführungsform umfasst die Autorisierung in Block 966 zunächst eine Eintragung des Ausstellers in die Blockchain. Zusätzlich wird eine Autorisierung der Autorisierung durch ein Verwaltungscomputersystem einer autorisierenden Verwaltungsinstanz angefragt. Auf einen Empfang einer Autorisierungsbestätigung wird ein entsprechender Autorisierungsvermerk in die Blockchain eingetragen, womit die Autorisierung abgeschlossen wird.

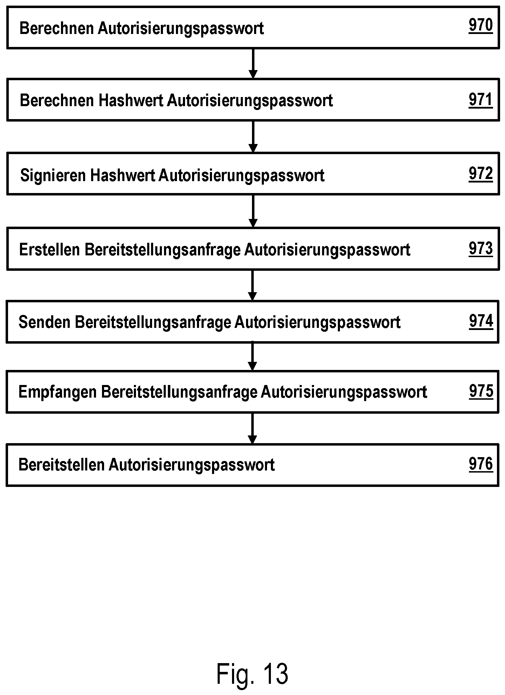

Figur 13 zeigt ein Flussdiagramm einer Ausführungsform eines exemplarischen Verfahrens zum Bereitstellen eines Autorisierungspassworts. In Block 970 wird ein Autorisierungspasswort von einer autorisierenden Verwaltungsinstanz, welche für den Aussteller zuständig bzw. diesem zugeordnet ist, oder einem Provider der Blockchain bzw. des Smart Contracts, berechnet. In Block 971 wird ein Hashwert des Autorisierungspassworts berechnet. In Block 972 wird der Hashwert mit einem privaten kryptographischen Schlüssel der autorisierenden Verwaltungsinstanz bzw. des Providers verschlüsselt. In Block 973 wird eine Bereitstellungsanfrage zum Bereitstellen des Autorisierungspassworts erstellt und in Block 974 an einen Blockchain-Server gesendet. Der Blockchain-Server empfängt die Bereitstellungsanfrage in Block 975 und speichert das Autorisierungspasswort in Block 976 unter Verwendung des Smart Contracts in einem Eintrag der Blockchain, falls die Bereitstellungsanfrage gültig ist. Die Bereitstellungsanfrage ist beispielsweise gültig, falls die autorisierende Verwaltungsinstanz bzw. der Provider von dem Smart Contract registriert sind, d.h. ein dem Smart Contract zugeordneter Eintrag der Blockchain einen öffentlichen kryptographischen Schlüssel der autorisierenden Verwaltungsinstanz bzw. des Providers umfasst, und die Bereitstellungsanfrage eine Signatur mit einem dem öffentlichen kryptographischen Schlüssel zugeordneten privaten kryptographischen Schlüssel umfasst.

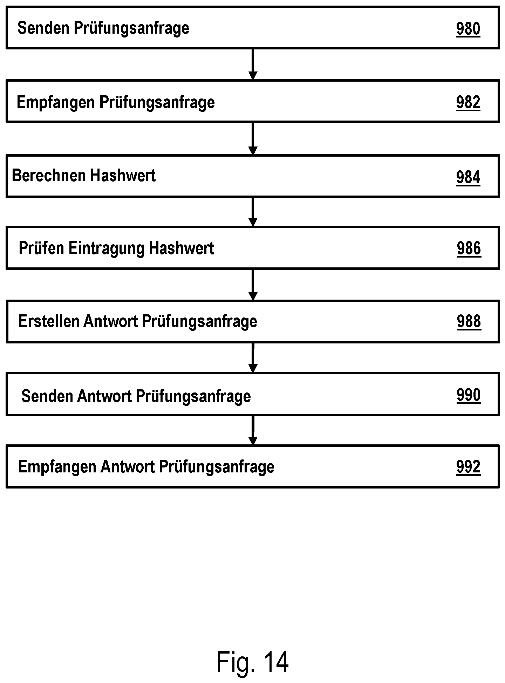

Figur 14 zeigt ein Flussdiagramm einer Ausführungsform eines exemplarischen Verfahrens zur Echtheitsprüfung eines digitalen Dokuments. Um die Gültigkeit des vorgelegten Dokuments zu prüfen, wird in Block 980 eine Prüfungsanfrage zum Prüfen des digitalen Dokuments von einem anfragenden Computersystem an einen Prüfserver gesendet. Beispielsweise zusammen mit der Prüfungsanfrage das zu prüfende Dokument gesendet. Beispielsweise wird das zu prüfende Dokument unter Verwendung einer von dem Prüfserver zur Prüfung von digitalen Dokumenten bereitgestellten Webseite zur Prüfung auf den Prüfserver hochgeladen. In Block 986 werden die Prüfungsfrage und das zu prüfende digitale Dokument von dem Prüfserver empfangen. Der Prüfserver berechnet den Hashwert des zu prüfenden digitalen Dokuments und prüft in Block 988, ob der entsprechende Hashwert in der Blockchain eingetragen ist. Besitzt der Prüfserver selbst Zugriff auf die Blockchain, kann er diese Prüfung selbst durchführen. Alternativ sendet der Prüfserver den Hashwert zur Prüfung an einen Blockchain-Server mit Zugriff auf die Blockchain und empfängt als Antwort eine Angabe, ob der Hashwert in der Blockchain eingetragen ist. Nach Ausführungsformen umfasst die Prüfung zusätzlich ein Prüfen, ob eine Revozierungsvermerk für das digitale Dokument in der Blockchain gespeichert und das entsprechende Dokument mithin nichtmehr gültig ist. Auf Basis der Prüfergebnisse wird in Block 990 von dem Prüfserver eine Antwort auf die Prüfanfrage erstellt und in Block 992 an das anfragende Computersystem gesendet. In Block 994 empfängt das anfragende Computersystem die Antwort. Falls das Dokument eingetragen und beispielsweise nicht revoziert ist, teilt die Antwort diese Tatsache dem anfragenden Computersystem mit.

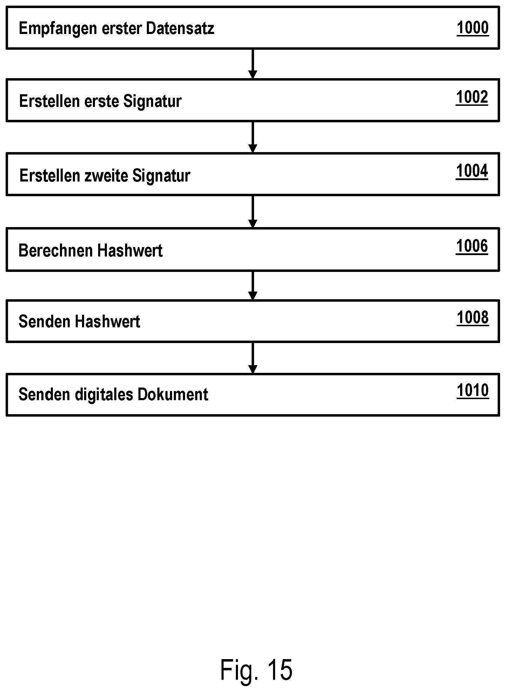

Figur 15 zeigt ein Flussdiagramm einer Ausführungsform eines exemplarischen Verfahrens zum Signieren eines digitalen Dokuments durch einen Signaturserver. In Block 1000 empfängt der Signaturserver einen ersten Datensätze mit Dokumentendaten für das digitale Dokument in einem maschinenlesbaren Format von einem Ausstellercomputersystem. In Block 1002 erstellt der Signaturserver eine erste Signatur des ersten Datensatzes des digitalen Dokuments unter Verwendung eines über die PKI abgesicherten Signaturschlüssels des Signaturservers. Bei dem Signaturschlüssel handelt es sich beispielsweise ein einen privaten kryptographischen Schlüssel eines asymmetrischen Schlüsselpaars des Signaturservers. In Block 1002 wird von dem Signaturserver eine zweite Signatur eines zweiten Datensatzes des digitalen Dokuments unter Verwendung des über die PKI abgesicherten Signaturschlüssels des Signaturservers erstellt. Der zweite Datensatz des digitalen Dokuments umfasst die Dokumentendaten des digitalen Dokuments in einem Format einer Seitenbeschreibungssprache. Beispielsweise empfängt der Signaturserver den zweiten Datensatz in Block 1000 zusammen mit dem ersten Datensatz von dem Ausstellercomputersystem oder der Signaturserver erstellt selbst den zweiten Datensatz unter Verwendung des empfangenen ersten Datensatzes. Falls der Signaturserver den zweiten Datensatz erstellt umfasst der Signaturserver beispielsweise eine Vorlage für das Layout des digitalen Dokuments in der Seitenbeschreibungssprache. Nach Ausführungsformen umfasst die zweite Signatur den ersten Datensatz mit der ersten Signatur, d.h. mit der zweiten Signatur werden die Kombination von signiertem ersten Datensatz und unsigniertem zweiten Datensatz signiert. In Block 1006 wird ein Hashwert des digitalen Dokuments, d.h. der beiden Datensätze mit den beiden Signaturen, berechnet. In Block 1008 wird der Hashwert durch den Signaturserver über das Netzwerk an das Ausstellercomputersystem zur Eintragung in die Blockchain gesendet. In Block 110 wird, auf das Eintragen des ersten Hashwerts in die Blockchain hin, das digitalen Dokument durch den Signaturserver über das Netzwerk an das Ausstellercomputersystem gesendet. Beispielsweise empfängt Signaturserver eine entsprechende Eintragungsbestätigung und/oder eine Bestätigung, dass die Eintragung initiiert wurde, von dem Ausstellercomputersystem und überprüft die Eintragung des Hashwerts durch eine Abfrage der Blockchain. Diese Abfrage kann der Signaturserver nach Ausführungsformen selbst vornehmen, wenn er Zugriff auf die Blockchain besitzt, er kann die Abfrage über einen Blockchain-Server und/oder über einen Prüfcomputerserver vornehmen. Alternativ kann die Abfrage der Blockchain nach Ablauf eines vordefinierten Zeitintervalls erfolgen. Beispielsweise ist eine erfolgreiche Überprüfung der Eintragung des Hashwerts des digitalen Dokuments Voraussetzung für das Senden des digitalen Dokuments in Block 1010.

### Bezugszeichenliste

- 100: Blockchain-Server
- 102: Prozessor
- 104: Hashwert
- 106: Programminstruktionen
- 108: Speicher
- 110: Blockchain
- 112: Block
- 114: Eintrag
- 116: Block
- 118: Eintrag
- 119: Hash-Algorithmus
- 120: Kommunikationsschnittstelle
- 130: Blockchain-Server
- 132: Prozessor
- 138: Speicher
- 148: Smart Contract
- 150: Kommunikationsschnittstelle
- 160: Netzwerk
- 170: Blockchain-Netzwerk
- 172: Blockchain-Eintrag
- 174: Blockchain-Eintrag
- 176: Blockchain-Eintrag
- 178: Blockchain-Eintrag
- 200: Ausstellercomputersystem
- 202: Speicher
- 204: geschützter Speicherbereich
- 206: privater Schlüssel
- 207: symmetrischer Schlüssel
- 208: öffentlicher Schlüssel
- 209: Dokumentendaten
- 210: digitales Dokument
- 211: Zugriffscode
- 212: Prozessor
- 214: Programminstruktionen
- 216: Kommunikationsschnittstelle
- 220: Speichersystem
- 248: Datensatz
- 250: Signatur
- 252: Datensatz
- 254: Signatur
- 300: Signaturserver
- 302: Speicher
- 304: geschützter Speicherbereich
- 306: privater Schlüssel
- 308: PKI-Zertifikat
- 312: Prozessor
- 314: Programminstruktionen
- 316: Kommunikationsschnittstelle
- 400: Nutzercomputersystem
- 402: Speicher
- 412: Prozessor
- 414: Programminstruktionen
- 415: Browser
- 416: Kommunikationsschnittstelle
- 500: Verwaltungscomputersystem
- 502: Speicher
- 504: geschützter Speicherbereich
- 506: privater Schlüssel
- 508: öffentlicher Schlüssel
- 510: Ausstellerdaten
- 512: Prozessor
- 514: Programminstruktionen
- 516: Kommunikationsschnittstelle
- 600: Prüfserver
- 601: Webserver
- 602: Speicher
- 612: Prozessor
- 614: Programminstruktionen
- 616: Kommunikationsschnittstelle
- 700: Downloader
- 702: Speicher
- 712: Prozessor
- 714: Programminstruktionen
- 716: Kommunikationsschnittstelle

## Patentansprüche

1. Verfahren zum Ausstellen eines digitalen Dokuments (210) unter Verwendung eines Ausstellercomputersystems (200) eines Ausstellers des digitalen Dokuments (210) und eines zentralen Signaturservers (300) eines Signierers des digitalen Dokuments (210), wobei das Ausstellercomputersystem (200) eine Kommunikationsschnittstelle (216) zur Kommunikation über ein Netzwerk (160) und einen Speicher (202) umfasst, wobei in einem geschützten Speicherbereich (204) des Speichers (202) ein erster privater kryptographischer Schlüssel (206) eines ersten asymmetrischen Schlüsselpaars des Ausstellercomputersystems gespeichert ist, wobei der Signaturserver (300) als Signaturschlüssel über einen zweiten privaten kryptographischen Schlüssel (306) eines dem Signierer zugeordneten zweiten asymmetrischen Schlüsselpaars verfügt, wobei eine Authentizität des zweiten asymmetrischen Schlüsselpaars über eine PKI abgesichert ist,
wobei das digitale Dokument (210) unter Verwendung einer Blockchain (110) ausgestellt wird, wobei der Blockchain (110) ein Smart Contract (148) mit ersten Programminstruktionen zugeordnet ist, wobei durch Ausführen der ersten Programminstruktionen dem Smart Contract (148) zugeordnete Einträge in der Blockchain (110) erzeugt werden,
wobei das Verfahren zum Ausstellen des digitalen Dokuments (210) umfasst:
• Erstellen eines ersten Datensatzes (248) mit Dokumentendaten (209) für das digitale Dokument (210) in einem maschinenlesbaren Format durch das Ausstellercomputersystem (200),
• Senden des ersten Datensatzes (248) durch das Ausstellercomputersystem (200) unter Verwendung der Kommunikationsschnittstelle (216) über ein Netzwerk (160) an den Signaturserver (300),
• Empfangen eines ersten Hashwert (104) des digitalen Dokuments (210) von dem Signaturserver (300) über das Netzwerk (160) durch das Ausstellercomputersystem (200) unter Verwendung der Kommunikationsschnittstelle (216), wobei das digitale Dokument (210) den ersten Datensatz (248) umfasst, welcher mit einer ersten unter Verwendung des Signaturschlüssels erstellten Signatur (250) signiert ist, wobei das digitale Dokument (210) ferner einen zweiten Datensatz (252) mit den Dokumentendaten (209) in einem Format einer Seitenbeschreibungssprache umfasst, wobei der zweite Datensatz (252) mit einer zweiten unter Verwendung des Signaturschlüssels erstellten Signatur (254) signiert ist,
• Erstellen einer mit dem privaten kryptographischen Schlüssel (206) des Ausstellers signierten Eintragungsanfrage durch das Ausstellercomputersystem (200), wobei die Eintragungsanfrage den Smart Contract (148) identifiziert und den ersten Hashwert (104) des digitalen Dokuments (210) umfasst,
• Senden der signierten Eintragungsanfrage durch das Ausstellercomputersystem (200) unter Verwendung der Kommunikationsschnittstelle (216) über das Netzwerk (160) an einen ersten Blockchain-Server (100, 130) zum Eintragen des einen ersten Hashwerts (104) des digitalen Dokuments (210) in die Blockchain (110) unter Verwendung des Smart Contracts (148),
• auf das Eintragen des ersten Hashwerts (104) in die Blockchain hin, Empfangen des digitalen Dokuments (210) von dem Signaturserver (300) über das Netzwerk (160) durch das Ausstellercomputersystem (200) unter Verwendung der Kommunikationsschnittstelle (216).

2. Verfahren nach Anspruch 1, wobei der zweite Datensatz (252) von dem Ausstellercomputersystem (200) erstellt und zusammen mit dem ersten Datensatz (248) an den Signaturserver (300) gesendet wird oder
wobei es sich bei dem zweiten Datensatz (252) um einen von dem Signaturserver (300) unter Verwendung des von dem Ausstellercomputersystem (200) gesendeten ersten Datensatz (248) erstellten Datensatz handelt.

3. Verfahren nach einem der vorangehenden Ansprüche, wobei die zweite Signatur (254) den zweiten Datensatz (252) zusammen mit dem signierten ersten Datensatz (248) signiert und/oder
wobei es sich bei dem maschinenlesbaren Format um XML, JSON, Open Badge, oder Verifiable Credentials handelt und/oder
wobei es sich bei der Seitenbeschreibungssprache um eine der folgenden Sprachen handelt: PDF, PS, DVI und/oder
wobei es sich bei dem digitalen Dokument (210) um ein digitales Zeugnis handelt.

4. Verfahren nach einem der vorangehenden Ansprüche, wobei das Verfahren ferner umfasst:
• Bereitstellen einer Kopie des digitalen Dokuments (210) durch das Ausstellercomputersystem (200) zum Herunterladen von einem Downloadserver (700),
• Bereitstellen eines Zugriffscodes (211) für einen Nutzer, wobei der Zugriffscode (211) eine Berechtigung des Nutzers zum Herunterladen des digitalen Dokuments (210) nachweist.

5. Verfahren nach Anspruch 4, wobei dem Zugriffscode (211) eine Gültigkeitsperiode und/oder eine maximale Nutzungsanzahl als Berechtigungsnachweis des Nutzers zum Herunterladen des digitalen Dokuments (210) zugeordnet ist.

6. Verfahren nach einem der vorangehenden Ansprüche, wobei das Verfahren ferner umfasst:
• Verschlüsseln des digitalen Dokuments (210) unter Verwendung eines symmetrischen kryptographischen Schlüssels (207) durch das Ausstellercomputersystem (200),
• Speichern des verschlüsselten digitalen Dokuments (210) in einem permanenten Speicher (220).

7. Verfahren nach Anspruch 6, wobei das Verfahren ferner umfasst:
• Verschlüsseln des symmetrischen Schlüssels unter Verwendung des ersten öffentlichen Schlüssels (208) des ersten asymmetrischen Schlüsselpaares des Ausstellers,
• Speichern des mit dem ersten öffentlichen Schlüssel (208) verschlüsselten symmetrischen Schlüssels zusammen mit dem verschlüsselten digitalen Dokument (210) in dem permanenten Speicher (220) und/oder
• Verschlüsseln des symmetrischen Schlüssels unter Verwendung eines dritten öffentlichen Schlüssels (508) eines dritten asymmetrischen Schlüsselpaares einer Verwaltungsinstanz,
• Speichern des mit dem dritten öffentlichen Schlüssel (508) verschlüsselten symmetrischen Schlüssels zusammen mit dem verschlüsselten digitalen Dokument (210) in dem permanenten Speicher (220).

8. Verfahren nach einem der vorangehenden Ansprüche, wobei das Verfahren ferner umfasst:
• Empfangen der signierten Eintragungsanfrage durch den ersten Blockchain-Server (100, 130),
• Ausführen der ersten Programminstruktionen des durch die signierte Eintragungsanfrage identifizierten Smart Contracts (148) durch den ersten Blockchain-Server (100, 130), wobei das Ausführen der ersten Programminstruktionen ein Prüfen der Signatur der Eintragungsanfrage unter Verwendung eines ersten öffentlichen kryptographischen Schlüssels (208) des ersten asymmetrischen Schlüsselpaars des Ausstellercomputersystems und, im Falle einer gültigen Signatur, zum Ausstellen des digitalen Dokuments (210) ein Erzeugen eines zusätzlichen ersten Blocks (112) der Blockchain (110), wobei der erzeugte erste Block (112) einen ersten Eintrag (114) mit dem ersten Hashwert (104) umfasst.

9. Verfahren nach einem der vorangehenden Ansprüche, wobei das Verfahren ferner ein Autorisieren des Ausstellercomputersystems (200) zum Eintragen von Hashwerten digitaler Dokumente in die Blockchain (110) umfasst, wobei das Autorisieren umfasst:
• Erstellen einer Autorisierungsanfrage an eine autorisierende Verwaltungsinstanz durch das Ausstellercomputersystem (200), wobei die Autorisierungsanfrage den ersten öffentlichen kryptographischen Schlüssel (208) des Ausstellers umfasst,
• Senden der Autorisierungsanfrage durch das Ausstellercomputersystem (200) über das Netzwerk (160) an ein Verwaltungscomputersystem (500) der autorisierende Verwaltungsinstanz zum Erstellen einer Eintragungsanfrage durch das Verwaltungscomputersystem (500) an einen zweiten Blockchain-Server (100, 130) zur Eintragung einer Autorisierung des Ausstellers, wobei die Eintragungsanfrage den ersten öffentlichen kryptographischen Schlüssel (208) des Ausstellers umfasst und mit dem dritten privaten kryptographischen Schlüssel (506) des dritten asymmetrischen Schlüsselpaars des Verwaltungscomputersystems (500) signiert ist, und/oder
wobei das Verfahren ferner ein Autorisieren des Ausstellercomputersystems (200) zum Eintragen von Hashwerten digitaler Dokumente in die Blockchain (110) umfasst, wobei das Autorisieren umfasst:
• Erstellen einer Autorisierungsanfrage durch das Ausstellercomputersystem (200), wobei die Autorisierungsanfrage den Smart Contract (148) identifiziert und den ersten öffentlichen kryptographischen Schlüssel (208) des Ausstellers umfasst,
• Senden der Autorisierungsanfrage durch das Ausstellercomputersystem (200) über das Netzwerk (160) an einen zweiten Blockchain-Server (100, 130), wobei der zweite Blockchain-Server (100, 130) dazu konfiguriert ist, Blöcke der Blockchain (110) zu erzeugen,
• Empfangen der Autorisierungsanfrage durch den zweiten Blockchain-Server (100, 130),
• Ausführen zweiter Programminstruktionen des durch die Autorisierungsanfrage identifizierten Smart Contract (148) durch den zweiten Blockchain-Server (100, 130), wobei das Ausführen der zweiten Programminstruktionen ein Prüfen der Gültigkeit der Autorisierungsanfrage umfasst und, im Falle einer gültigen Autorisierungsanfrage, zum Autorisieren des ersten öffentlichen kryptographischen Schlüssels (208) des Ausstellers ein Erzeugen eines zweiten zusätzlichen Blocks der Blockchain (110) mit einer Autorisierungsbestätigung des Ausstellercomputersystems (200) umfasst.

10. Verfahren nach einem der vorangehenden Ansprüche, wobei ein Prüfen einer Authentizität des digitalen Dokuments (210) durch ein Prüfcomputersystems (600) umfasst:
• Berechnen des Hashwerts des empfangenen digitalen Dokuments (210) durch das Prüfcomputersystem (600),
• Abfrage der Blockchain (110) nach einem Eintrag mit dem errechneten Hashwert des empfangenen digitalen Dokuments (210) durch das Prüfcomputersystem (600), wobei eine Existenz eines Eintrags in der Blockchain (110) mit dem errechneten Hashwert des empfangenen digitalen Dokuments (210) eine Voraussetzung für eine Bestätigung der Authentizität des empfangenen digitalen Dokuments (210) durch das Prüfcomputersystem (600) ist, und/oder
wobei ein Prüfen der Authentizität des digitalen Dokuments (210) durch ein Prüfcomputersystems (600) umfasst:
• Prüfen der ersten und/oder zweiten Signatur (250, 254) des empfangenen digitalen Dokuments (210) unter Verwendung der PKI für das zweite asymmetrische Schlüsselpaar des Signaturservers (300), wobei eine erfolgreiche Prüfung der ersten und/oder zweiten Signatur (250, 254) eine Voraussetzung für eine Bestätigung der Authentizität des empfangenen digitalen Dokuments (210) durch das Prüfcomputersystem (600) ist,
wobei das Verfahren beispielsweise ferner umfasst:
im Falle eines Erfüllens aller Voraussetzung für eine Bestätigung der Authentizität des empfangenen digitalen Dokuments (210), Bestätigen der Authentizität des empfangenen digitalen Dokuments (210) durch das Prüfcomputersystem (600).

11. Ausstellercomputersystem (200) zum Ausstellen eines digitalen Dokuments (210), wobei das Ausstellercomputersystem (200) einen Prozessor (212), eine Kommunikationsschnittstelle (216) zur Kommunikation über ein Netzwerk (160) und einen Speicher (202) umfasst, wobei in dem Speicher (202) Programminstruktionen (214) des Ausstellercomputersystems (200) gespeichert sind, wobei in einem geschützten Speicherbereich (204) des Speichers (202) ein erster privater kryptographischer Schlüssel (206) eines ersten asymmetrischen Schlüsselpaars des Ausstellercomputersystems gespeichert ist,
wobei das digitale Dokument (210) unter Verwendung einer Blockchain (110) ausgestellt wird, wobei der Blockchain (110) ein Smart Contract (148) mit ersten Programminstruktionen zugeordnet ist, wobei durch Ausführen der ersten Programminstruktionen dem Smart Contract (148) zugeordnete Einträge in der Blockchain (110) erzeugt werden,
wobei ein Ausführen der Programminstruktionen (214) des Ausstellercomputersystems (200) durch den Prozessor (212) das Ausstellercomputersystem (200) steuert ein Verfahren zum Ausstellen des digitalen Dokuments (210) auszuführen, welches umfasst:
• Erstellen eines ersten Datensatzes (248) mit Dokumentendaten (209) für das digitale Dokument (210) in einem maschinenlesbaren Format durch das Ausstellercomputersystem (200),
• Senden des ersten Datensatzes (248) durch das Ausstellercomputersystem (200) unter Verwendung der Kommunikationsschnittstelle (216) über ein Netzwerk (160) an einen zentralen Signaturserver (300) eines Signierers des digitalen Dokuments (210),
• Empfangen eines ersten Hashwert (104) des digitalen Dokuments (210) von dem Signaturserver (300) über das Netzwerk (160) durch das Ausstellercomputersystem (200) unter Verwendung der Kommunikationsschnittstelle (216), wobei das digitale Dokument (210) den ersten Datensatz (248) umfasst, welcher mit einer ersten unter Verwendung eines über eine PKI abgesicherten Signaturschlüssels des Signaturservers (300) erstellten Signatur (250) signiert ist, wobei das digitale Dokument (210) ferner einen zweiten Datensatz (252) mit den Dokumentendaten (209) in einem Format einer Seitenbeschreibungssprache umfasst, wobei der zweite Datensatz (252) mit einer zweiten unter Verwendung des Signaturschlüssels erstellten Signatur (254) signiert ist,
• Erstellen einer mit dem privaten kryptographischen Schlüssel (206) des Ausstellers signierten Eintragungsanfrage durch das Ausstellercomputersystem (200), wobei die Eintragungsanfrage den Smart Contract (148) identifiziert und den ersten Hashwert (104) des digitalen Dokuments (210) umfasst,
• Senden der signierten Eintragungsanfrage durch das Ausstellercomputersystem (200) unter Verwendung der Kommunikationsschnittstelle (216) über das Netzwerk (160) an einen ersten Blockchain-Server (100, 130) zum Eintragen des einen ersten Hashwerts (104) des digitalen Dokuments (210) in die Blockchain (110) unter Verwendung des Smart Contracts (148),
• auf das Eintragen des ersten Hashwerts (104) in die Blockchain hin, Empfangen des digitalen Dokuments (210) von dem Signaturserver (300) über das Netzwerk (160) durch das Ausstellercomputersystem (200) unter Verwendung der Kommunikationsschnittstelle (216).

12. Signaturserver (300) zum Signieren eines digitalen Dokuments (210), wobei der Signaturserver (300) einen Prozessor (312), eine Kommunikationsschnittstelle (316) zur Kommunikation über ein Netzwerk (160) und einen Speicher (302) umfasst, wobei in dem Speicher (302) Programminstruktionen (314) des Signaturservers (300) gespeichert sind, wobei in einem geschützten Speicherbereich (304) des Speichers (302) als Signaturschlüssel ein zweiter privater kryptographischer Schlüssel (206) eines zweiten asymmetrischen Schlüsselpaars des Signaturserver (300) gespeichert ist,
wobei ein Ausführen der Programminstruktionen (314) des Signaturservers (300) durch den Prozessor (312) den Signaturserver (300) steuert ein Verfahren auszuführen, welches umfasst:
• Empfangen eines ersten Datensatzes (248) mit Dokumentendaten (209) für das digitale Dokument (210) in einem maschinenlesbaren Format durch den Signaturserver (300) unter Verwendung der Kommunikationsschnittstelle (316) über ein Netzwerk (160) von einem Ausstellercomputersystem (200) eines Ausstellers des digitalen Dokuments (210),
• Erstellen einer ersten und einer zweiten Signatur des digitalen Dokuments (210) durch den Signaturserver (300) unter Verwendung des über die PKI abgesicherten Signaturschlüssels, wobei der erste Datensatz (248) des digitalen Dokuments (210) mit der ersten Signatur (250) signiert wird, wobei ein zweiter Datensatz (252) des digitalen Dokuments (210) mit den Dokumentendaten (209) in einem Format einer Seitenbeschreibungssprache das digitale Dokument (210) mit der zweiten Signatur (254) signiert wird,
• Berechnen eines ersten Hashwerts (104) des digitalen Dokuments (210),
• Senden des ersten Hashwerts (104) durch den Signaturserver (300) unter Verwendung der Kommunikationsschnittstelle (316) über das Netzwerk (160) an das Ausstellercomputersystem (200) zur Eintragung in die Blockchain,
• auf das Eintragen des ersten Hashwerts (104) in die Blockchain hin, Senden des digitalen Dokuments (210) durch den Signaturserver (300) unter Verwendung der Kommunikationsschnittstelle (316) über das Netzwerk (160) an das Ausstellercomputersystem (200).

13. Signaturserver nach Anspruch 12, wobei der Signaturserver (300) dazu konfiguriert ist, den zweiten Datensatz (252) zusammen mit dem ersten Datensatz (248) von dem Ausstellercomputersystem (200) zu empfangen oder wobei ein Ausführen der Programminstruktionen (314) des Signaturservers (300) durch den Prozessor (312) den Signaturserver (300) ferner zum Erstellen des zweiten Datensatzes (252) unter Verwendung des empfangenen ersten Datensatzes (248) steuert und/oder
wobei die zweite Signatur (254) den zweiten Datensatz (252) zusammen mit dem signierten ersten Datensatz (248) signiert.

14. System zum Ausstellen eines digitalen Dokuments (210), wobei das System ein Ausstellercomputersystem (200) nach Anspruch 11, welches zum Ausführen der Verfahrensschritte des Ausstellercomputersystems (200) nach einem der Ansprüche 1 bis 10 konfiguriert ist, und einen Signaturserver (300) nach einem der Ansprüche 12 bis 13 umfasst, welcher zum Ausführen der Verfahrensschritte des Signaturservers (300) nach einem der Ansprüche 1 bis 10 konfiguriert ist.

15. System nach Anspruch 14, welches ferner ein oder mehrere Blockchain-Server (100, 130) umfasst, welche zum Ausführen der Verfahrensschritte der ein oder mehreren Blockchain-Server (100, 130) nach einem der Ansprüche 1 bis 10 konfiguriert sind, und/oder
welches ferner ein einer autorisierenden Verwaltungsinstanz zugeordnetes Verwaltungscomputersystem (500) umfasst, welches zum Ausführen der Verfahrensschritte des Verwaltungscomputersystems (500) nach Anspruch 7 konfiguriert ist, und/oder
welches ferner ein Prüfcomputersystem (600) umfasst, welches zum Ausführen der Verfahrensschritte nach Anspruch 10 konfiguriert ist.

## Claims

1. A method for issuing a digital document (210) using an issuer computer system (200) of an issuer of the digital document (210) and a central signature server (300) of a signatory of the digital document (210), wherein the issuer computer system (200) comprises a communication interface (216) for communication via a network (160) and a memory (202), wherein a first private cryptographic key (206) of a first asymmetric key pair of the issuer computer system is stored in a protected memory region (204) of the memory (202), wherein the signature server (300) has, as signature key, a second private cryptographic key (306) of a second asymmetric key pair assigned to the signatory, wherein the authenticity of the second asymmetric key pair is secured via a PKI,
wherein the digital document (210) is issued using a blockchain (110), wherein the blockchain (110) is associated with a smart contract (148) with first program instructions, wherein entries associated with the smart contract (148) are generated in the blockchain (110) by executing the first program instructions,
wherein the method for issuing the digital document (210) comprises:
• creating a first data record (248) containing document data (209) for the digital document (210) in a machine-readable format by the issuer computer system (200),
• sending the first data record (248) by the issuer computer system (200) using the communication interface (216) via a network (160) to the signature server (300),
• receiving a first hash value (104) of the digital document (210) from the signature server (300) via the network (160) by the issuer computer system (200) using the communication interface (216), wherein the digital document (210) comprises the first data record (248), which is signed with a first signature (250) created using the signature key, wherein the digital document (210) further comprises a second data record (252) containing the document data (209) in a format of a page description language, wherein the second data record (252) is signed with a second signature (254) created using the signature key,
• creating an entry request, signed with the private cryptographic key (206) of the issuer, by the issuer computer system (200), wherein the entry request identifies the smart contract (148) and comprises the first hash value (104) of the digital document (210),
• sending the signed entry request by the issuer computer system (200), using the communication interface (216), via the network (160) to a first blockchain server (100, 130) to enter the one first hash value (104) of the digital document (210) into the blockchain (110) using the smart contract (148),
• upon entry of the first hash value (104) into the blockchain, receiving the digital document (210) from the signature server (300) via the network (160) by the issuer computer system (200) using the communication interface (216).

2. The method according to claim 1, wherein the second data record (252) is created by the issuer computer system (200) and is sent together with the first data record (248) to the signature server (300), or
wherein the second data record (252) is a data record created by the signature server (300) using the first data record (248) sent from the issuer computer system (200).

3. The method according to any one of the preceding claims, wherein the second signature (254) signs the second data record (252) together with the signed first data record (248), and/or
wherein the machine-readable format is XML, JSON, Open Badge, or Verifiable Credentials, and/or
wherein the page description language is one of the following languages: PDF, PS, DVI, and/or
wherein the digital document (210) is a digital certificate.

4. The method according to any one of the preceding claims, wherein the method further comprises:
• providing a copy of the digital document (210) by the issuer computer system (200) for download from a download server (700),
• providing an access code (211) for a user, wherein the access code (211) proves the authorisation of the user to download the digital document (210).

5. The method according to claim 4, wherein a validity period and/or a maximum number of uses is assigned to the access code (211) as proof of authorisation of the user to download the digital document (210).

6. The method according to any one of the preceding claims, wherein the method further comprises:
• encrypting the digital document (210) using a symmetric cryptographic key (207) by the issuer computer system (200),
• storing the encrypted digital document (210) in a permanent memory (220).

7. The method according to claim 6, wherein the method further comprises:
• encrypting the symmetric key using the first public key (208) of the first asymmetric key pair of the issuer,
• storing the symmetric key that is encrypted with the first public key (208) together with the encrypted digital document (210) in the permanent memory (220) and/or
• encrypting the symmetric key using a third public key (508) of a third asymmetric key pair of a management entity,
• storing the symmetric key that is encrypted with the third public key (508) together with the encrypted digital document (210) in the permanent memory (220).

8. The method according to any one of the preceding claims, wherein the method further comprises:
• receiving the signed entry request by the first blockchain server (100, 130),
• executing, by the first blockchain server (100, 130), the first program instructions of the smart contract (148) identified by the signed entry request, wherein the execution of the first program instructions comprises a verification of the signature of the entry request using a first public cryptographic key (208) of the first asymmetric key pair of the issuer computer system and, in the event of a valid signature, to issue the digital document (210), a generation of an additional first block (112) of the blockchain (110), wherein the generated first block (112) comprises a first entry (114) with the first hash value (104).

9. The method according to any one of the preceding claims, wherein the method further comprises an authorisation of the issuer computer system (200) to enter hash values of digital documents into the blockchain (110), wherein the authorisation comprises:
• creating an authorisation request to an authorising managing entity by the issuer computer system (200), wherein the authorisation request comprises the first public cryptographic key (208) of the issuer,
• sending the authorisation request by the issuer computer system (200) via the network (160) to a management computer system (500) of the authorising management entity to create an entry request by the management computer system (500) to a second blockchain server (100, 130) for entry of an authorisation of the issuer, wherein the entry request comprises the first public cryptographic key (208) of the issuer and is signed with the third private cryptographic key (506) of the third asymmetric key pair of the management computer system (500), and/or
wherein the method further comprises an authorisation of the issuer computer system (200) for entry of hash values of digital documents into the blockchain (110), wherein the authorisation comprises:
• creating an authorisation request by the issuer computer system (200), wherein the authorisation request identifies the smart contract (148) and the first public cryptographic key (208) of the issuer,
• sending the authorisation request by the issuer computer system (200) via the network (160) to a second blockchain server (100, 130), wherein the second blockchain server (100, 130) is configured to generate blocks of the blockchain (110),
• receiving the authorisation request by the second blockchain server (100, 130),
• executing, by the second blockchain server (100, 130), second program instructions of the smart contract (148) identified by the authorisation request, wherein the execution of the second program instructions comprises a verification of the validity of the authorisation request and, in the event of a valid authorisation request, in order to authorise the first public cryptographic key (208) of the issuer, comprises a generation of a second additional block of the blockchain (110) with an authorisation confirmation of the issuer computer system (200).

10. The method according to any one of the preceding claims, wherein a verification of the authenticity of the digital document (210) by a verifying computer system (600) comprises:
• calculating the hash value of the received digital document (210) by the verifying computer system (600),
• querying the blockchain (110) following an entry with the calculated hash value of the received digital document (210) by the verifying computer system (600), wherein an existence of an entry in the blockchain (110) with the calculated hash value of the received digital document (210) is a prerequisite for confirmation of the authenticity of the received digital document (210) by the verifying computer system (600), and/or
wherein a verification of the authenticity of the digital document (210) by a verifying computer system (600) comprises:
• verifying the first and/or second signature (250, 254) of the received digital document (210) using the PKI for the second asymmetric key pair of the signature server (300), wherein a successful verification of the first and/or second signature (250, 254) is a prerequisite for confirmation of the authenticity of the received digital document (210) by the verifying computer system (600),
wherein the method, for example, further comprises:
in the event that all prerequisites for confirmation of the authenticity of the received digital document (210) are satisfied, confirming the authenticity of the received digital document (210) by the verifying computer system (600).

11. An issuer computer system (200) for issuing a digital document (210), wherein the issuer computer system (200) comprises a processor (212), a communication interface (216) for communication via a network (160), and a memory (202), wherein program instructions (214) of the issuer computer system (200) are stored in the memory (202), wherein a first private cryptographic key (206) of a first asymmetric key pair of the issuer computer system is stored in a protected memory region (204) of the memory (202),
wherein the digital document (210) is issued using a blockchain (110), wherein the blockchain (110) is associated with a smart contract (148) with first program instructions, wherein entries associated with the smart contract (148) are generated in the blockchain (110) by executing the first program instructions,
wherein execution of the program instructions (214) of the issuer computer system (200) by the processor (212) controls the issuer computer system (200) to execute a method for issuing the digital document (210), which method comprises:
• creating a first data record (248) containing document data (209) for the digital document (210) in a machine-readable format by the issuer computer system (200),
• sending the first data record (248) by the issuer computer system (200) using the communication interface (216) via a network (160) to a central signature server (300) of a signatory of the digital document (210),
• receiving a first hash value (104) of the digital document (210) from the signature server (300) via the network (160) by the issuer computer system (200) using the communication interface (216), wherein the digital document (210) comprises the first data record (248), which is signed with a first signature (250) created using a signature key of the signature server (300), which signature key is secured via a PKI, wherein the digital document (210) further comprises a second data record (252) containing the document data (209) in a format of a page description language, wherein the second data record (252) is signed with a second signature (254) created using the signature key,
• creating an entry request, signed with the private cryptographic key (206) of the issuer, by the issuer computer system (200), wherein the entry request identifies the smart contract (148) and comprises the first hash value (104) of the digital document (210),
• sending the signed entry request by the issuer computer system (200), using the communication interface (216), via the network (160) to a first blockchain server (100, 130) to enter the one first hash value (104) of the digital document (210) into the blockchain (110) using the smart contract (148),
• upon entry of the first hash value (104) into the blockchain, receiving the digital document (210) from the signature server (300) via the network (160) by the issuer computer system (200) using the communication interface (216).

12. A signature server (300) for signing a digital document (210), wherein the signature server (300) comprises a processor (312), a communication interface (316) for communication via a network (160), and a memory (302), wherein program instructions (314) of the signature server (300) are stored in the memory (302), wherein a second private cryptographic key (206) of a second asymmetric key pair of the signature server (300) is stored as signature key in a protected memory region (304) of the memory (302),
wherein execution of the program instructions (314) of the signature server (300) by the processor (312) controls the signature server (300) to execute a method, which method comprises:
• receiving a first data record (248) containing document data (209) for the digital document (210) in a machine-readable format by the signature server (300) using the communication interface (316) via a network (160) from an issuer computer system (200) of an issuer of the digital document (210),
• creating a first and a second signature of the digital document (210) by the signature server (300) using the signature key secured via the PKI, wherein the first data record (248) of the digital document (210) is signed with the first signature (250), wherein a second data record (252) of the digital document (210) containing the document data (209) in a format of a page description language the digital document (210) is signed with the second signature (254),
• calculating a first hash value (104) of the digital document (210),
• sending the first hash value (104) by the signature server (300) using the communication interface (316) via the network (160) to the issuer computer system (200) for entry into the blockchain,
• upon entry of the first hash value (104) into the blockchain, sending the digital document (210) by the signature server (300) using the communication interface (316) via the network (160) to the issuer computer system (200).

13. The signature server according to claim 12, wherein the signature server (300) is configured to receive the second data record (252) together with the first data record (248) from the issuer computer system (200), or wherein execution of the program instructions (314) of the signature server (300) by the processor (312) further controls the signature server (300) to create the second data record (252) using the received first data record (248), and/or
wherein the second signature (254) signs the second data record (252) together with the signed first data record (248).

14. A system for issuing a digital document (210), wherein the system comprises an issuer computer system (200) according to claim 11, which is configured to carry out the method steps of the issuer computer system (200) according to any one of claims 1 to 10, and comprises a signature server (300) according to any one of claims 12 to 13, which is configured to carry out the method steps of the signature server (300) according to any one of claims 1 to 10.

15. The system according to claim 14, which further comprises one or more blockchain servers (100, 130), which are configured to carry out the method steps of the one or more blockchain servers (100, 130) according to any one of claims 1 to 10, and/or
which further comprises a management computer system (500), which is associated with an authorising management entity and which is configured to carry out the method steps of the management computer system (500) according to claim 7, and/or
which further comprises a verifying computer system (600), which is configured to carry out the method steps according to claim 10.

## Revendications

1. Procédé d'émission d'un document numérique (210) moyennant l'emploi d'un système informatique d'émission (200) d'un émetteur du document numérique (210) et d'un serveur de signature (300) central d'un signataire du document numérique (210), dans lequel le système informatique d'émission (200) comprend une interface de communication (216) permettant la communication par le biais d'un réseau (160) et une mémoire (202), où une première clé cryptographique privée (206) d'une première paire de clés asymétrique du système informatique d'émission est enregistrée dans une zone de mémoire sécurisée (204) de la mémoire (202), où le serveur de signature (300) dispose en tant que clé de signature d'une deuxième clé cryptographique privée (306) d'une deuxième paire de clés asymétrique associée au signataire, où une authenticité de la deuxième paire de clés asymétrique est sécurisée par une infrastructure à clés publiques PKI,
dans lequel le document numérique (210) est émis moyennant l'emploi d'une chaine de blocs (110), où un contrat intelligent Smart Contract (148) avec des premières instructions de programme est associé à la chaine de blocs (110), où, par l'exécution des premières instructions de programme, des entrées associées au Smart Contract (148) sont créées dans la chaine de blocs (110),
le procédé comprenant, pour l'émission du document numérique (210) :
• l'établissement d'un premier ensemble de données (248) avec des données de document (209) pour le document numérique (210) dans un format lisible par machine, par le système informatique d'émission (200),
• l'envoi du premier ensemble de données (248) au serveur de signature (300), par le système informatique d'émission (200), moyennant l'emploi de l'interface de communication (216) par le biais d'un réseau (160),
• la réception d'une première valeur de hachage (104) du document numérique (210) à partir du serveur de signature (300) par le biais du réseau (160), par le système informatique d'émission (200), moyennant l'emploi de l'interface de communication (216), où le document numérique (210) comprend le premier ensemble de données (248), lequel est signé avec une première signature (250) établie moyennant l'emploi de la clé de signature, où le document numérique (210) comprend en outre un deuxième ensemble de données (252) avec les données de document (209) dans un format de langage de description de pages, où le deuxième ensemble de données (252) est signé avec une deuxième signature (254) établie moyennant l'emploi de la clé de signature,
• l'établissement d'une demande d'enregistrement signée avec la clé cryptographique privée (206) de l'émetteur par le système informatique d'émission (200), où la demande d'enregistrement identifie le Smart Contract (148) et comprend la première valeur de hachage (104) du document numérique (210),
• l'envoi de la demande d'enregistrement signée par le système informatique d'émission (200) moyennant l'emploi de l'interface de communication (216) par le biais du réseau (160) à un premier serveur de chaine de blocs (100, 130) pour l'enregistrement de la première valeur de hachage (104) du document numérique (210) dans la chaine de blocs (110) moyennant l'emploi du Smart Contract (148),
• suite à l'enregistrement de la première valeur de hachage (104) dans la chaine de blocs, la réception du document numérique (210) à partir du serveur de signature (300) par le biais du réseau (160) par le système informatique d'émission (200) moyennant l'emploi de l'interface de communication (216).

2. Procédé selon la revendication 1, dans lequel le deuxième ensemble de données (252) est établi par le système informatique d'émission (200) et est envoyé conjointement avec le premier ensemble de données (248) au serveur de signature (300), ou
dans lequel, dans le cas du deuxième ensemble de données (252), il s'agit d'un ensemble de données établi par le serveur de signature (300) moyennant l'emploi du premier ensemble de données (248) envoyé à partir du système informatique d'émission (200).

3. Procédé selon l'une des revendications précédentes, dans lequel la deuxième signature (254) signe le deuxième ensemble de données (252) conjointement avec le premier ensemble de données (248) signé, et/ou
dans lequel, dans le cas du format lisible par machine, il s'agit de XML, JSON, Open Badge ou Verifiable Credentials, et/ou
dans lequel, dans le cas du langage de description de pages, il s'agit d'un des langages suivants : PDF, PS, DVI, et/ou
dans le cas du document numérique (210), il s'agit d'un certificat numérique.

4. Procédé selon l'une des revendications précédentes, le procédé comprenant en outre :
• la fourniture d'une copie du document numérique (210) par le système informatique d'émission (200) à télécharger par un serveur de téléchargement (700),
• la fourniture d'un code d'accès (211) pour un utilisateur, où le code d'accès (211) justifie une autorisation de l'utilisateur pour le téléchargement du document numérique (210).

5. Procédé selon la revendication 4, dans lequel une période de validité et/ou un nombre d'utilisation maximal sont associés au code d'accès (211) en tant que justificatif d'autorisation de l'utilisateur pour le téléchargement du document numérique (210).

6. Procédé selon l'une des revendications précédentes, le procédé comprenant en outre :
• le chiffrement du document numérique (210) moyennant l'emploi d'une clé cryptographique symétrique (207) par le système informatique d'émission (200),
• l'enregistrement du document numérique (210) chiffré dans une mémoire (220) permanente.

7. Procédé selon la revendication 6, le procédé comprenant en outre :
• le chiffrement de la clé symétrique moyennant l'emploi de la première clé publique (208) de la première paire de clés asymétrique de l'émetteur,
• l'enregistrement de la clé symétrique chiffrée avec la première clé publique (208) conjointement avec le document numérique (210) chiffré dans la mémoire (220) permanente, et/ou
• le chiffrement de la clé symétrique moyennant l'emploi d'une troisième clé publique (508) d'une troisième paire de clés asymétrique d'une instance de gestion,
• l'enregistrement de la clé symétrique chiffrée avec la troisième clé publique (508) conjointement avec le document numérique (210) chiffré dans la mémoire (220) permanente.

8. Procédé selon l'une des revendications précédentes, le procédé comprenant en outre :
• la réception de la demande d'enregistrement signée par le premier serveur de chaine de blocs (100, 130),
• l'exécution des premières instructions de programme du Smart Contract (148) identifié par la demande d'enregistrement signée par le premier serveur de chaine de blocs (100, 130), où l'exécution des premières instructions de programme comprend une vérification de la signature de la demande d'enregistrement moyennant l'emploi d'une première clé cryptographique publique (208) de la première paire de clés asymétrique du système informatique d'émission, et, dans le cas d'une signature valide, pour l'émission du document numérique (210), une création d'un premier bloc (112) supplémentaire de la chaine de blocs (110), où le premier bloc (112) créé comprend une première entrée (114) avec la première valeur de hachage (104).

9. Procédé selon l'une des revendications précédentes, le procédé comprenant en outre une autorisation du système informatique d'émission (200) pour l'entrée de valeurs de hachage de documents numériques dans la chaine de blocs (110), où l'autorisation comprend :
• l'établissement d'une demande d'autorisation à une instance de gestion donnant l'autorisation par le système informatique d'émission (200), où la demande d'autorisation comprend la première clé cryptographique publique (208) de l'émetteur,
• l'envoi de la demande d'autorisation par le système informatique d'émission (200) par le biais du réseau (160) à un système informatique de gestion (500) de l'instance de gestion donnant l'autorisation pour l'établissement d'une demande d'enregistrement par le système informatique de gestion (500) à un deuxième serveur de chaine de blocs (100, 130) pour l'enregistrement d'une autorisation de l'émetteur, où la demande d'enregistrement comprend la première clé cryptographique publique (208) de l'émetteur et est signée avec la troisième clé cryptographique privée (506) de la troisième paire de clés asymétrique du système informatique de gestion (500), et/ou
le procédé comprenant en outre une autorisation du système informatique d'émission (200) pour l'entrée de valeurs de hachage de documents numériques dans la chaine de blocs (110), où l'autorisation comprend :
• l'établissement d'une demande d'autorisation par le système informatique d'émission (200), où la demande d'autorisation identifie le Smart Contract (148) et comprend la première clé cryptographique publique (208) de l'émetteur,
• l'envoi d'une demande d'autorisation par le système informatique d'émission (200) par le biais du réseau (160) à un deuxième serveur de chaine de blocs (100, 130), où le deuxième serveur de chaine de blocs (100, 130) est conçu pour créer des blocs de la chaine de blocs (110),
• la réception de la demande d'autorisation par le deuxième serveur de chaine de blocs (100, 130),
• l'exécution de deuxièmes instructions de programme du Smart Contract (148) identifié par la demande d'autorisation par le deuxième serveur de chaine de blocs (100, 130), où l'exécution des deuxièmes instructions de programme comprend une vérification de la validité de la demande d'autorisation, et, dans le cas d'une demande d'autorisation valide, pour l'autorisation de la première clé cryptographique publique (208) de l'émetteur, comprend une création d'un deuxième bloc supplémentaire de la chaine de blocs (110), avec une confirmation d'autorisation du système informatique d'émission (200).

10. Procédé selon l'une des revendications précédentes, dans lequel une vérification d'une authenticité du document numérique (210) par un système informatique de vérification (600) comprend :
• le calcul d'une valeur de hachage du document numérique (210) réceptionné par le système informatique de vérification (600),
• l'interrogation de la chaine de blocs (110) au sujet d'une entrée avec la valeur de hachage calculée du document numérique (210) réceptionné par le système informatique de vérification (600), où l'existence d'une entrée dans la chaine de blocs (110) avec une valeur de hachage calculée du document numérique (210) réceptionné est une condition préalable pour une confirmation de l'authenticité du document numérique (210) réceptionné par le système informatique de vérification (600), et/ou
dans lequel une vérification de l'authenticité du document numérique (210) par un système informatique de vérification (600) comprend :
• la vérification de la première et/ou de la deuxième signature (250, 254) du document numérique (210) réceptionné moyennant l'emploi de la PKI pour la deuxième paire de clés asymétrique du serveur de signature (300), où une vérification réussie de la première et/ou de la deuxième signature (250, 254) est une condition préalable pour une confirmation de l'authenticité du document numérique (210) réceptionné par le système informatique de vérification (600),
le procédé comprenant en outre, par exemple :
dans le cas d'une satisfaction à toutes les conditions préalables pour une confirmation de l'authenticité du document numérique (210) réceptionné, la confirmation de l'authenticité du document numérique (210) réceptionné par le système informatique de vérification (600).

11. Système informatique d'émission (200) permettant l'émission d'un document numérique (210), le système informatique d'émission (200) comprenant un processeur (212), une interface de communication (216) permettant la communication par le biais d'un réseau (160), et une mémoire (202), où des instructions de programme (214) du système informatique d'émission (200) sont enregistrées dans la mémoire (202), où une première clé cryptographique privée (206) d'une première paire de clés asymétrique du système informatique d'émission est enregistrée dans une zone de mémoire sécurisée (204) de la mémoire (202),
dans lequel le document numérique (210) est émis moyennant l'emploi d'une chaine de blocs (110), où un Smart Contract (148) avec des premières instructions de programme est associé à la chaine de blocs (110), où, par l'exécution des premières instructions de programme, des entrées associées au Smart Contract (148) sont créées dans la chaine de blocs (110),
dans lequel une exécution des instructions de programme (214) du système informatique d'émission (200) par le processeur (212) commande au système informatique d'émission (200) d'exécuter un procédé d'émission du document numérique (210), lequel comprend :
• l'établissement d'un premier ensemble de données (248) avec des données de document (209) pour le document numérique (210) dans un format lisible par machine, par le système informatique d'émission (200),
• l'envoi du premier ensemble de données (248) à un serveur de signature (300) central d'un signataire du document numérique (210), par le système informatique d'émission (200), moyennant l'emploi de l'interface de communication (216), par le biais d'un réseau (160),
• la réception d'une première valeur de hachage (104) du document numérique (210) à partir du serveur de signature (300) par le biais du réseau (160), par le système informatique d'émission (200), moyennant l'emploi de l'interface de communication (216), où le document numérique (210) comprend le premier ensemble de données (248), lequel est signé avec une première signature (250) établie moyennant l'emploi d'une clé de signature sécurisée par une PKI du serveur de signature (300), où le document numérique (210) comprend en outre un deuxième ensemble de données (252) avec les données de document (209) dans un format de langage de description de pages, où le deuxième ensemble de données (252) est signé avec une deuxième signature (254) établie moyennant l'emploi de la clé de signature,
• l'établissement d'une demande d'enregistrement signée avec la clé cryptographique privée (206) de l'émetteur par le système informatique d'émission (200), où la demande d'enregistrement identifie le Smart Contract (148) et comprend la première valeur de hachage (104) du document numérique (210),
• l'envoi de la demande d'enregistrement signée par le système informatique d'émission (200) moyennant l'emploi de l'interface de communication (216), par le biais du réseau (160), à un premier serveur de chaine de blocs (100, 130) pour l'enregistrement de la première valeur de hachage (104) du document numérique (210) dans la chaine de blocs (110) moyennant l'emploi du Smart Contract (148),
• suite à l'enregistrement de la première valeur de hachage (104) dans la chaine de blocs, la réception du document numérique (210) à partir du serveur de signature (300), par le biais du réseau (160), par le système informatique d'émission (200) moyennant l'emploi de l'interface de communication (216).

12. Serveur de signature (300) permettant la signature d'un document numérique (210), le serveur de signature (300) comprenant un processeur (312), une interface de communication (316) permettant la communication par le biais d'un réseau (160), et une mémoire (302), où des instructions de programme (314) du serveur de signature (300) sont enregistrées dans la mémoire (302), où, en tant que clé de signature, une deuxième clé cryptographique privée (206) d'une deuxième paire de clés asymétrique du serveur de signature (300) est enregistrée dans une zone de mémoire sécurisée (304) de la mémoire (302),
dans lequel une exécution des instructions de programme (314) du serveur de signature (300) par le processeur (312) commande au serveur de signature (300) d'exécuter un procédé, lequel comprend :
• la réception d'un premier ensemble de données (248) avec des données de document (209) pour le document numérique (210) dans un format lisible par machine par le serveur de signature (300) moyennant l'emploi de l'interface de communication (316), par le biais d'un réseau (160), à partir d'un système informatique d'émission (200) d'un émetteur du document numérique (210),
• l'établissement d'une première et d'une deuxième signature du document numérique (210) par le serveur de signature (300) moyennant l'emploi de la clé de signature sécurisée par la PKI, où le premier ensemble de données (248) du document numérique (210) est signé avec la première signature (250), où un deuxième ensemble de données (252) du document numérique (210), avec les données de document (209) dans un format dans un langage de description de pages, le document numérique (210) est signé avec la deuxième signature (254),
• le calcul d'une première valeur de hachage (104) du document numérique (210),
• l'envoi de la première valeur de hachage (104) au système informatique d'émission (200) pour l'entrée dans la chaine de blocs par le serveur de signature (300) moyennant l'emploi de l'interface de communication (316), par le biais du réseau (160),
• suite à l'entrée de la première valeur de hachage (104) dans la chaine de blocs, l'envoi du document numérique (210) au système informatique d'émission (200) par le serveur de signature (300) moyennant l'emploi de l'interface de communication (316), par le biais du réseau (160).

13. Serveur de signature selon la revendication 12, le serveur de signature (300) étant conçu pour réceptionner le deuxième ensemble de données (252) conjointement avec le premier ensemble de données (248) à partir du système informatique d'émission (200) ou dans lequel une exécution des instructions de programme (314) du serveur de signature (300) par le processeur (312) commande en outre le serveur de signature (300) pour qu'il établisse le deuxième ensemble de données (252) moyennant l'emploi du premier ensemble de données (248) réceptionné, et/ou
dans lequel la deuxième signature (254) signe le deuxième ensemble de données (252) conjointement avec le premier ensemble de données (248) signé.

14. Système d'émission d'un document numérique (210), le système comprenant un système informatique d'émission (200) selon la revendication 11, lequel est conçu pour l'exécution des étapes de procédé du système informatique d'émission (200) selon l'une des revendications 1 à 10, et un serveur de signature (300) selon l'une des revendications 12 à 13, lequel est conçu pour l'exécution des étapes de procédé du serveur de signature (300) selon l'une des revendications 1 à 10.

15. Système selon la revendication 14, lequel comprend en outre un ou plusieurs serveurs de chaine de blocs (100, 130), lesquels sont conçus pour l'exécution des étapes de procédé du ou des serveurs de chaine de blocs (100, 130) selon l'une des revendications 1 à 10, et/ou
lequel, en outre, comprend un système informatique de gestion (500) associé à une instance de gestion donnant des autorisations, lequel est conçu pour l'exécution des étapes de procédé du système informatique de gestion (500) selon la revendication 7, et/ou
lequel comprend en outre un système informatique de vérification (600), lequel est conçu pour l'exécution des étapes de procédé selon la revendication 10.
